# EUROPEAN PATENT APPLICATION

(11) **EP 1 944 440 A2**
(43) Date of publication of application: **16.07.2008**
(21) Application number: 07380340.5
(22) Date of filing: 05.12.2007
(51) Int. Cl.: E05B 73/00, E05B 67/00

(54) **Device to immobilise vehicles to a moving point or other fixed points**

(30) Priority: 20.12.2006 ES 200603328; 22.11.2007 ES 200703083
(71) Applicant: Colome Calafi, Fernando Salvador, 08110 Montcada I Reixas Barcelona (ES)
(72) Inventor: Colome Calafi, Fernando Salvador, 08110 Montcada I Reixas Barcelona (ES)
(74) Representative: Morgades y Manonelles, Juan Antonio

(57) **Abstract**

The invention refers to an anti-theft device formed by a plate held by appropriate means to a two or more wheeled vehicle for example a scooter, formed by two or more chains, the sleeve of which mounted on the end of the same immobilises the vehicle to a moving point on the vehicle, while a ring mounted on the end of a second chain immobilises the vehicle to a fixed point. The aim of this device, in addition to immobilising a vehicle's moving part to a fixed point on the same, is also to immobilise this vehicle to an external or unconnected fixed point, to prevent it from being lifted off the ground or from being removed by loading this vehicle onto a second vehicle such as a trailer, van, lorry or similar.

## Description

This application for an Invention Patent consists of a **"DEVICE TO IMMOBILISE VEHICLES TO A MOVING POINT OR OTHER FIXED POINTS",** the new construction and design features of which comply with maximum safety and efficiency.

More specifically, the invention refers to an anti-theft device formed by a plate held by appropriate means to a two or more wheeled vehicle for example a scooter, formed by two or more chains, the sleeve of which mounted on the end of the same immobilises the vehicle to a moving point.

The aim of this device, in addition to immobilising a vehicle's moving part to a fixed point on the same, is also to immobilise this vehicle to one or more external or unconnected fixed points, to prevent it from being lifted off the ground or from being removed by loading this vehicle onto a second vehicle such as a trailer, van, lorry or similar.

Relevant antecedents of this invention are not known, for example in Model of Utility No. 8702102 describes and claims an "Improved anti-theft device for motor cycles", which joins a motorcycle's fixed point to a moving point on the same or similar using a flexible, catenary cable. European patent No. 774404 describes and claims for an "Anti-theft device" which joins a fixed point, such as a post outside the vehicle, to a fixed point on such vehicle.

The invention, unlike other aforementioned antecedents and in one single object or device, connects three chains, one to immobilise two different points on the vehicle, for example, a fixed point to a moving point on the same, one fixed point on the vehicle to a fixed point external to the vehicle, or a fixed point on the vehicle to two fixed points external to the vehicle.

The aforementioned device is formed by a support part on the device formed by a bent plate, which is held to the structure of the vehicle by legs, the ends of which, using the holes drilled in their ends, have screws in them which are screwed onto the vehicle's structure. On one of the support's ends and using an attachment welded to the same there are two chains held by appropriate means.

In an alternative form the device is the same as that stated in the above paragraph, however including a ring bolt on one of the holding pivots held to the handle bar. The ring bolt is held by appropriate means to a third chain which immobilises the scooter to a second fixed point.

The support element as it name indicates, firstly immobilises the device to the vehicle. The device includes mobile chains, which shall be of any type, normal or reinforced and covered by a plastic or similar cover. The first chain immobilizes the vehicle's moving part to a fixed point on the same, assisted by a sleeve with its lock which is attached to both retainers, with one of these mounted onto the vehicle's moving part and the other to the fixed part of the support. The second chain is jointed on the plate equipped with an attachment and tab, which includes an axle on which it turns, due to the fact that one of its ends is equipped with a sleeve while the opposite end has a ring.

The device's support includes a fixed point on one of its ends with the opposite end having an attachment acting as a support to a second mounting pivot and a jointed pivot for one of the chains.

Alternatively, the second chain may, using the relevant ring, be connected to the first chain, with both chains performing the first function, that is to say, the first chains connects a fixed point to a moving point on the vehicle and the second chain immobilises the said vehicle to a fixed external point located on the public highway.

According to the completely innovative solution hitherto unknown on the market, the specified device also acts as an anti-theft device by joining the vehicle's structure to its handle bar or steering wheel, immobilizing the said vehicle to a fixed point on the public highway such as a lamp post or similar item.

According to another innovative solution hitherto unknown on the market, the specified device may be installed on the vehicle without affecting its balance because it includes a sleeve which gives the mounting pivot a variable weight and which is included on the handle bar on a vehicle with two or more wheels, as this sleeve is formed by a number of disks matching the required weight.

All of the elements forming part of the device have been created and designed so that its parts are completely inaccessible for dismantling and unauthorised handling in order to prevent its main function of immobilisation using screwdrivers, pliers, conventional spanners, levers and similar items. The material is also completely rustproof or similar when the device is exposed to extreme weather conditions or breaking or sawing attempts.

The combination of the different parts in the device offer a high degree of versatility, because immobilising a vehicle to an external fixed point may be from a fixed point on the said vehicle or from a moving point where there are different combinations which shall be detailed below.

Another purpose of this invention are the improvements in it detailed in the additional patent No. 200703083/7 by the same owner consisting of, firstly improvements to the mountings the purpose of which is to reinforce the holding and immobilizing methods which are built into these mountings to prevent them being tampered with, in addition to improvements in the chain mounting terminal joints on the plate held to the vehicle's chassis using the corresponding legs.

The mountings in this invention have a slightly prismatic body the inside of which has two cavities the openings of which are located at 90°. Inside this body there is a lock, the lever of which operates on one of the cavities immobilizing amounting pivot joined, for example, to the scooter's handle bar and a plate from which a chain hangs into the second hole holding a conventional chain by appropriate means, with the assistance of an extending washer which surrounds the body of the chain and a washer in the corresponding slot in the aforementioned second hole on the mounting.

Another purpose of the invention are improvements to the mounting terminals which have a slightly cylindrical body, machined inside so that it has two cavities in line longitudinally and housing a mounting, whereas the3 other cavity houses a tilting mounting which in turn immobilises the plate held to the scooter's chassis using an anti-saw sleeve.

A detailed list of the parts shown in the attached drawings is given below and detailed in the attached diagrams in the same, (10) device, (11) chain, (12) header, (13) terminal, (14) lock, (15) mounting pivot, (16) screw, (17) plate, (18) legs, (19) tab, (20) drilled holes, (21) cover, (22) counter weight, (23) mounting pivot, (24) terminal, (25) ring bolt, (26) stud (27) head (27), (28) rivet mounting, (29) sleeve, (30) mounting pivot, (31) chain, (32) ring, (33) header, (34) sliding point, (35) mounting support, (36) ridge, (37) lip, (38) pin, (39) post mounting, (40) washers, (41) handle bar, (42) pivot, (43) screw, (44) hole, (45) threaded drilled hole, (46) drilled holes, (47-48) sleeve bases (22), (49) hollow, (50) hole, (51) drilled hole, (52) hole, (53) flat headed nail, (54) shank, (55) cover, (56) hole, (57) counter weights, (58) counterweight washers, (59-60) bases, (61) tube, (62) intermediate sleeve, (63) tube, (64) expansion nut, (65) body of pivot, (66) screw, (67) hole, (68) flat headed nail, (69) shank, (70) drilled hole, (71) protrusion, (72) hole, (73) hole, (74) hook pivot skirting, (75) handle bar, (78) protrusion, (79) pivot body (65), (80) conical area, (81) end area, (82) central hole, (83) plate, (84) mounting pivot, (85) tab, (86) ring bolt, (87) mounting pivot, (88) coupling pipe, (89) mounting pivot, (90) handle bar, (91) sleeve, (92) mounting pivot, (93) handle bar, (94) retaining washer, (95) retaining washer, (96) cover, (97) tilting mounting, (98) ridge, (99) pivot, (100) drilled hole, (101) tilting mounting, (102) cylindrical section, (103) cylindrical area, (104) conical area, (105) cylindrical area, (106) cylindrical area, (107) conical area, (108) cylindrical area, (109) drilled hole, (110) rebate, (111) chain, (112) ball joints (113) mounting pivot, (114) sleeve, (115) header, (116) mounting pivot, (117) lock, (118) reinforcing sleeve, (119) reinforcing washer, (120) cap, (121) cam, (122) circular rebate, (123) circular rebate, (124) cylindrical hole, (125) ring rebate, (126 - 127 - 128 - 129) cylindrical hole, (130) reinforcing plate, (131) chain, (132) fixed post, (133) ring, (134) reinforcing chain, (135) plate, (136) plate, (137) link, (138) pin, (139 - 140) hole, (141) bearing, (142) eccentric section, (143) hollow, (144) toothed sleeve, (145) retaining part, (146) mounting pivot, (147) sleeve, (148) mounting, (149) mounting head (148), (150) tilting mounting, (151) Allen stud, (152) cylindrical section, (153) cylindrical section, (154) ball, (155) sleeve hole (147), (156) sleeve hole (147), (157) anti-saw sleeve, (158) sleeve opening (147), (159) sleeve opening (147), (160) drilled hole (155), (161) divider between holes (155-156), (162) pivot mounting on handle bar, (163) pivot base (162), (164) pivot base (162), (165) mounting, (166) plate, (167) expansion spring, (168) hole, (169) pivot head (162), (170) eccentric section, (171) chain, (172) hole, (173) slot, (174) cylindrical ridge, (175) cylindrical section, (176) cylindrical area, (177) ridge, (178) cylindrical area, (179) conical area, (180) cylindrical section, (181) conical area, (182-183) drilled holes, (184) drilled holes, (185) ribbed pin, (186) terminal, (187) pin, (188-189) threaded holes, (190) anti-saw sleeve, (191) tab, (192) stud, (193) drilled hole, (194) sleeve, (195) cylindrical section, (196) flat headed nail, (197) opening, (108) hole, (199) elastic pins, (200) drilled hole, (201) wings, (202) wings, (203) drilled hole, (204) circular plate, (205) hole; (206) central hole, (207) eccentric hole, (208) cylindrical section of (207), (209) conical section, (210) tilting terminal, (211) terminal hole (210), (212) terminal hole (210), (213) drilled hole, (214) slots in the mounting (215), (215) mounting, (216) divider (217) cover, (218) skirting, (219) radial extension, (220) mounting clout nail (215), (221) hole, (222) side surface of tilting terminal (210), (223) elastic pin, (224-225) openings, (226) breaking screws, (227) tilting terminal, (228) cylindrical section of terminal (227), (229) toothed section, (230) hole, (231) drilled hole, (232) hole, (233) elastic pin, (234) rebate, (235) hole, (236) hole, (237) conical section, (238) cylindrical section, (239) toothed section, (240) drilled hole, (241) cylindrical section, (242) ribbed steel pin, (243) elastic pin, (244) breaking screws, (245) immobilising device, (246) chain, (247) links, (248) ring, (249) mounting pivot, (250) beading, (251) cylindrical area, (252) conical area, (253-254) fixed points, (255) end of handle bar, (256) plate, (257) legs, (258-259) chain (260) terminal, (261) tab, (262) mounting support, (263) terminal, (265) ring lip (266), (266) ring bolt, (267) mounting pivot, (268) rivet (269) plate, (270) leg tabs (257), (271) chain, (272) ring, (273) counter weights, (274) mounting pivot, (275) lock, (276) drilled hole, (277) tilting mounting, (278) breaking screws, (279) drilled hole, (280) headers.
Figure 1 is a top plan view of the device (10), on which the chain (11) may occupy a resting position or an operating position whereas the chain (31) is in the operating position.
Figure 2 is a detail of "1", according to Figure 1, of the alternative ring bolt mounting (25) to a terminal (24), see (a), or to a flat strip (83) see (b).
Figure 3 is a detail of "2", according to Figure 1, of a view of the device's operation (10) when it is immobilising a vehicle to a fixed post (39), using one of its chains (31).
Figure 4 is an exploded longitudinal cross top section of the counterweight (22) showing all of its components.
Figure 5 is a front view of a longitudinal cross section of the counterweights (22) completely mounted on the handle bar (41).
Figure 6 is a front top view of a longitudinal cross section of the different parts of the exploded counterweight (22).
Figure 7 is a front top view of the different parts of the counterweight (22) mounted on the handle bar (41).
Figure 8 is a longitudinal cross top section of the exploded counterweight (22) in one of its possible implementations.
Figure 9 is a longitudinal cross top section of the counterweight (22) mounted on the handle bar (75).
Figure 10 is a front top view (a) and in section (b) of a washer (58) for the counterweight (57).
Figure 11 is an exploded longitudinal cross top section of another of the possible implementations of the invention in which using the coupling tube (88) it is possible to attach one of the chains (11-31) to a moving part of the scooter, such as the mounting pivot (89) held by appropriate means to the handle bar (90).
Figure 12 is a longitudinal cross top section of the implementation shown in the previous diagram with all parts in position shaped by the coupling tube (88) on the mounting pivot (89).
Figure 13 is an exploded front top view of another possible implementation of the invention in which using the coupling tube (88) one of the chains (11-31) can be connected to a moving point on the scooter type vehicle, such as a mounting pivot (89) held by appropriate means to the handle bar (90).
Figure 14 is a front top view of the implementation shown in Figure 12, with all the parts in place shaped by the coupling tube (88) on the mounting pivot (89).
Figure 15 is (a) an exploded longitudinal cross top section of another possible implementation of the invention in which there is a sleeve (91) attaching one of the chains (11-31), to a moving part on the scooter type vehicle such as a mounting (92) held by appropriate means to a handle bar (93) using a retaining washer (94), and (b) the implementation with all parts in place, that is to say, the sleeve (91) on the mounting pivot (92) using a retaining washer (94).
Figure 16 is an implementation of the invention as in Figure 15, in which the shape of the retaining washer (95) is different to the retaining washer (94), as shown in Figure 17, for the retaining washer (94) and Figure 18 for the retaining washer (95).
Figure 17 is (a) a top view of a retaining washer (94), and (b) as a cross section.
Figure 18 is (a) a top view of a retaining washer (95), and (b) as a cross section.
Figure 19 is a side view of the cover (96), (a) from the top and (b) from the bottom.
Figure 20 is (a) a front top view of the sleeve (91), and (b) a longitudinal cross section of the same.
Figure 21 is a view of the longitudinal cross section of a chain (111), formed by ball-and-socket joints (112) on one of the ends of which has a mounting pivot (113) with the retaining part (145) the end of which is held in the sleeve (114), whereas at the opposite end of this chain (111) is fixed to the header (115), which has a mounting pivot built into it (116), held to the pivot (116) in the sleeve (115) by the lock (117).
Figure 22 is a view (a) of a longitudinal cross section of the reinforcing sleeve (118) and (b) a top view of this reinforcing sleeve (118).
Figure 23 is (a) a longitudinal cross top section of a reinforcing washer (119), and (b) a top view of the reinforcing washer (119).
Figure 24 is (a) a front top view of a lock cover (120) and (b) a top view of this cover (120).
Figure 25 is (a) a front top view of the cam (121) and (b) a top view of this cam (121).
Figure 26 is (a) a top view of the header (115), (c) a top view of the header (115) and (b) a longitudinal cross section of the header (115).
Figure 27 is (a) a front top view of the mounting pivot (116) and, (b) a longitudinal cross section of the same.
Figure 28 is (a) a top view of the device (10) in the chain's resting position (11), in its operating position (31), and in its operating position of a third chain (122) and (b) a detail by "3" according to Figure 28 (a).
Figure 29 is (a) a top view of the device (10) in the chain's resting position (11), in its operating position (11), in its operating position (31), and in its operating position of a third chain (122) including a counterweight (22) on the handle bar (41), (b) a detail by "4" according to Figure 29 (a), (c) a detail by "5" according to Figure 29 (a), and (d) a detail by "5" according to Figure 29 (a).
Figure 30 is a top view of the device (10) after the improvements added to Additional patent No. 200703083(7) from the same owner.
Figure 30a is a side top view of the mounting pivot (162), mounted on the end of the handle bar, one of the ends of which (162), (163) is limited by this handle bar (255), one of the bases of which (163) on (162) is limited by this handle bar (255), not shown in the figures and the opposite base (164) of (162) on the mounting (165).
Figure 31 is a longitudinal cross top section cut A-A' of the mounting pivot (162) in Figure 31.

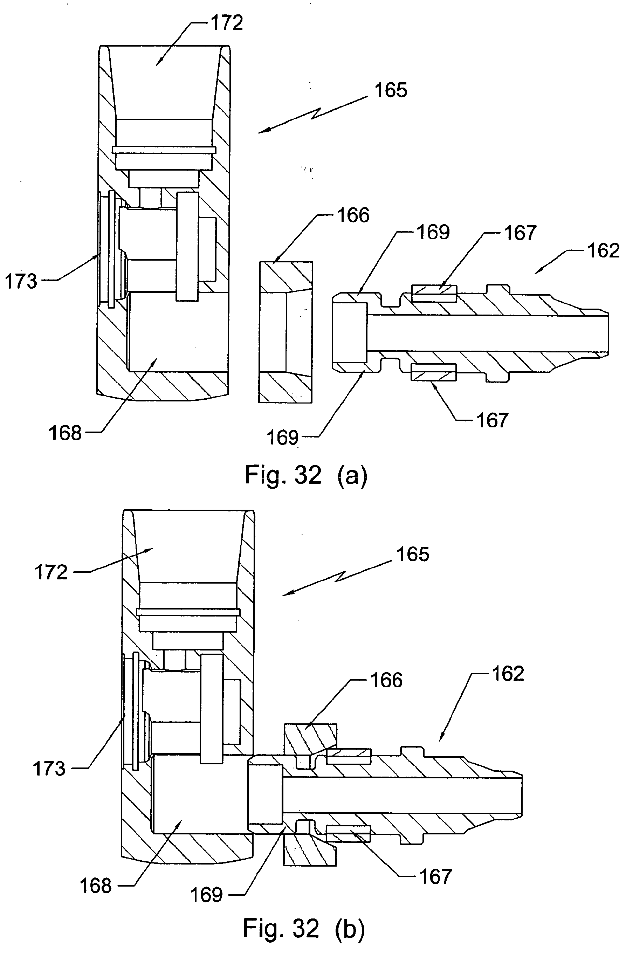

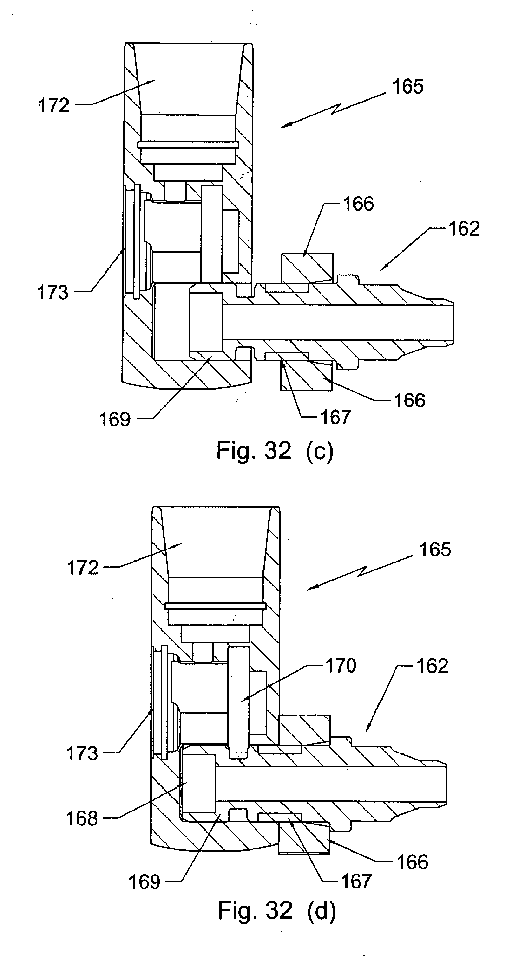

Figure 32 are four views of the pivot coupling system (162) to the mounting (165), in view (a) the pivot (162) is outside the mounting (165) and the circular plate (166), and in view (b) the mounting pivot (162) crossing the plate (166) and (166) partially surrounding the expansion spring (167) but without the base (164) entering the mounting (165) and its hole (168), in view (c) the mounting pivot (162) crosses the plate (166) and its base (164), being (162) partially in the hole (168) in the mounting (165) pressing on the plate (166) the spring (167), in view (d) the mounting pivot (162) crosses the plate (166) and the head (169) of the mounting pivot (162) is completely inside the hole (168) in the mounting (165) and held (169) using the eccentric disk (170).

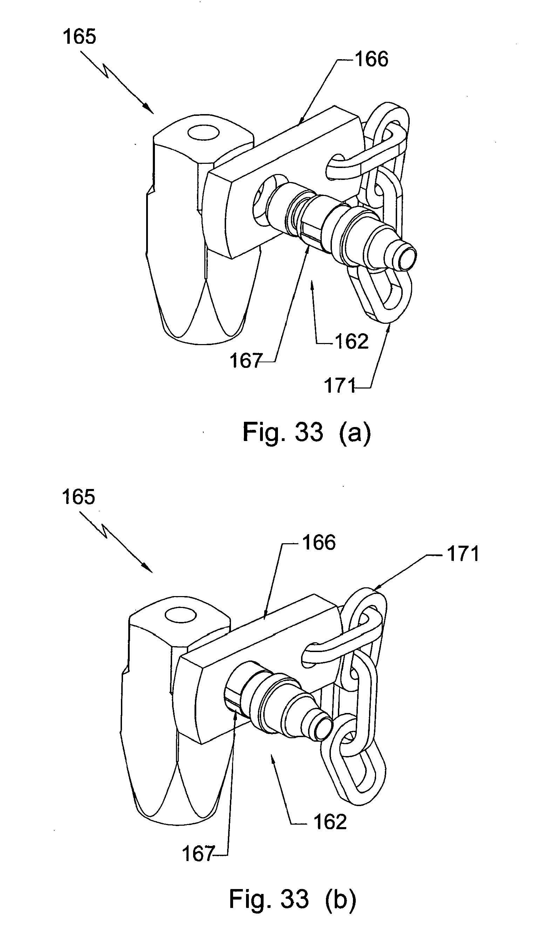

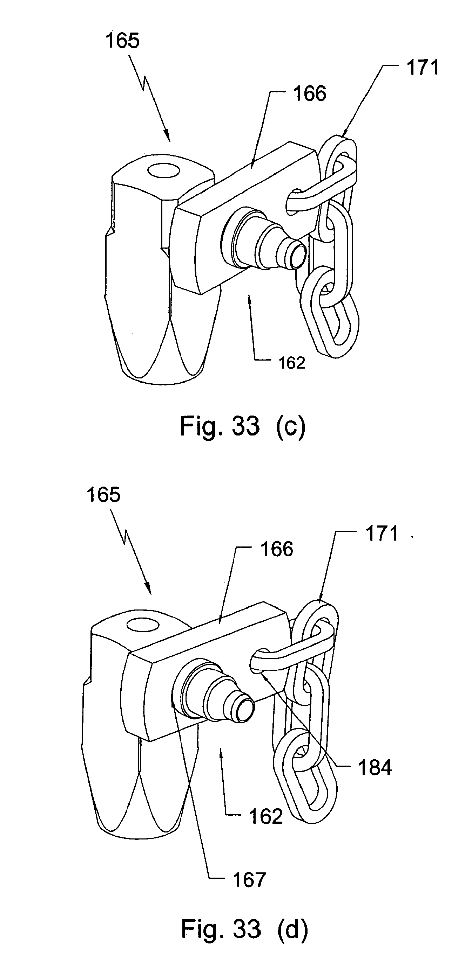

Figure 33 are elevations of the four views (a), (b), (c) and (d) of Figure 32 above showing how the plate (166) and the chain (171) are held to the mounting (165), using the mounting pivot (162).
Figure 34 are views of the strip (166), (a) is a top view of (166), (b) is a bottom view of (166), (c) is a perspective view of the plate (166), with the drilled holes (184) and (276).
Figure 35 are views (a) of the expansion spring (167) in the closed position, (b) of the expansion spring (167), in the open position, (c) a view of the spring (167) in the open position.
Figure 36 are views of some alternatives to that shown in Figure 32, in which the plate (166) is held to a terminal (186), shown in Figures 63 to 65 and this (186) to a double link chain (271), in which view (a) shows the mounting (165) aligned with the plate (166) and the mounting pivot (162), in view (b) the mounting pivot (162) partially in the mounting (165), in view (c) the mounting pivot (162) totally encased in the mounting (165) retaining the plate (166) with the chain (271), with the assistance of the expansion spring (167).
Figure 37 is a top view of the mounting of the chain (246) on the flat strip (166) and held to the plate (165), using the mounting pivot (162).
Figure 38 is a front top view of the sleeve (147) view through its hole (156), which tilts because of its tilting mounting (150), in the tab (85), see Figure 30, protected by the anti-saw sleeve (157), with a cover (55) in the opening (158) to prevent any misuse.
Figure 39 is a cross section cut A-A', according to Figure 38, in which the mounting (148) is immobilised inside the hole (155) in the sleeve (147) and which may turn with regard to the tab (261) extending from the mounting support (262), see Figure 1.
Figure 40 is a front top view of the sleeve (147) seen through its hole (156), with the tilting mounting (150), the ball (154) and the anti-saw sleeve (157), outside the hole (156).
Figure 41 is a longitudinal cross top section cut A-A' of Figure 40, showing the mounting (148) of the tilting mounting (150), of the stay bolt (151), the steel ball (154) and the anti-saw sleeve, when outside the sleeve (147) and its hole (155).
Figure 42 is a front top view of the sleeve (147) view through its hole (156), which tilts because of its tilting mounting (150), in the tab (261), see Figure 30, protected (150) by the anti-saw sleeve (157).
Figure 43 is a cross section cut A-A', according to Figure 42, in which the mounting (148) is immobilised inside the hole (155) in the sleeve (147) and which may turn with regard to the tab (261) extending from the mounting support (262), see Figure 1, and equipped with a cover (55).
Figure 44 is a front top view of the sleeve (147) seen through its hole (156), with the tilting mounting (150), the ball (154), the anti-saw sleeve (157) and the Allen studs (151), two, outside the hole (156).
Figure 45 is a longitudinal cross top section cut A-A' of Figure 44, showing the mounting (148) of the tilting mounting (150), of the stay bolt (151), the steel ball (154) and the anti-saw sleeve (157), when outside the sleeve (147) and its hole (155).
Figure 46 is a front top view of the sleeve (147) view through its hole (156), which tilts because of its tilting mounting (150), in the tab (261), see Figure 1, protected (150) by the anti-saw sleeve (157).
Figure 47 is a cross section cut A-A', according to Figure 47, in which the mounting (11) is immobilised inside the hole (155) in the sleeve (147), using ribbed steel pin (106), which may turn with regard to the tab (261) extending from the support (261), see Figure 1.
Figure 48 is a front top view of the sleeve (147) seen through its hole (156), with the tilting mounting (150), the ball (154), the ribbed pin (242) and the anti-saw sleeve (157) outside the sleeve (147).
Figure 49 is a longitudinal cross top section cut A-A', according to Figure 48, of the mounting (148) for the tilting mounting (150), the ball (154), the pin (242), when these are outside the sleeve (147) and its hole (155).
Figure 50 is a front top view of the sleeve (147) view through its hole (156), which tilts because of its tilting mounting (150), in the tab (261), see Figure 1, protected (150) by the anti-saw sleeve (157).
Figure 51 is a cross section cut A-A', according to Figure 50, in which the mounting (148) is immobilised inside the hole (155) in the sleeve (147), using ribbed steel pins (22), which may turn with regard to the tab (261) extending from the support (262), see Figure 1.
Figure 52 is a front view of the sleeve (147) seen form its hole (156), with the tilting mounting (150), the ribbed steel pins (22), the ball (154) and the anti-saw sleeve (157) outside the sleeve (147).
Figure 53 is a longitudinal cross top section cut B-B' of Figure 52, of the mounting (148), of the tilting mounting (150), the ball (17) and the ribbed pins (22), when this is outside the sleeve (147) and its hole (155).
Figure 54 is a front top view of the sleeve (147) view through its hole (156), which tilts because of its tilting mounting (150), in the tab (261), see Figure 1, protected (150) by the anti-saw sleeve (157).
Figure 55 is a cross section cut A-A', according to Figure 54, in which the mounting (148) is immobilised inside the hole (155) in the sleeve (147), using a elastic pin (243).
Figure 56 is a front top view of the sleeve (147) seen through its hole (156), with the tilting mounting (150), the ball (154) and the anti-saw sleeve (157) outside the sleeve (147).
Figure 57 is a longitudinal cross top section cut A-A' of Figure 56, of the mounting (148), of the tilting mounting (150), the ball (154) and the elastic pin (243), when this is outside the sleeve (147) and its hole (155).
Figure 58 is a front top view of the sleeve (147) view through its hole (156), which tilts because of its tilting mounting (150), in the tab (261), see Figure 1, protected (150) by the anti-saw sleeve (157).
Figure 59 is a cross section cut A-A', according to Figure 58, in which the mounting (148) is immobilised inside the hole (155) in the sleeve (147), using two elastic pins (243), and which may turn with regard to the tab (261) extending from the mounting support (202), see Figure 1.
Figure 60 is a front top view of the sleeve (147) seen through its hole (156), with the tilting mounting (150), the ball (154), the elastic pin (243) and the anti-saw sleeve (157) outside the sleeve (147).
Figure 61 is a longitudinal cross top section cut A-A' of Figure 60, of the mounting (148), of the tilting mounting (150), the ball (164) and the elastic pins (243), when this is outside the sleeve (147) and its hole (156).
Figure 62 is a front top view of the sleeve (147) view through its hole (156), which tilts because of its tilting mounting (150), in the tab (261), see Figure 1, protected (150) by the anti-saw sleeve (157).
Figure 63 is a cross section cut A-A', according to Figure 62, in which the mounting (148) is immobilised inside the hole (155) in the sleeve (147), using a breaking screw (244), and which may turn with regard to the tab (261) extending from the mounting support (262), see Figure 1.
Figure 64 is a front top view of the sleeve (147) seen through its hole (156), with the tilting mounting (150), the ball (154), the breaking screw (244) and the anti-saw sleeve (154) outside the sleeve (147).
Figure 65 is a longitudinal cross top section cut A-A' of Figure 64, of the mounting (148), of the tilting mounting (150), the breaking screw (244) and the ball (17), when this is outside the sleeve (147) and its hole (156).
Figure 66 is a front top view of the sleeve (147) view through its hole (156), which tilts because of its tilting mounting (150), in the tab (261), see Figure 1, protected (150) by the anti-saw sleeve (20).
Figure 67 is a cross section cut A-A', according to Figure 66, in which the mounting (148) is immobilised inside the hole (155) in the sleeve (147), using two breaking screws (244), and which may turn with regard to the tab (261) extending from the mounting support (262), see Figure 1.
Figure 68 is a front view of the sleeve (147) seen from its hole (156), with the tilting mounting (150), the breaking screws (244) and the anti-saw sleeve (157), the ball (154) outside the sleeve (147).
Figure 69 is a longitudinal cross top section cut A-A' of Figure 67, of the mounting (148), of the tilting mounting (150), the breaking screws (244) and the ball (154), when this is outside the sleeve (147) and its hole (155).
Figure 70 is a front top view of the ring bolt (266) held to the tab (191) on the plate (269), see Figure 1, detail 1, using the mounting pivot (267) and the rivet (268), protected by the anti-saw sleeve (190).
Figure 71 is a cross section cut A-A, according to the Figure 70.
Figure 72 is a front top view of the ring bolt (266) held to the tab (191) on the plate (269), using the mounting pivot (267) and the rivet (268), protected by the anti-saw sleeve (190) and the stay bolt (192) outside the hole (199).
Figure 73 is a cross section cut B-B, according to Figure 75.
Figure 74 is a front top view of the ring bolt (266) held to the tab (191) on the plate (269), using the mounting pivot (267) and the rivet (268), protected by the anti-saw sleeve (190).
Figure 75 is a cross section cut A-A', according to Figure 74.
Figure 76 is a front top view of the ring bolt (266) held to the tab (191) on the plate (269), using the mounting pivot (267) and the nut (268), protected by the anti-saw sleeve (190) and the Allen studs (151) outside the hole (198) in the sleeve (194).
Figure 77 is a cross section cut A-A', according to Figure 76.
Figure 78 is a front top view of the ring bolt (266) held to the tab (191) on the plate (269), using the mounting pivot (267) and the rivet (268), protected by the anti-saw sleeve (190).
Figure 79 is a cross section cut A-A', according to Figure 78.
Figure 80 is a front top view of the ring bolt (266) held to the tab (191) on the plate (269), using the mounting pivot (267) and the rivet (268), protected by the anti-saw sleeve (190) and the breaking screw (244) outside the hole (198) in the sleeve (194).
Figure 81 is a cross section cut A-A', according to Figure 80.
Figure 82 is a front top view of the ring bolt (266) held to the tab (191) on the plate (269), using the mounting pivot (267) and the rivet (268), protected by the anti-saw sleeve (190).
Figure 83 is a cross section cut A-A', according to Figure 82.
Figure 84 is a front top view of the ring bolt (266) held to the tab (191) on the plate (269), using the mounting pivot (267) and the rivet (268), protected by the anti-saw sleeve (190) and the Allen stud (151) outside the drilled hole (151).
Figure 85 is a cross section cut A-A', according to Figure 84.
Figure 87 is a cross section cut A-A', according to Figure 86.
Figure 88 is a front top view of the ring bolt (266) held to the tab (191) on the plate (269), using the mounting pivot (267) and the rivet (268), protected by the anti-saw sleeve (190) and the Allen stud (151) outside the drilled hole (200).
Figure 89 is a cross section cut A-A', according to Figure 88, in which the exploded version may be seen from left to right of the ring bolt (266), the mounting (148) and the sleeve (194).
Figure 90 is a side top view of the tilting mounting (277) with breaking screws (278) crossing the wings (201) and the tab (261) on the mounting support (262), between these wings (201).
Figure 91 is a top view of the titling mounting (277) with breaking screws (278) crossing the wings (201) and the tab (261) on the mounting support (262), mounted between (277) and (278)
Figure 92 is a cross section cut A-A', according to Figure 90.
Figure 93 is a front top view of the terminal (186) onto which is attached the plate (166), as also shown in Figure 36.
Figure 94 is a longitudinal partial cross top section of the terminal (186).
Figure 95 is a perspective view of the terminal (186), included between the wings of which (201) is the plate (85).
Figure 96 is a front top view of the circular plate (204) including the mounting (165) with the assistance of the pivot (162).
Figure 97 is a cross section cut A-A', according to Figure 95.
Figure 98 is a perspective view of the circular plate (204).
Figure 99 is a top view of the machined tilting terminal (210), mounted with an elastic pin (223), which may turn with regard to the tab (261).
Figure 100 is a cross section cut A-A', according to Figure 99.
Figure 101 is a side top view of the tilting terminal (210) mounted with an elastic pin (213).
Figure 102 is a cross section cut B-B', according to Figure 101.
Figure 103 is a schematic view of the tilting terminal (210).
Figure 104 is a top view of the machined tilting terminal (210), mounted with an elastic pin (223), which may turn with regard to the tab (261) and protected with a cover (217).
Figure 105 is a cross section cut A-A', according to Figure 104.
Figure 106 is a side top view of the tilting terminal (210), with the mounting (215) outside the body of the terminal (210).
Figure 107 is a cross section cut B-B', according to Figure 106.
Figure 108 is a top view of the machined tilting terminal (210) mounted with two elastic pins (223) on the upper section which may turn with regard to the tab (261).
Figure 109 is a cross section cut A-A', according to Figure 108.
Figure 110 is a side top view of the tilting terminal (210).
Figure 111 is a cross section cut B-B', according to Figure 110.

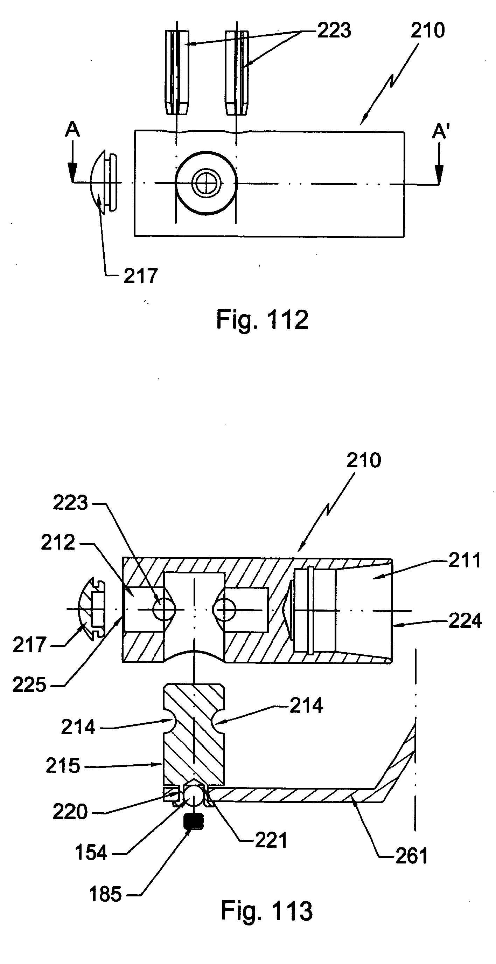

Figure 112 is a top view of the machined tilting terminal (210) mounted with two elastic pins (223) on the lower section which may turn with regard to the tab (261).
Figure 113 is a cross section cut A-A', according to Figure 112.
Figure 114 is a side top view of the tilting terminal (210).
Figure 115 is a cross section cut B-B', according to Figure 114.
Figure 116 is a top view of the machined tilting terminal (210) mounted with one breaking screw (223) on the lower section which may turn with regard to the tab (261) .
Figure 117 is a cross section cut A-A', according to Figure 116.
Figure 118 is a side top view of the tilting terminal (210).
Figure 119 is a cross section cut B-B', according to Figure 118.
Figure 120 is a top view of the machined tilting terminal (210) mounted with one breaking screw (223) on the lower section which may turn with regard to the tab (261).
Figure 121 is a cross section cut A-A', according to Figure 120.
Figure 122 is a side top view of the tilting terminal (210).
Figure 123 is a cross section cut B-B', according to Figure 122.
Figure 124 is a top view of the machined tilting terminal (210) mounted with two breaking screws (226) on the upper section which may turn with regard to the tab (261).
Figure 125 is a cross section cut A-A', according to Figure 124.
Figure 126 is a side top view of the tilting terminal (210).
Figure 127 is a cross section cut B-B', according to Figure 126.
Figure 128 is a top view of the machined tilting terminal (210) mounted with two breaking screws (226) on the lower section which may turn with regard to the tab (261).
Figure 129 is a cross section cut A-A', according to Figure 128.
Figure 130 is a side top view of the tilting terminal (210).
Figure 131 is a cross section cut B-B', according to Figure 130.
Figure 132 is a side top view of the machined tilting terminal (227) mounted with a breaking screw (226).
Figure 133 is a cross section cut A-A, according to Figure 132, in which the tilting terminal (227) which may turn with regard to the tab (261).
Figure 134 is a side top view, turned 90° with regard to Figure 102, of a machined tilting terminal (227) mounted with a breaking screw (226).
Figure 135 is a cross section cut B-B, according to Figure 134.

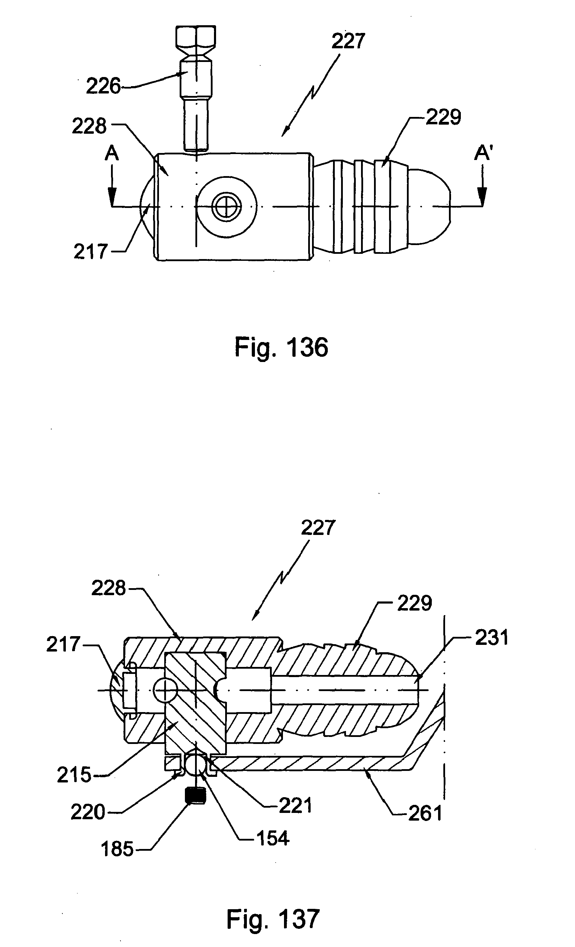

Figure 136 is a side top view of the machined tilting terminal (227) mounted with a breaking screw (226) in which it (226) is shown outside the hole (232).
Figure 137 is a cross section cut A-A, according to Figure 136, in which the tilting terminal (227) which may turn with regard to the tab (261).

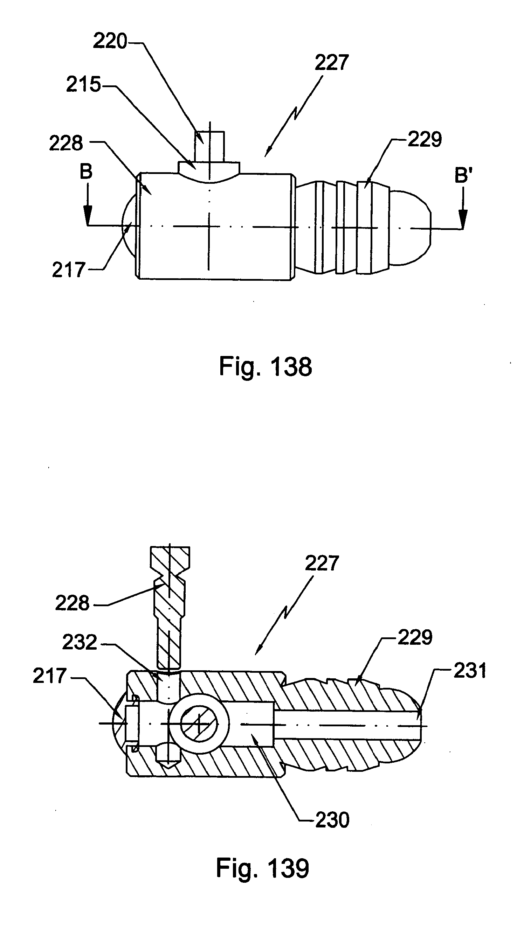

Figure 138 is a side top view, turned 90° with regard to Figure 102, of a machined tilting terminal (227) mounted with a breaking screw (226).
Figure 139 is a cross section cut B-B, according to Figure 108.

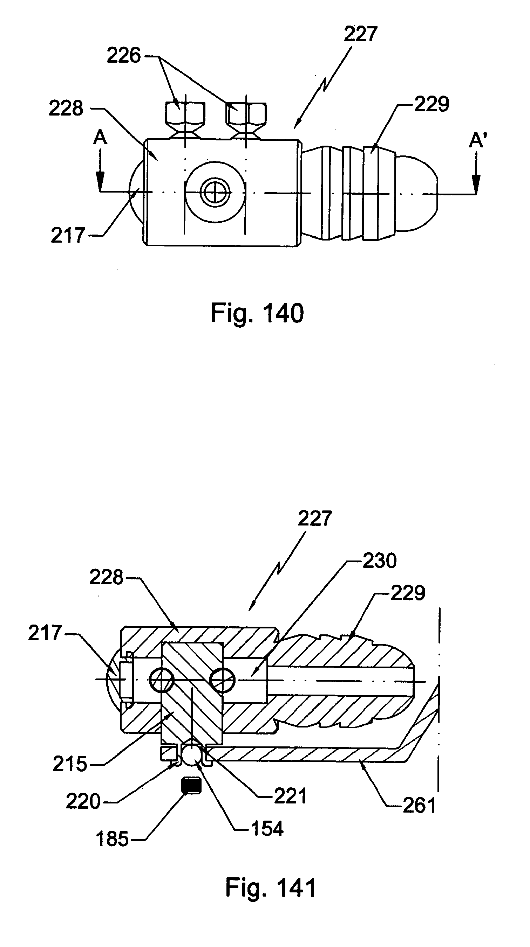

Figure 140 is a side top view the machined tilting terminal (227) mounted with two breaking screws (226) which are screwed into the holes (232).
Figure 141 is a cross section cut A-A, according to Figure 140, in which the tilting terminal (227) which may turn with regard to the tab (261).

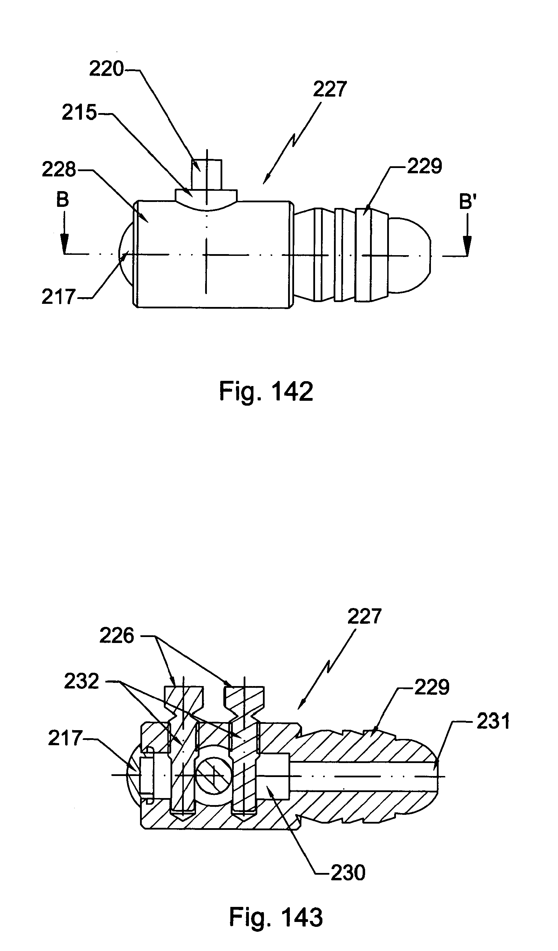

Figure 142 is a side top view, turned 90° with regard to Figure 110, of a machined tilting terminal (227) mounted with a breaking screw (226).
Figure 143 is a cross section cut B-B, according to Figure 142.

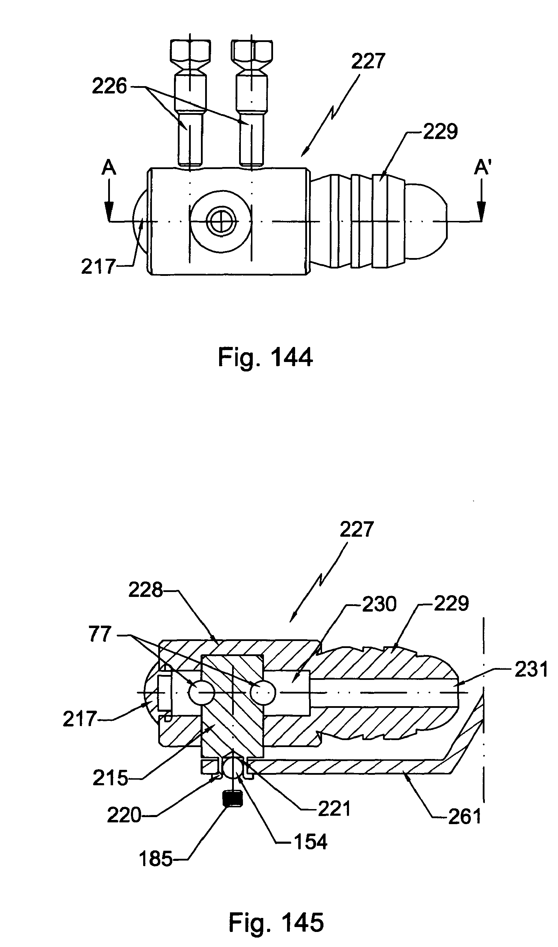

Figure 144 is a side top view the machined tilting terminal (227) mounted with two breaking screws (226) which are screwed outside the holes (232).
Figure 145 is a cross section cut A-A, according to Figure 140, in which the tilting terminal (227) which may turn with regard to the tab (261).

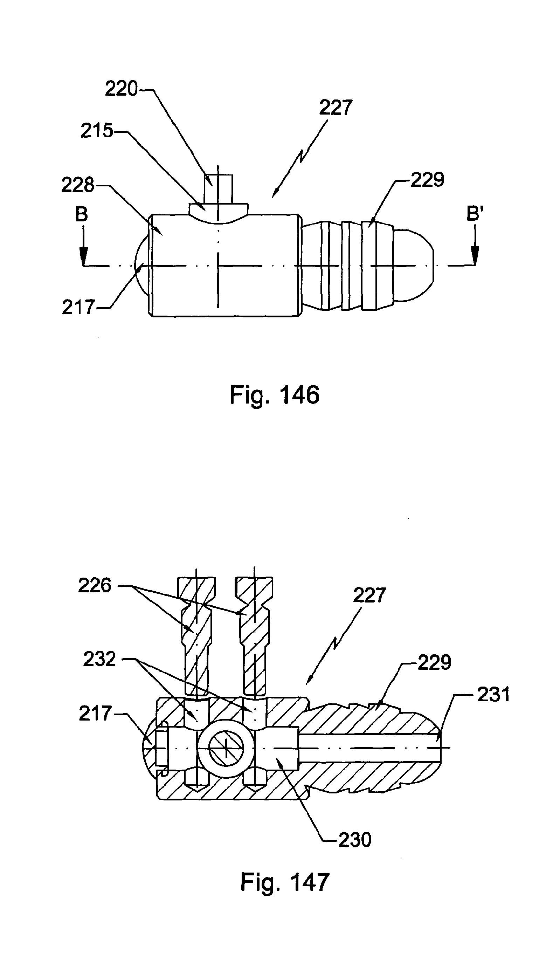

Figure 146 is a side top view, turned 90° with regard to Figure 110, of a machined tilting terminal (227) mounted with breaking screws (226).
Figure 147 is a cross section cut B-B, according to Figure 146.

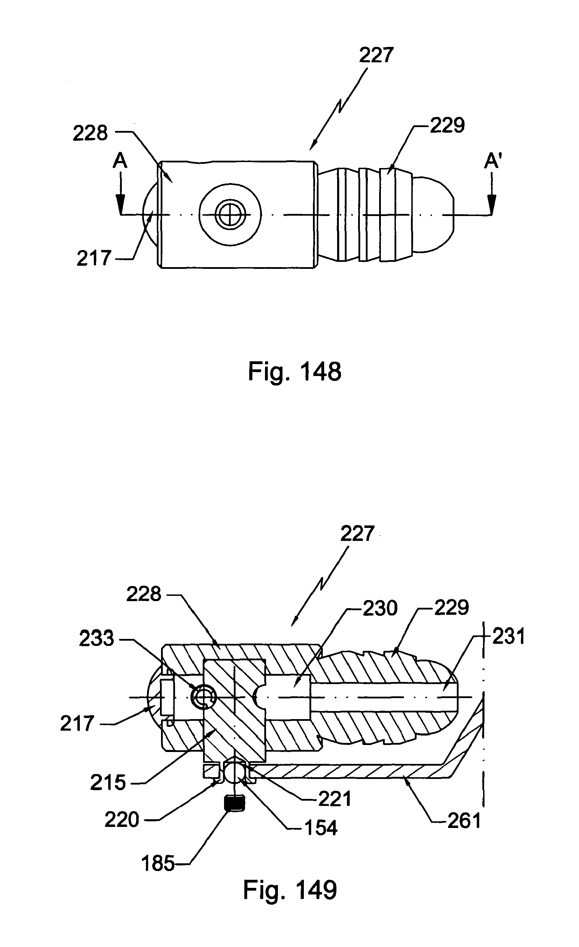

Figure 148 is a side top view of the machined tilting terminal (277) mounted with an elastic pin (233) in which it is shown into the hole (232).
Figure 149 is a cross section cut A-A, according to Figure 148, in which the tilting terminal (227) which may turn with regard to the tab (261).

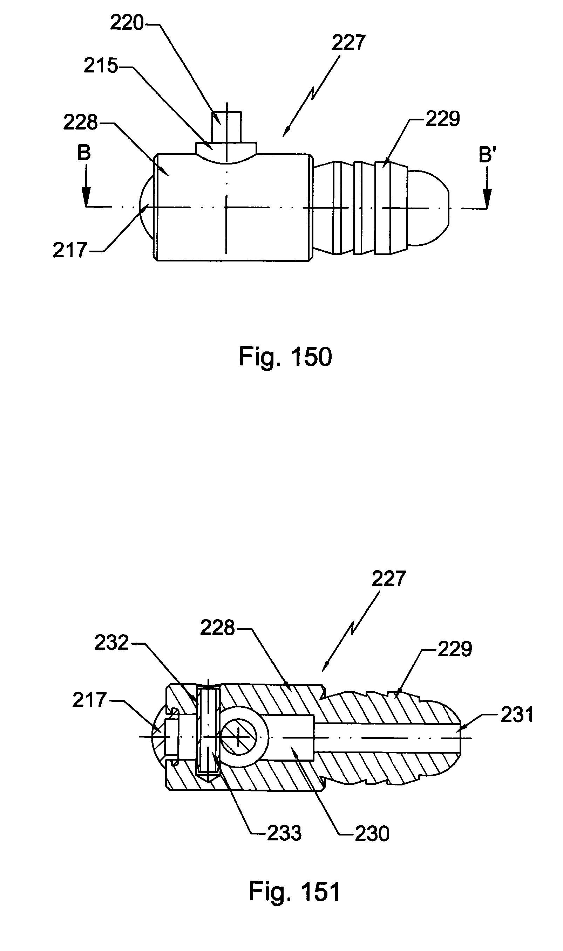

Figure 150 is a side top view, turned 90° with regard to Figure 109, of a machined tilting terminal (227) mounted with an elastic pin (233).
Figure 151 is a cross section cut B-B, according to Figure 150.

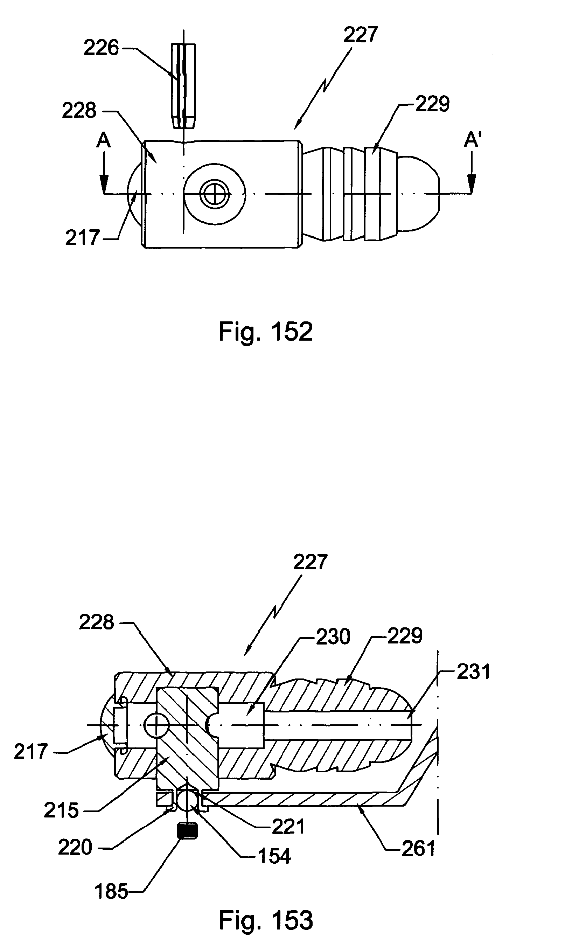

Figure 152 is a side top view of the machined tilting terminal (277) mounted with an elastic pin (233) in which it is shown outside the hole (232).
Figure 153 is a cross section cut A-A, according to Figure 152, in which the tilting terminal (227) which may turn with regard to the tab (261).

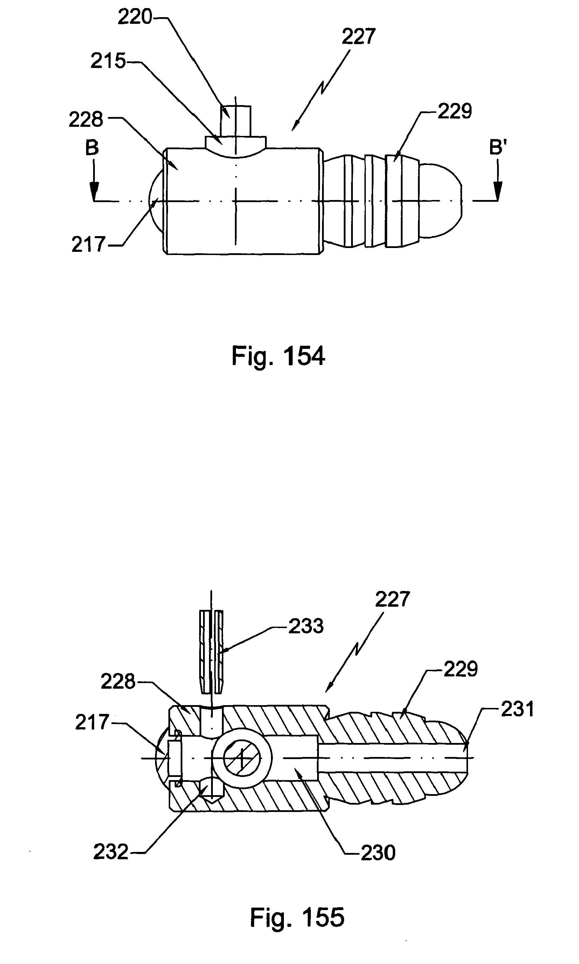

Figure 154 is a side top view, turned 90° with regard to Figure 122, of a machined tilting terminal (227) mounted with an elastic pin (233).
Figure 155 is a cross section cut B-B', according to Figure 154.

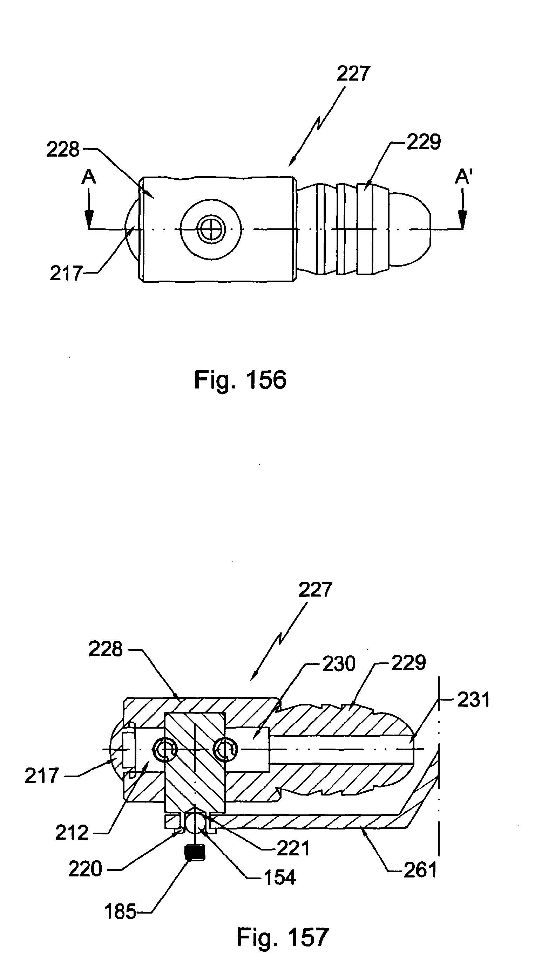

Figure 156 is a side top view of the machined tilting terminal (227) mounted with two elastic pins (233) in which they are is shown into the hole (232).
Figure 157 is a cross section cut A-A, according to Figure 156, in which the tilting terminal (227) which may turn with regard to the tab (261).

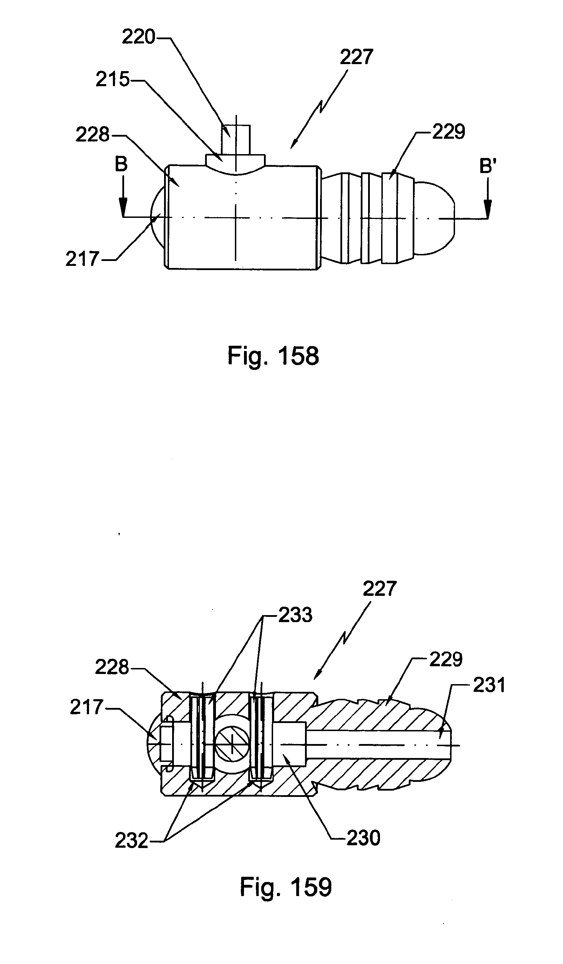

Figure 158 is a side top view, turned 90° with regard to Figure 156, of a machined tilting terminal (227) mounted with elastic pins (233).
Figure 159 is a cross section cut B-B, according to Figure 158.

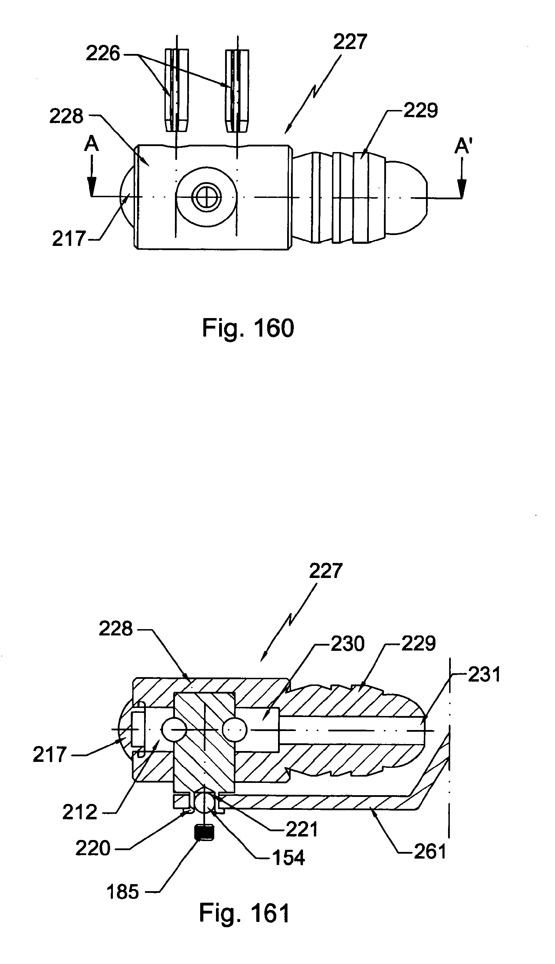

Figure 160 is a side top view of the machined tilting terminal (227) mounted with two elastic pins (233) in which they are shown outside the hole (232).
Figure 161 is a cross section cut A-A, according to Figure 160, in which the tilting terminal (227) which may turn with regard to the tab (308).

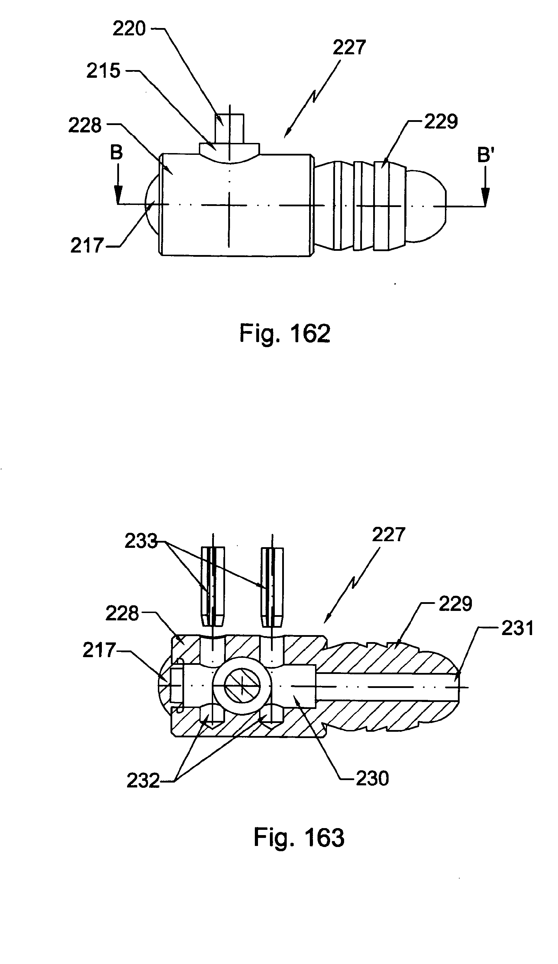

Figure 162 is a side top view, turned 90° with regard to Figure 126, of a machined tilting terminal (227) mounted with elastic pins (233).
Figure 163 is a cross section cut B-B, according to Figure 161.

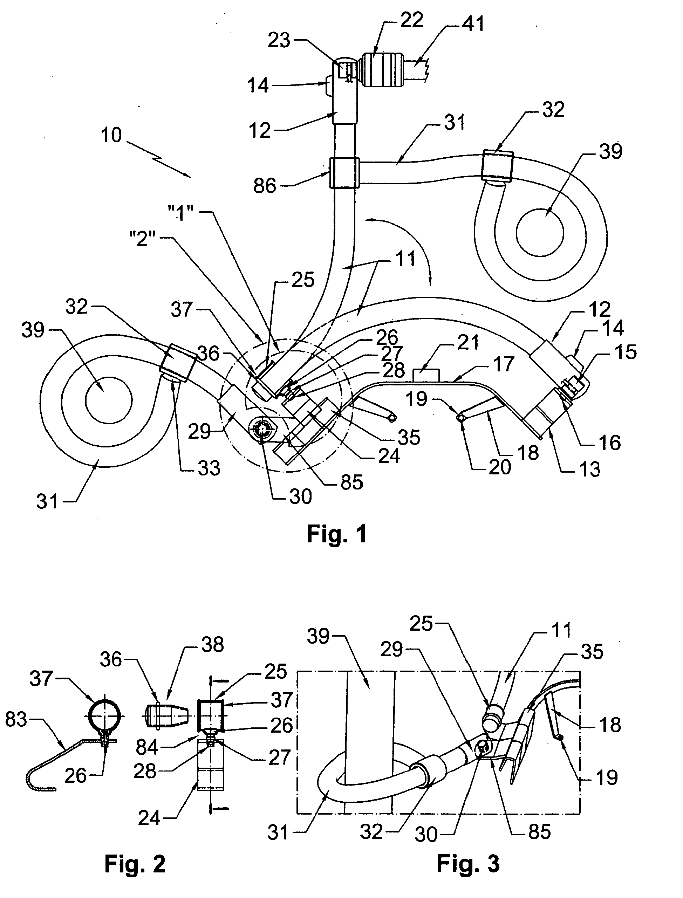

The specified device (10) built into a scooter using an elbow plate with legs (18), the ends of which or tabs (19) have a drilled hole (20), in which screws not shown in the diagram and the cover (21), immobilise the same. On this plate (17) mounted by usual means such as screws (16-28) and a mounting pivot (15) on one of its ends and on the other end of (17) the terminal (24) and the mounting support (35), the mounting support (35) including chains (11) and (31),see Figure 1, the mounting pivot (15) is held onto the terminal (13) by the screws (16).

The chain (11) according to its usual solution includes on one of its ends, a header (12) equipped with a lock (14) inside which locks or releases it on the mounting pivots (15-23) assembled on the ends of the handlebar (41), whereas the chain (31) has a ring on its end (32) with a jointed section (34) and the header (33) which allows it to be immobilized to a fixed post (39), as a fixed point outside the scooter and located on the public highway.

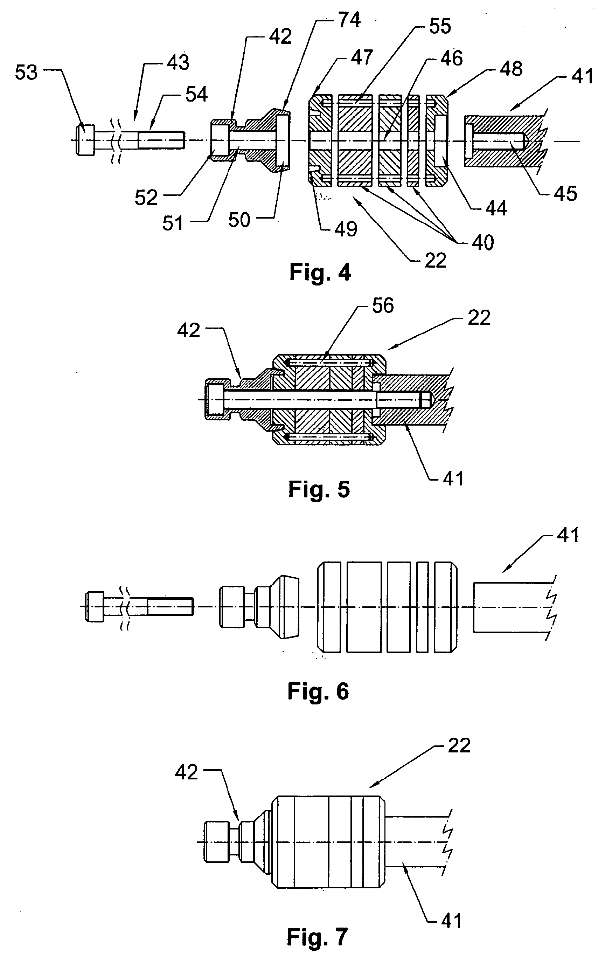

In its resting position that is to say, the vehicle does not require protection by the device (10) the chain is immobilised (11) to the mounting pivot (15) held to the plate (17) and located on one of its ends to close the header (12) using the lock (14) on this mounting pivot (15), and the chain (31) has no function, with the header (29) remaining on the mounting pivot (30), whereas in the operating position, the device (10) immobilizes its header (12) to the counterweight (22), mounting by appropriate means to the handlebar (41) using the lock (14) built into the header (12) and which is immobilised to the mounting pivot (23) see Figure 1, which is mounted on the counterweight (22), and (22) on the handle bar (41), which is shown in more detail in Figures 4 to 7.

In one of the preferred implementations of this invention as shown in Figure 1, the device (10) is formed by a fixed section such as an elbowed plate (17) with terminals (13-24) held to the same and a moving section such as chains (11-31) held to the same (17), one of these (31) using a mounting support (35) and mounting pivot (30), turning on the chain (31) with regard to the mounting pivot (30) held to the mounting support (35) and using the terminal (24) to the other chain (11), giving this device (10) a dual function:
- Immobilising the vehicle to where the device (10) is attached by restricting the handle bar's or similar movement (41-57), considered to be a moving point to a fixed point such as a terminal (24) using the chain (11).
- Immobilising the vehicle to a fixed post or similar (39), using a chain (31).

There are chains (11) and (31) connected to the mounting support (35), the first chain (11) in its resting position and using the header (12) is held to the terminal (13), whereas in the operating position the head (12) of the chain (11) is held to the pivot (23), in this implementation between the said pivot (23) and the counterweight (22) mounted on the handle bar (41), in which there is a ring bolt (86) in the chain (111), see the Figure 1, using a ring (32) on the end of this chain (111) surrounding the external fixed point (132), achieving, by including this third chain, the device's functions (10) go from double to triple.

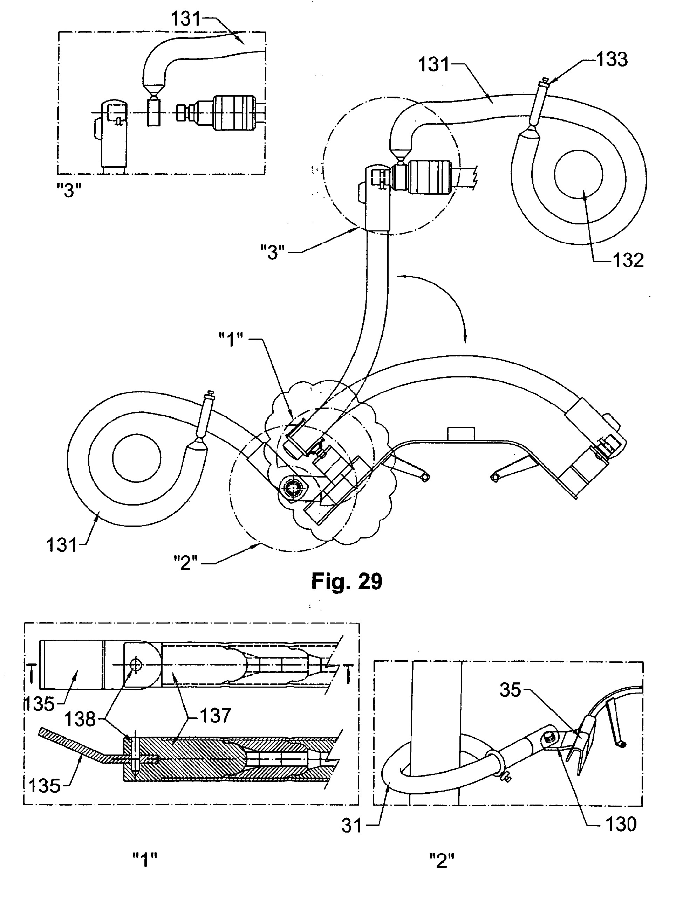

Alternatively in another of the preferred implementations of the invention as seen in Figure 29, the device (10) is formed by a fixed section such as an elbowed plate (17) with the terminal (13) on the right end of (17), whereas at the opposite end there has been welded a U shaped mounting support (35) the arms of which extend into tabs (85) to which a reinforcing plate (130) has been welded, see Figure 29(C).

Another possible implementation of the device (10) is shown in Figure 29, in which detail "5" of Figure 29 is seen, as Figure 29 (d), in which the support mounting (35) is held to a reinforced chain (135) by a metal strip (136), (136) penetrating one of the links (137) in the chain (135) and fixed to the same using a pin (138).

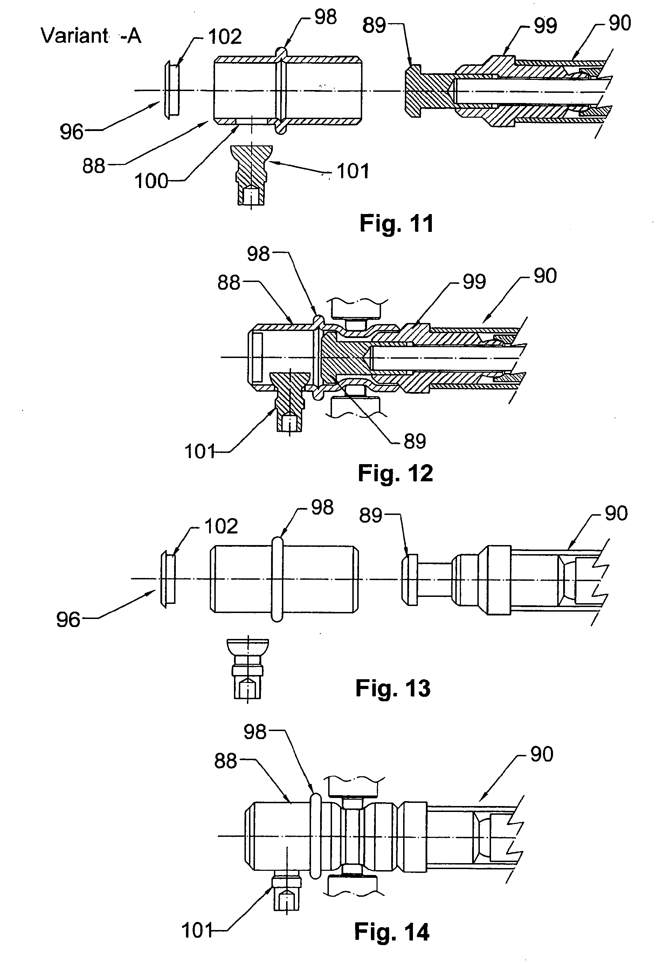

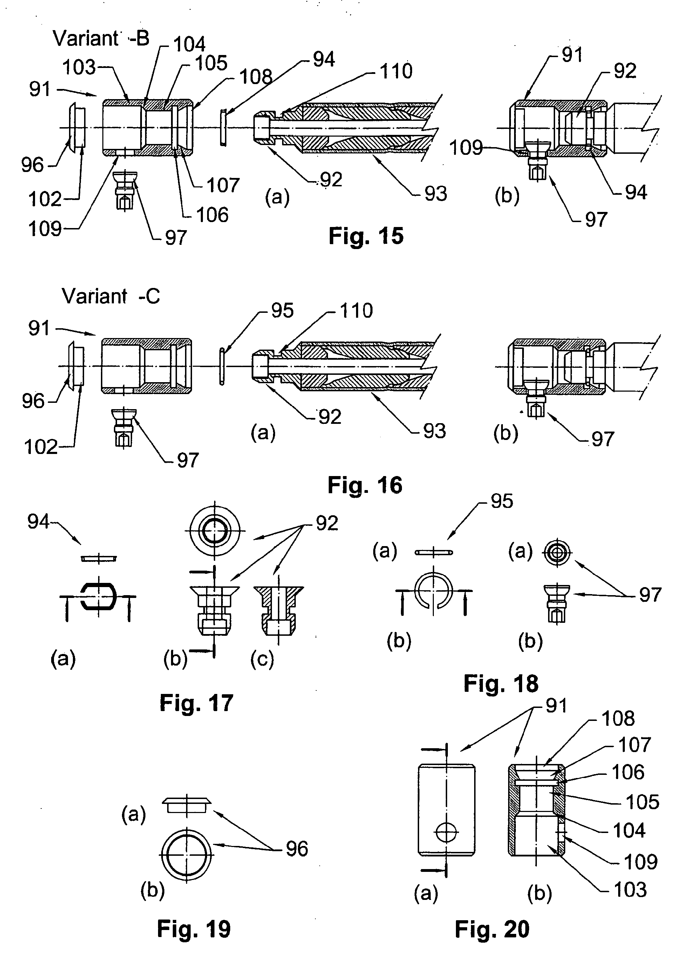

Another possible implementation of the device (10) is that shown in Figures 15 and 16, with a design different to that shown in Figures 11 to 14. The sleeve (91) adopts the external configuration shown in Figure 20 (a) and prepares the handle bar (93) with the mounting pivot (92) mounted on one of its ends.

Finally, the mounting pivot (146) may be mounted on the rings (32) and (133) as seen in Figures 1, 3 and 28.

The sleeve (91) is an externally cylindrical body, while the inside has been machined so that it has a first has a cylindrical area (103) extending into a second conical section (104), extending into a third cylindrical area (105), which in turn extends into a fourth cylindrical section with a lower height (106), which extends into a fifth conical area (107) and finally into a cylindrical area (108).

The side surface of the sleeve (91) has a drilled hole (109) housing the tilting mounting under pressure (97), onto which the corresponding chain is mounted, showing the sleeve (91) seen in the Figures 15b and 16b, immobilized to the mounting pivot (92) and with no possibility of this sleeve moving (91) outwards by violent methods as it is held by a retaining washer (94) the configuration of which is shown in Figure 17, and is housed in the rebate (110) designed for the mounting pivot (92), see Figure 15b.

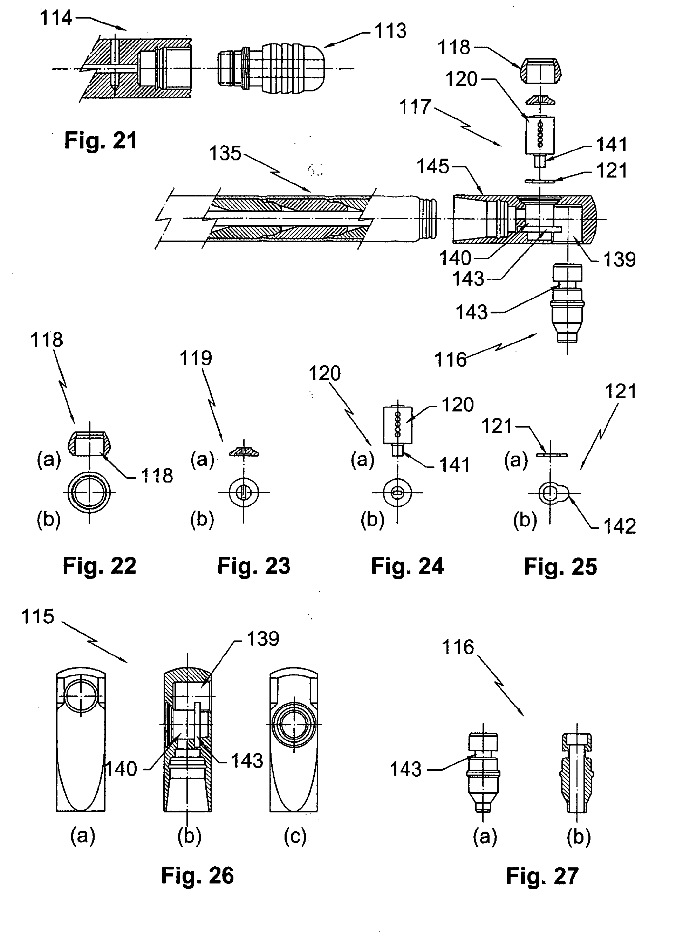

Moreover, as shown in Figure 21, the device (10) may include, using a metal strip (136) the reinforced chain (135), which is jointed by a terminal (114) on the aforementioned metal strip (136), or by the mounting support (35) using the pin (138) as a fixed point and the mounting pivot (23) as the moving point of the handle bar (41). As a consequence of using the header (115), one of its internal holes (139) may be used to house a mounting pivot (116), and with this (116) fixed to a chain for example (131), immobilising the handle bar (41) to a fixed point (132) outside the vehicle.

The header (115) as shown in Figure 21 includes a reinforcing sleeve (118) a reinforcing washer (119) which are assembled together with a cap (120) on the hole (140), so that the hub (141) of the cap (120) raises the cam (121) the eccentric section of which (142) is housed in the rebate (143) of the hole (140), and when the hub turns (141) the cam (121) is housed in the rebate (143) of the mounting pivot (116) immobilising it.

Figures 22 and 25 demonstrate the components in the lock (117) which are shown in exploded detail in Figure 21 in the order they occupy when they are coupled together forming part of the said lock (117).

The reinforcing sleeve (118) is mounted on the reinforcing washer (119) which protects the entire the cap (120), against any type of manipulation by hiding the said cap (120) and the cam (121) mounted on the hub (141) inside the hole (140) of the double sleeve (115) on the reinforced chain (135).

The shape of the double sleeve (115) may be seen in Figure 26 along with the mounting pivot (116), which are not claimed as they are conventional parts.

As explained above including the device (10) on any type of vehicle or scooter does no change the balance of the same because of the inclusion of counterweights (22-57) on the device (10). On the ends of the counterweight (22), see Figure 4, bases (47) and (48) respectively are attached, the configuration of these bases on washers (40), is as (47) slightly cylindrical with its upper base being rebated (49), and the lower base being a circular rebate (122) which is housed in the circular rebate (123), whereas the base (48) has a circular rebate (124) in its lower base with the upper base (48) having a cylindrical hole (44).

The bases (47-48) and washers (40) have a central drilled hole through it (46) for a screw (43), see Figures 4 to 7.

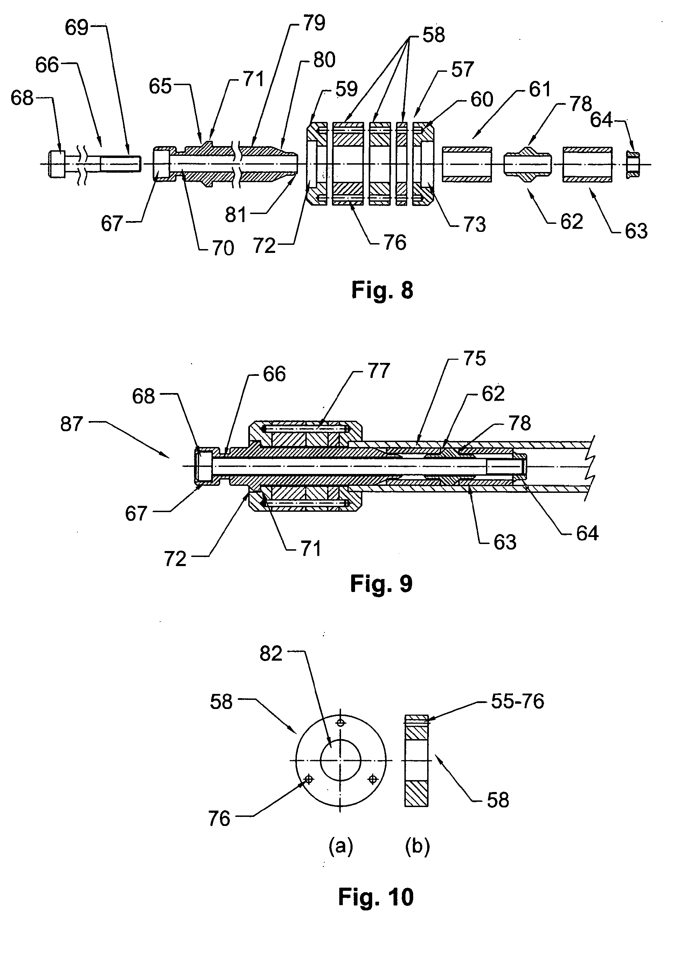

On the end of the counterweights (57), see the Figure 8, there are bases (59-60) respectively, the configuration of these bases on washers (58) is as (59) slightly cylindrical with its upper base having a small hole (72) extending in the opposite direction to the base in another smaller diameter cylindrical hole (124), the opposite base has a ring rebate (125) housing the cylindrical hole (126) of the washer (82), whereas the base (60) has on its lower base, a cylindrical hole (127) extending in the direction of the opposite base in another smaller cylindrical hole (128) in another cylindrical hole (129).

The bases (59-60) and washers (58) have a central drilled hole through it (82) for a screw (66), see Figures 8 and 9.

The function of the counterweights (22-57), see Figures 4 to 9 is to balance the vehicle in its travelling direction at the same time as working with mounting pivots (23-42-87), coupled to one of the ends of the counterweights (22-57) when the said vehicle is a two wheeled scooter, even though the device (10) is also applicable to other vehicles with more than two wheels, the weight (22-57) is easily adjusted because of the design shown in Figures 4, 5, 8 and 9, Figures 4 and 8 show the different parts of (22-57) dismantled, formed by (22-57) by washers (40) and (58) respectively.

On the ends of the counterweights (22) there are bases (47-48) attached respectively, the configuration of these bases on these washers (40), is (47) slightly cylindrical with a rebate (49) on the upper base and a circular rebate (122) on the lower base which houses the circular rebate (123), whereas the base (48) has on its lower base a circular rebate (124) with the upper base (44) having a cylindrical hole (44).

The bases (47-48) and washers (40) have a central drilled hole through it (46) for a screw (43), see Figures 4 to 7.

On the ends of the counterweights (57) there are bases (59-60) attached respectively, the configuration of these bases on these washers (58), is (59) slightly cylindrical with a smaller cylindrical hole (72) extending in the direction of the opposing base in another smaller diameter cylindrical hole (124), the opposite base has a ring shaped rebate (125) emerging into the cylindrical hole (126) of the washer (82), whereas the base (60) has, on its lower base, a cylindrical hole (127) which extends towards the opposite base in another cylindrical hole (128) with a smaller diameter with this being in another cylindrical hole (129).

The bases (59-60) and the washers (58) have a central drilled hole (82) for the screws (66) to pass through, see Figures 8 and 9.

On the ends of the counterweights (22-57) there are bases (47-48) and (59-60) attached respectively, with, in the base (47), a circular rebate (49) housing the skirting (74) of the hook pivot (42), see Figure 4, and in the opposite base (48) there is a low cylindrical hole (44) into which the end of the handle bar (41) is placed. The washers (58) are held in the same way in the counterweight configurations (57) as shown in Figures 8 and 9.

The washers (40-58) see Figures 4 and 8, are formed by a disk with a centrally drilled hole (46) as shown in Figure 10 and (46) allow the screws (43-66) to pass through. Moreover the rods (54-69) pass through all washers (40-58), to the pivot (42-65), being housed inthe end of the handle bar (41-75), with these having athread (45), or a nut (64) as shown in Figures 4 and 8.

The mounting of the counterweights (22-57) allows more than one set up as shown in Figures 4 to 9, although these (two) may be considered to be "technically equivalent". In the first solution, Figures 4 to 7, the pivot (42) acting as a counterweight mounting pivot (22), the same (42) is housed in the base (47) of (22), to hold the skirting (74) of the hook pivot (42) in the rebate (49) of the base (47) of the counterweight (22), whereas in the second solution thebody of the pivot (65), see Figures 8 and 9, is placed in the drilled hole (82) of the counterweight (57) and washer (58), and inside the handle bar (75), with the assistance of rubber pipes (61-63) the intermediate sleeve (62) and the hexagonal nut or end stop (64).

The body of the pivot (65) which works as a mounting pivot (87) is formed by a slightly cylindrical body (79), has a protrusion (71) housing and butting up to the hole (72) in the base (59), whereas the opposite end of (65), the conical area (80) in housed by the end area (81) also conical in the rubber pipe (61) and this in turn is housed in the slightly cylindrical intermediate sleeve (62) with a protrusion (78), to separate the pipes (61-63), immobilizing the whole set as shown in Figures 8 and 9 by screws (66) the threaded stem of which (69) has a hexagonal nut or end stop (64) screwed onto it by the clout nail (68).

In the event that this device (10) is to be used with one single chain for example the (11), the handle bar is prepared (90-93) by placing a mounting pivot (89-92) inside it and placing between the handle bar and mounting pivot (99), immobilising (89-92) to (90-93) using the header (88-91), by axially pressing on the same with a press, see Figures 11 to 16.

The coupling tube (88) is a cylindrical body with no bases and centrally drilled with a ridge (98) on one side and a drilled hole (100). Into this drilled hole (100) the tilting mounting is assembled (101), which (101) is held to the chain (11) by appropriate means, see Figures 11 to 14.

To prevent any misuse of the device (10) in the set up shown in 11 to 14, the header (88 to 91) is sealed with a cap (96), see Figure 19, the cylindrical section of which (102) is placed inside the header (88) through one of its ends, as shown in Figures 12-14.

In a similar way as shown in Figures 16a and 16b, the sleeve is housed (91) in the mounting pivot (92) however with a retaining washer (94) with theconfiguration shown in Figure 17, in the rebate (110) of this mounting pivot (92), see Figure 16b.

The immobilising action of the retaining washers (94-95) as shown in the Figures make them act as pressure washer, that is to say open and once their ends are placed in the rebate (110) of the mounting pivot (92) they expand outwards.

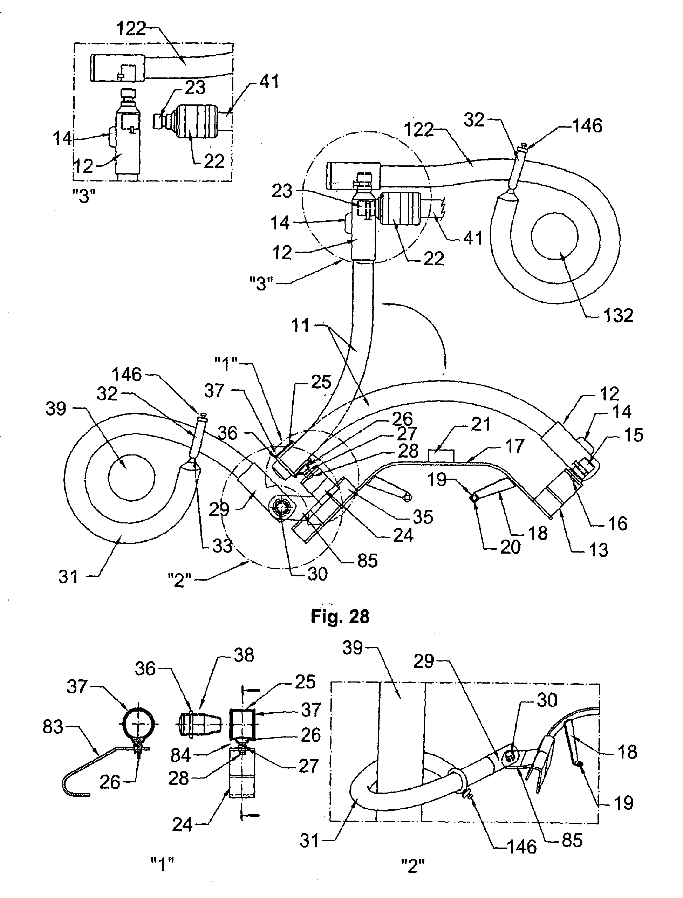

Invention Patent No. 200603228 describes a device to immobilise vehicles to one or more fixed points (253-254) external to the vehicle and to a moving point on the vehicle such as the end of the handle bar (255), using the combination of a plate (256) jointed to the vehicle's chassis with legs (257), which are jointed, the chains (258-259), using a terminal (260) and a tab (261) held to the mounting support (262), immobilising the chain (258) to the handle bar (255), or a fixed part such as the terminal (263) as shown in Figure 28 of this patents with detailed drawings 1, 2, and 3.

The improvements in this application refer to modifications in the aforementioned headers (280) and the tilting mounting (277) fixed to its plate (261) as in Figure 1 in addition to the mounting (277) on this plate (261).

In one of the preferred implementations of this invention and as can be seen in Figure 3, the mounting (276) has a hole (168) inside its slightly prismatic body with an entry in its opening (52), and another hole (36) with an entry in its opening (53), with these openings (52-53) being at 90°, the first hole (168) receives the mounting pivot (162), the features of which may be seen in Figure la, with entry into the opening (52), and the second hole (173) receives the end of a conventional chain not shown in the Figures into its opening (53).

The mounting pivot (162), the features of which may be seen in Figures 1a and 2, are held in the hole (168) of the mounting (280), by the eccentric action (170) of the lock (173) caused by the user. This lock is located on the larger base of (280), and as shown in Figure 3.

The mounting pivot (162) as shown in Figures 1a and 2, has a slightly cylindrical body with a side surface which has been machined in sections, the first part of which is formed by the cylindrical header (169) which extending to a second also cylindrical section with a slot (173), which extending to a cylindrical protrusion (174), with this in a cylindrical part (175), which extends to a cylindrical area (176), which extends to a protruding cylindrical area (177), which extends to a cylindrical area (178) which extends to a conical area (179), which extends to a cylindrical area (180) and into a conical area (181) which ends at the base (163).

The pivot mounting (162) has a longitudinal drilled hole inside (182), which allows it to be mounted on the handle bar (255), see Figure 1, whereas the other end the header (169) is housed in the hole (168) of the mounting (280), as shown in detail in Figure 3.

In addition to its function as a mounting pivot (162) and because of its special mechanism described above for its different parts, its cylindrical section (175) receives the expansion spring (30) surrounding (39), the body of which (167) is an open washer as shown in Figure 6.b, passing through (167) when closed, see Figure 6.a, when the spring (167) receives the plate (166) on its outside, as may be seen in Figure 3.c.

The plate (166) as shown in Figure 5 has a slightly prismatic body with its larger bases having drilled holes (183) and (184). The plate (166) is jointed on the mounting pivot (162) and acts as a fixing point for the chain (171), as may be seen in Figure 4. Alternatively the plate (166) may receive a terminal (186) through its drilled hole (184), this terminal (186) holds the end of chain link (51), as shown in Figure 7.

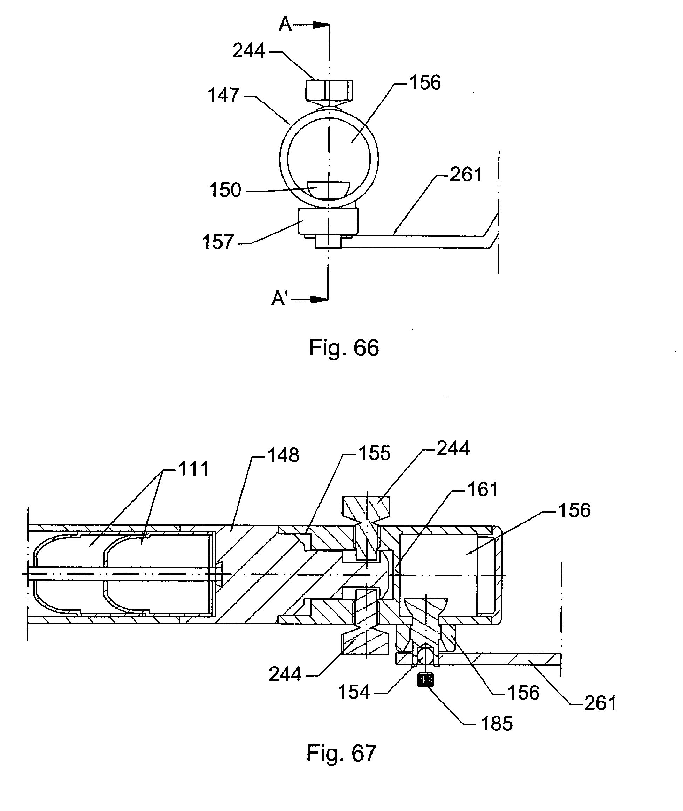

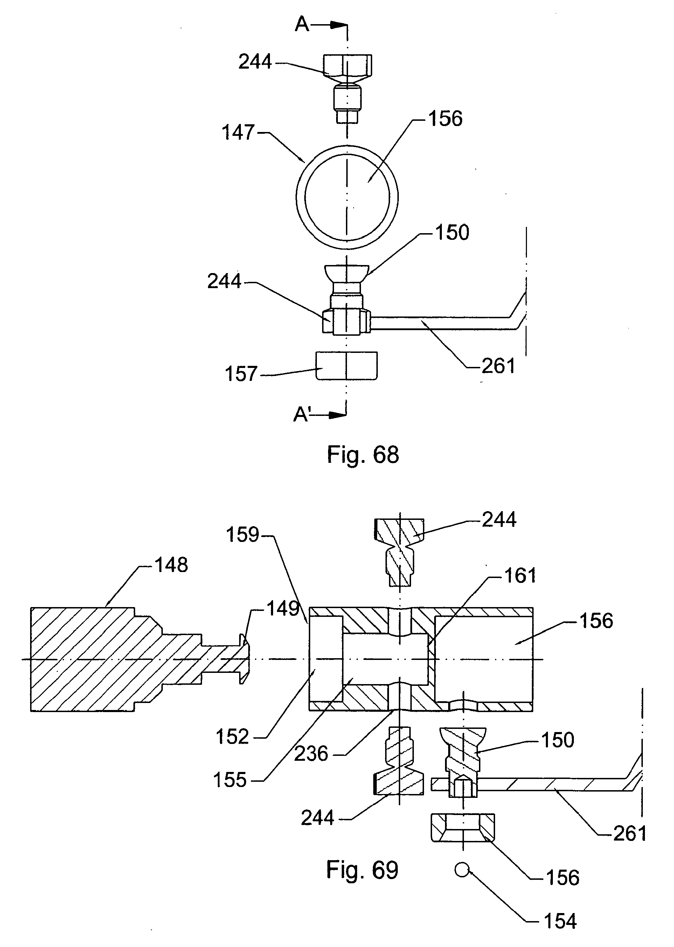

Alternatively the plate shown in Figures 4, 5 and 7 by (166), may be manufactured in the shape of a disk as shown in Figures 67 to 69, where the plate (166) now in its circular version differentiated by (204), has two drilled holes (206-207) which perpendicularly cross over its bases, so that the first drilled hole (206) has a first conical section (209) which extends into a second cylindrical area (208), so that the drilled hole (206) allows the mounting pivot (162) to enter and a conventional chain (171) to enter the drilled hole (207).

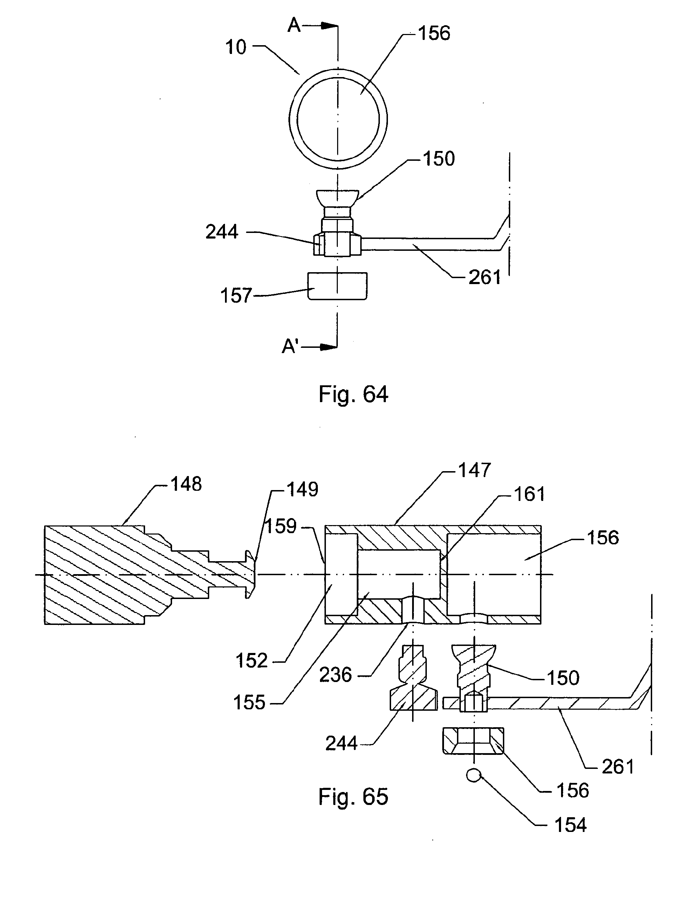

This chain (171) on one of its ends and as shown in Figure 8, the furthest away from (280) may hold a terminal (186) the configuration and characteristics of which may be seen in Figures 64, 65 and 66. These show the first cylindrical area (241) which extends according to the wings (201) with a drilled hole (203) and a hole in them (205), into which a breaking screw (not shown in the Figures) may be screwed.

In another of the improvements in this invention as shown in Figure 10, the sleeve (147) includes a mounting (150) tilting on a hole (56), through the hole (156) protected by the anti-saw sleeve (157), and a mounting (148) via the opening (159), which is held in the hole (155) by an Allen stay bolt (151), crossing (151) the hole (160) the head of which is protected against misuse by a ball (154) or ribbed pin (185). The mounting stay bolt (151) immobilises the header (149) of (148) by being housed in the rebate (234) of (148), as shown in Figure 10. In turn the mounting (148) retains the links (247) of a conventional chain, for example (259).

On the tilting mounting (150), as shown in Figure 10, a plate (261) is held by a rivet onto the mounting support (262), as shown in Figure 1. This combination of (150-261) allows the chain (259) to turn around the fixed point (253) using the pivot mounting (249).

Another equivalent implementation of the sleeve (147) shown in Figures 12 and 14, is as shown in Figures 14 and 16, in which two Allen stay bolts are used (151) instead of one, attached vertically opposing each other entering by the holes (160), in each sleeve (147). To prevent any kind of misuse on the tilting mounting has a ball (154) or ribbed pin (185) attached to it.

Another equivalent implementation of the sleeve (147) shown in Figures 12 and 14, is as shown in Figures 18 and 20, in which a ribbed still pin (242), is attached in the hole (155) the sleeve (147) through the hole (235), in the hole (155), for the mounting (148), in its rebate (234), in the said hole (155).

Another equivalent implementation of the sleeve (147) shown in Figures 12 and 14, is as shown in Figures 22 and 24, in which two ribbed steel pins are used (22), is attached in the hole (155) the sleeve (147) through the hole (235), in the hole (155), for the mounting (148), in its rebate (234), in the said hole (155).

Another equivalent implementation of the sleeve (147) shown in Figures 12 and 14, is as shown in Figures 26 and 28, in which an elastic pin (243), is attached in the hole (155) the sleeve (147) through the hole (236), for the mounting (148), in its rebate (234), in the said hole (155).

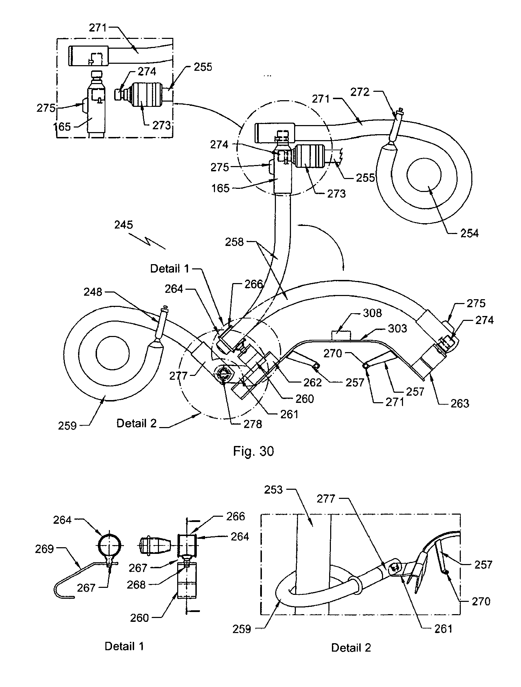

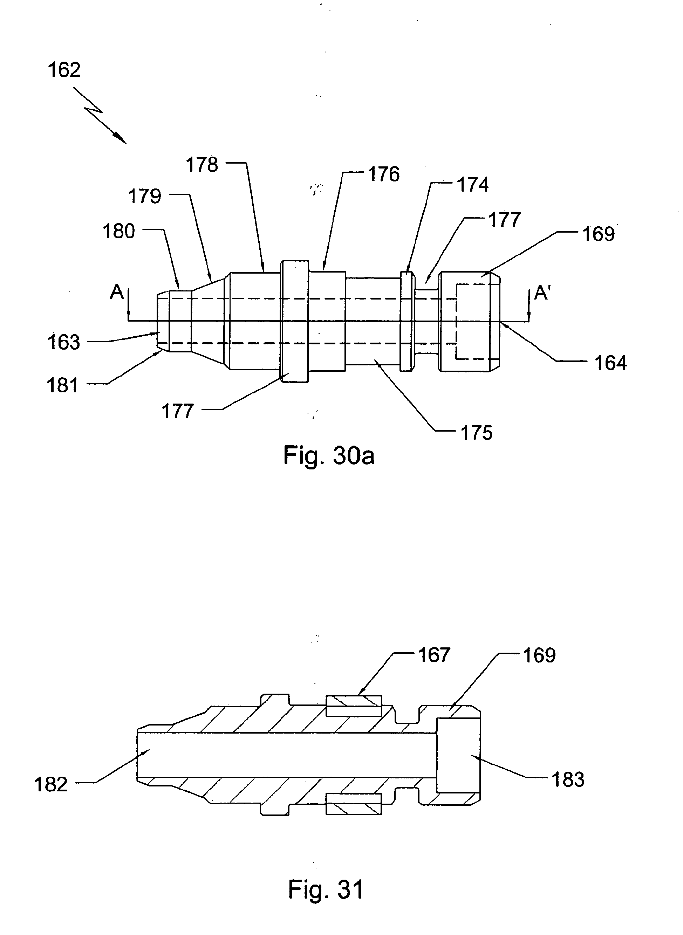

Another equivalent implementation of the sleeve (147) shown in Figures 12 and 14, is as shown in Figures 30 and 32, in which two elastic pins (203), are attached in the hole (155) the sleeve (147) through the hole (236), for the mounting (148), in its rebate (234), in the said hole (155).

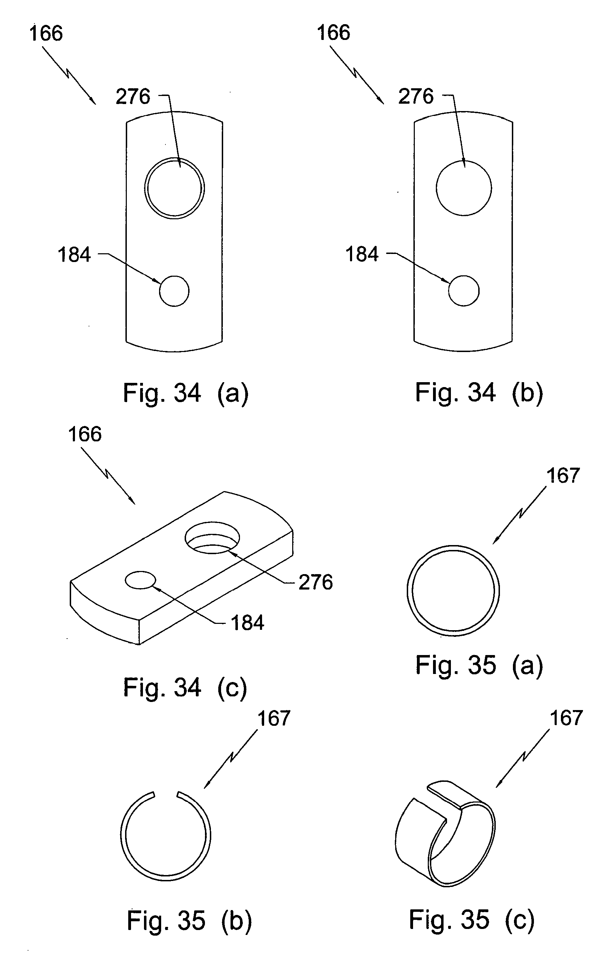

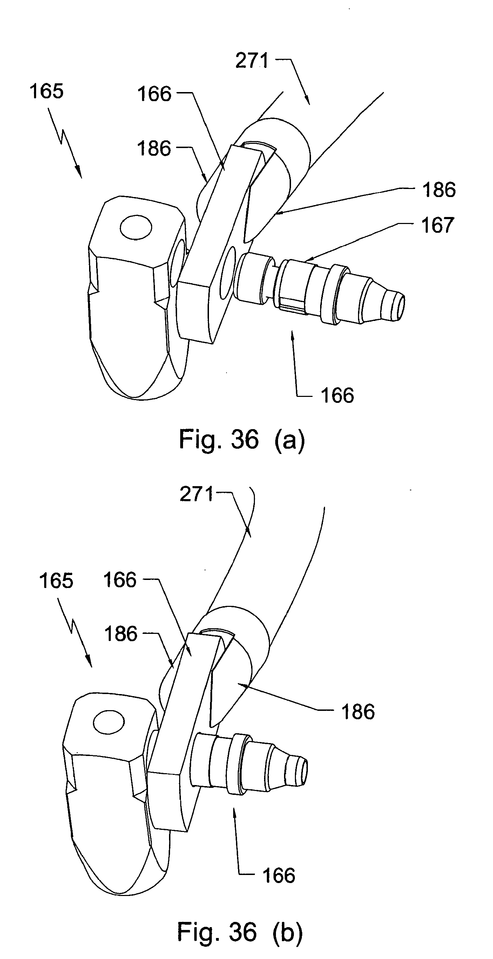

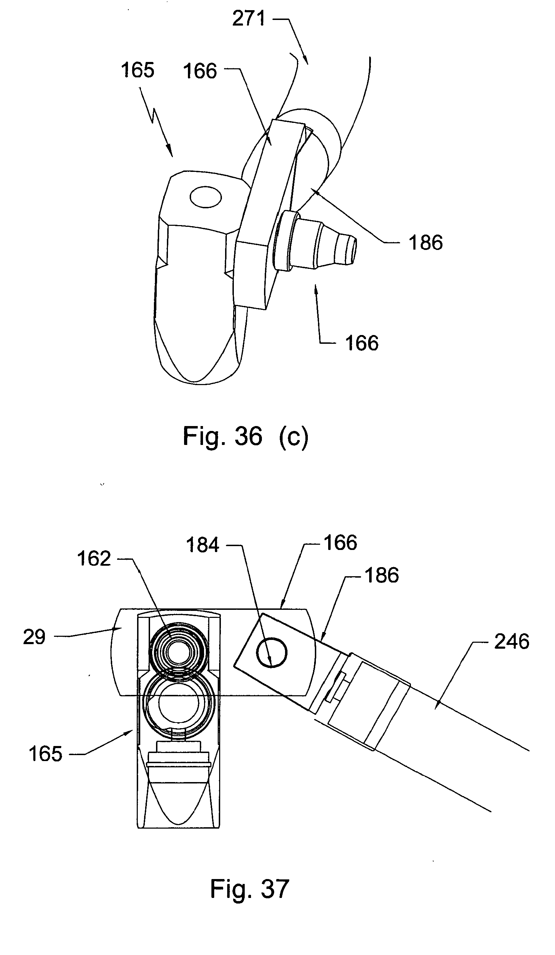

Another equivalent implementation of the sleeve (147) shown in Figures 12 and 14, is as shown in Figures 34 and 36, in which an breaking screw (244), is attached in the hole (155) the sleeve (147) through the hole (236), for the mounting (148), in its rebate (234), in the said hole (155).

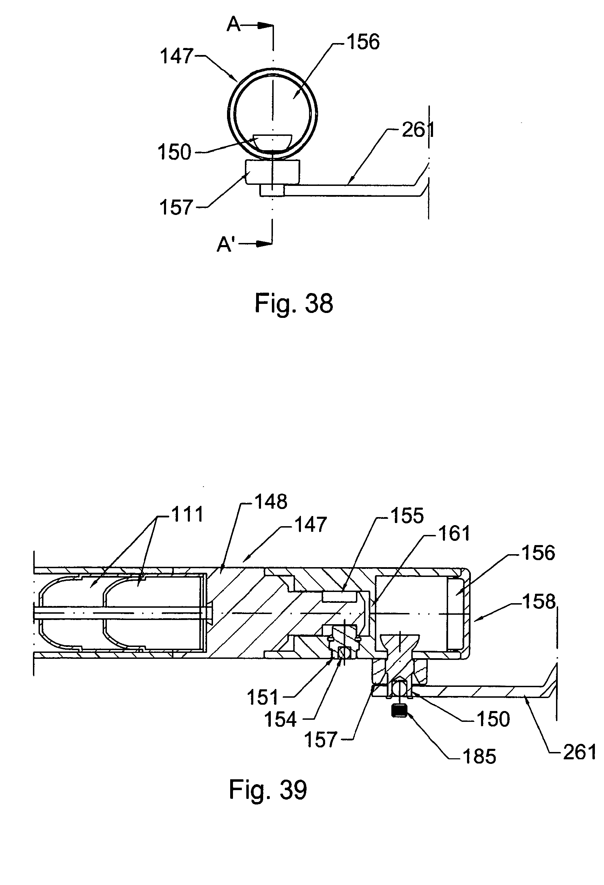

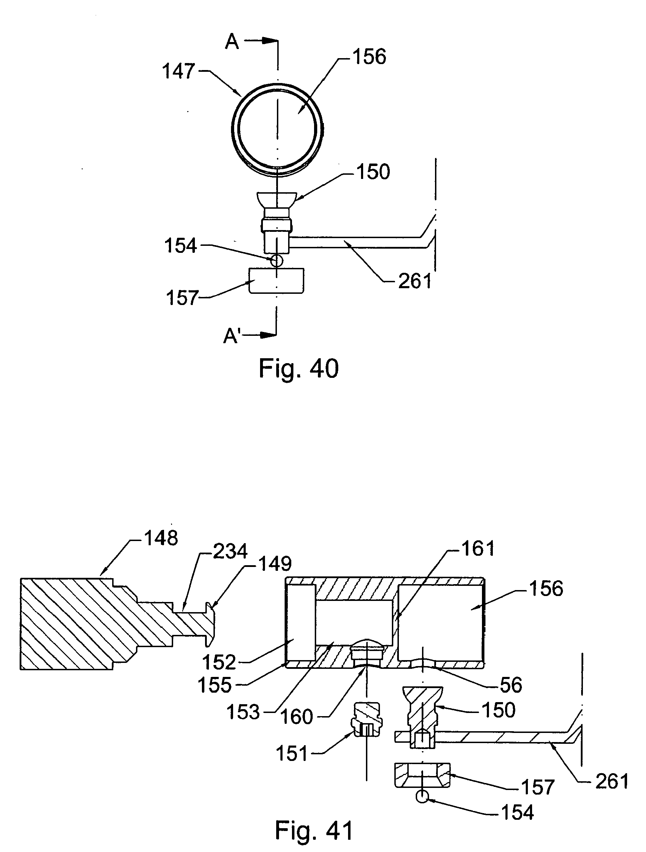

Another equivalent implementation of the sleeve(147) shown in Figures 12 and 14, is as shown in Figures 38 and 40, in which two breaking screws (244), are attached in an opposing longitudinal position in the hole (155) through the hole (236), for the mounting (148), in its rebate (234), in the said hole (155).

In all of the implementations of the sleeve (147) the same main parts are used, such as the mounting (148), the tilting mounting (150), the rivet (268), the anti-saw sleeve (157), with only the mounting retaining parts varying (148). Parts such as, Allen stay bolts (151), ribbed steel pins (242), elastic pins (243) or breaking screws (244) may be used depending on the preferences of the market.

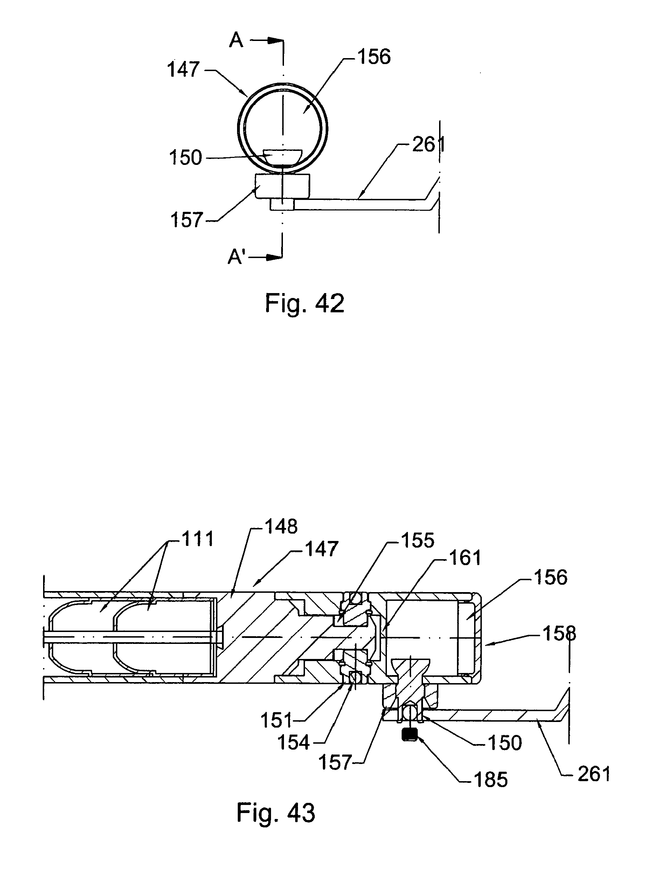

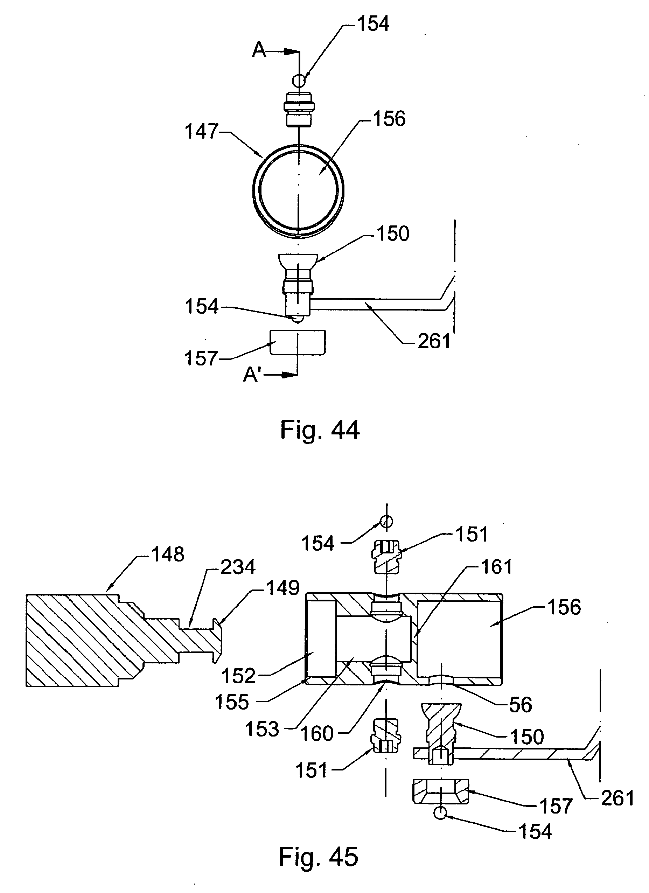

In another improvement of this invention as shown in Figures 43 and 44, the mounting (148) attached to the end of the chain (258), see Figure 1, is immobilised to a mounting pivot (267), using a sleeve (194) the cylindrical section of which (195) has two hole (193) aligned and opposed so that they house two studs (192), in opposing positions aligned vertically surrounding the sleeve (194) using the ring (266) on the ends of which there are lips (265). These lips (264) butt up against the clout nail (196) on the said sleeve (194).

The studs (192) immobilise the mounting (148) to penetrate into the rebate (234). In turn the ring (266) may turn on the plate (269), as seen in Figures 41 and 42, due to the mounting (267) housed in the conical section (237), protected (267) against acts of vandalism by an anti-saw sleeve (190). On the mounting (148) there are links (247) of a conventional chain attached by appropriate means, as shown in Figure 43.

In turn, on one of the end of the tilting mounting (267) there is a tab (191) for the plate strip (269), see detail (1) of Figure 1, so that the chain (258) immobilized at one end by the ring (266) may be immobilized top the handle bar (255) or to a terminal (263).

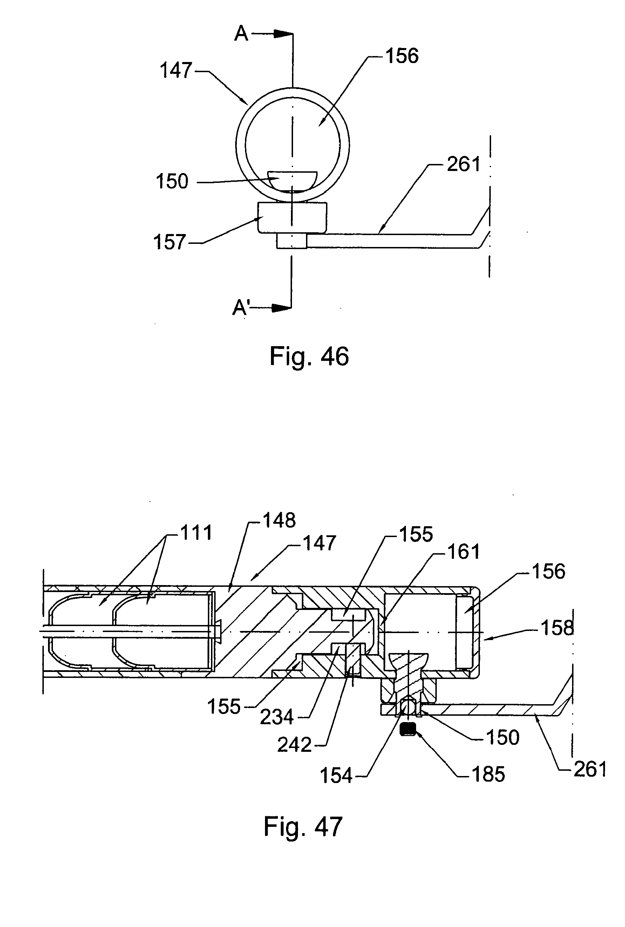

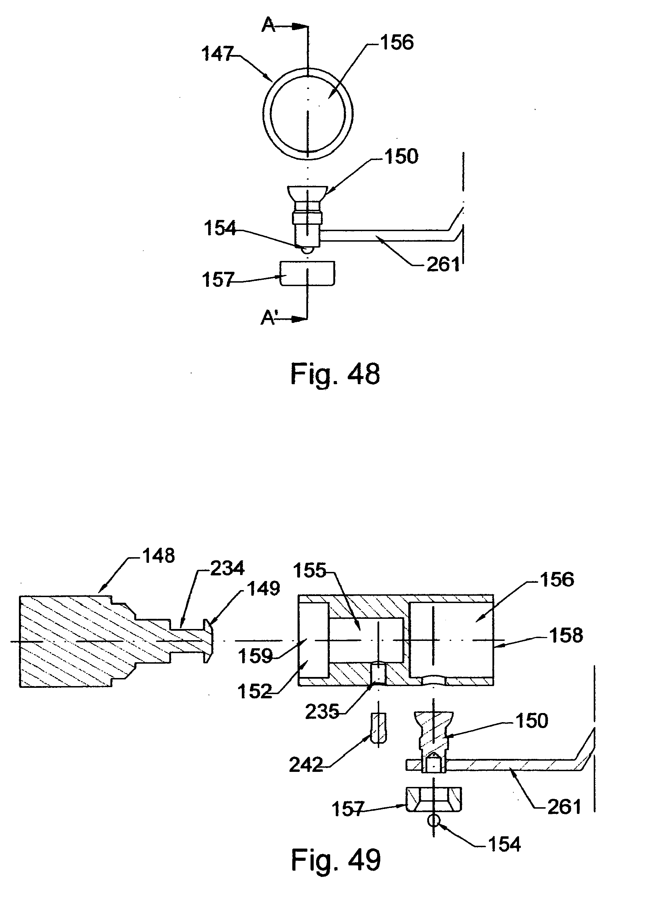

In another equivalent implementation shown in Figures 43 and 44, and as may be seen in Figures 47 and 48, the mounting (148) is immobilised to a pivot mounting (267), using a sleeve (194) the cylindrical section of which (195) has two holes (193) housing two elastic pins (199), in opposing positions aligned vertically surrounding the sleeve (194) using the ring (266) on the ends of which there are lips (264). The studs (192) immobilise the mounting (148) to penetrate into the rebate (234). In turn the ring (266) may turn on the plate (269), as seen in Figures 45 and 46, due to the mounting (267) housed in the conical section (237), protected (267) against acts of vandalism by an anti-saw sleeve (190).

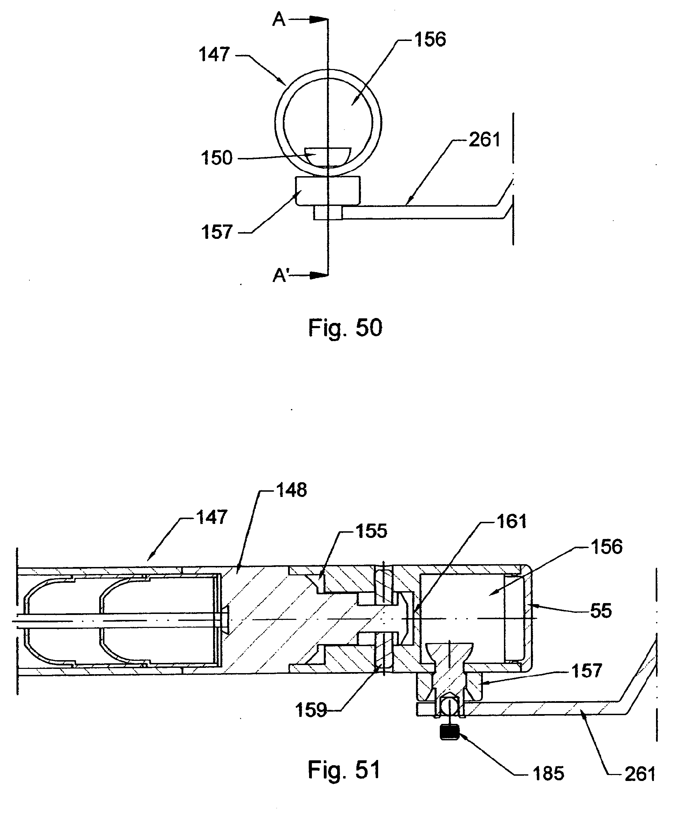

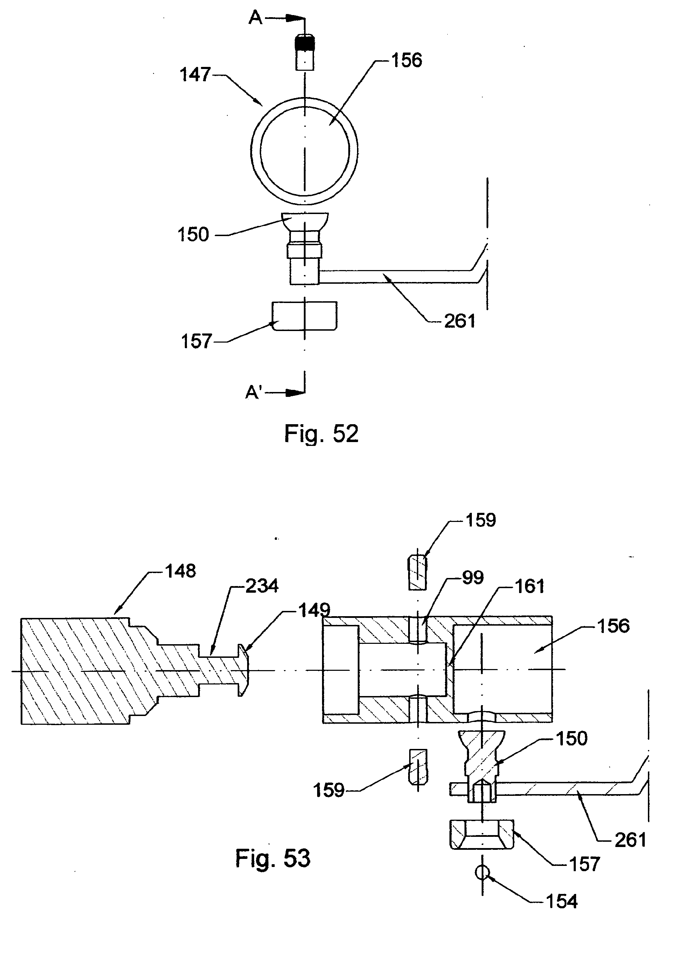

In another equivalent implementation shown in Figures 43 and 44, and as may be seen in Figures 51 and 52, the mounting (148) is immobilised to a pivot mounting (267), using a sleeve (194) the cylindrical section of which (195) has two holes (193) housing two breaking screws (244), in opposing positions aligned vertically surrounding the mounting (148) using the ring (266) on the ends of which there are lips (264). The breaking screws (244) immobilise the mounting (148) to penetrate into the rebate (234). In turn the ring (266)may turn on the plate (269), as seen in Figures 49 and 50, due to the mounting (313) housed in the conical section (237), protected (267) against acts of vandalism by an anti-saw sleeve (190).

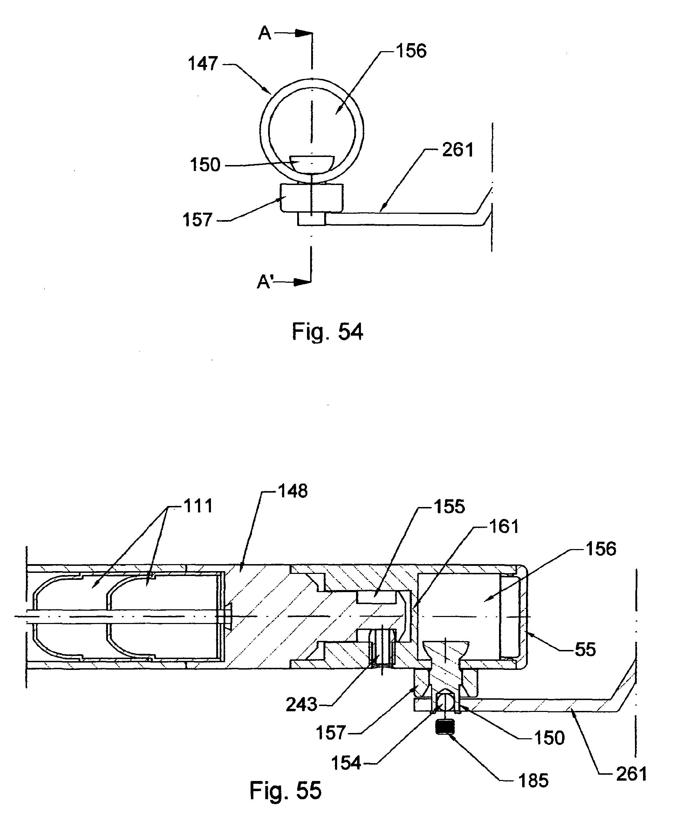

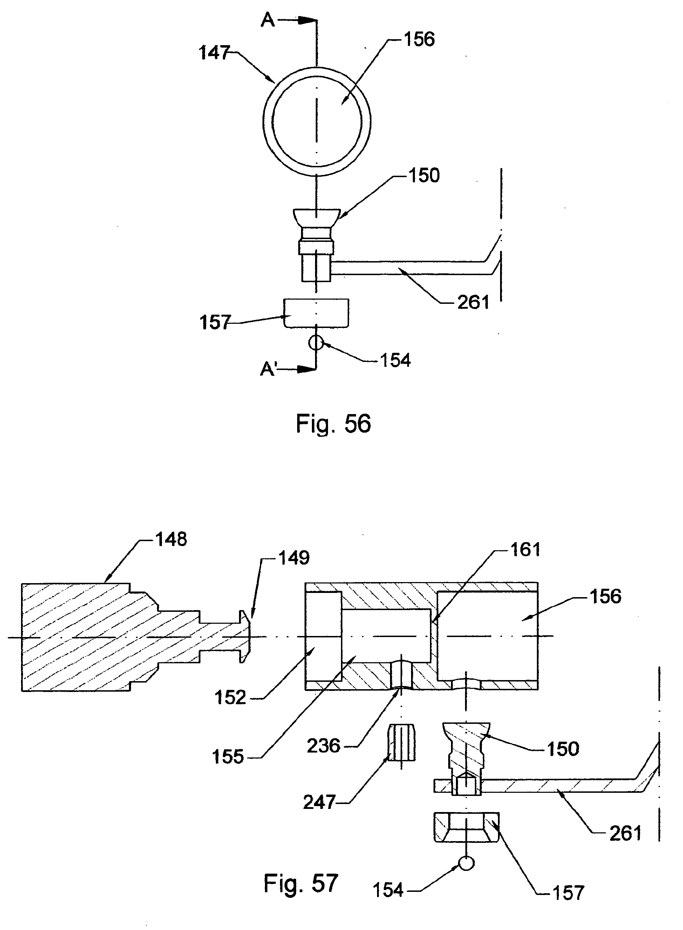

In another equivalent implementation shown inFigures 43 and 44, and as may be seen in Figures 55 and 56, the mounting (148) is immobilised to a pivot mounting (267), using a sleeve (194) the cylindrical section of which (195) has two holes (193) housing two Allen studs (151), in opposing positions aligned vertically surrounding the sleeve (194) using the ring (266) on the ends of which there are lips (264). The Allen studs (151) immobilise the mounting (148) to penetrate into the rebate (234). In turn the ring (266) may turn on the plate (269), as seen in Figures 53 and 54, due to the mounting (313) housed in the conical section (231), protected (313) against acts of vandalism by an anti-saw sleeve (190).

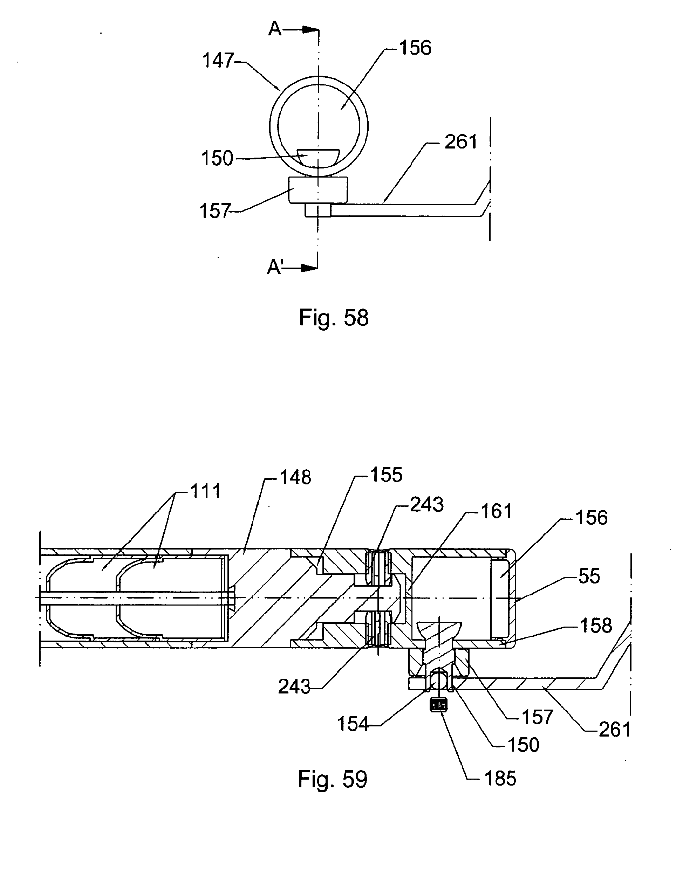

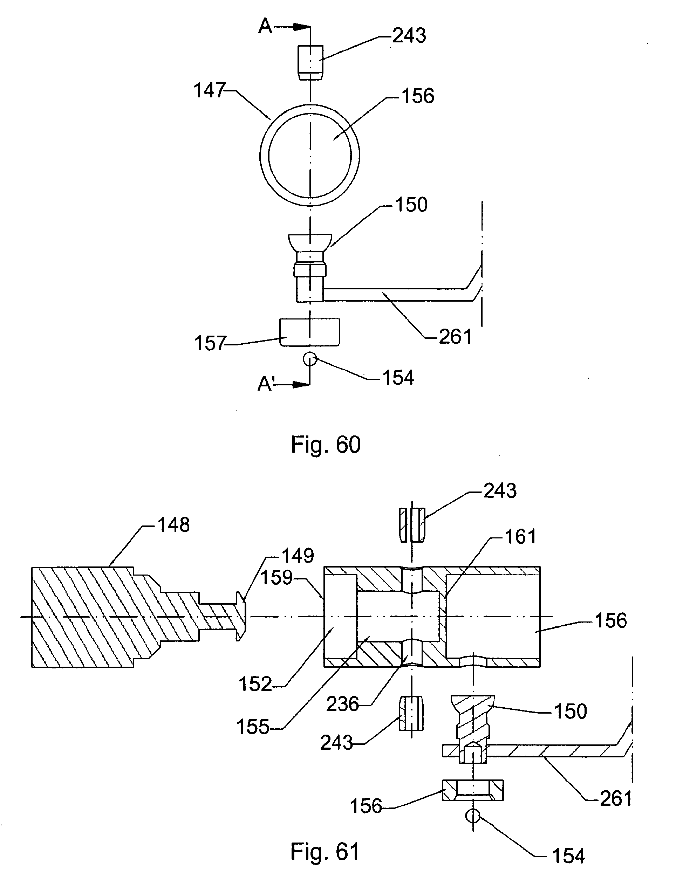

In another equivalent implementation shown inFigures 43 and 44, and as may be seen in Figures 58 and 60, the mounting (148) is immobilised to a pivot mounting (267), using a sleeve (194) the cylindrical section of which (195) has two holes (193) in which one of them is housed, an Allen stud (151), surrounding the sleeve (194) using the ring (266) on the ends of which there are lips (264). The Allen studs (151) immobilise the mounting (148) to penetrate into the rebate (234). In turn the ring (266) may turn on the plate (269), as seen in Figures 57 and 58, due to the mounting (313) housed in the conical section (237), protected (313) against acts of vandalism by an anti-saw sleeve (190).

In all implementations of the sleeve (194), the same main parts are used such as the mounting (148), the tilting mounting (313), rivets with ball (154) or cap (265).

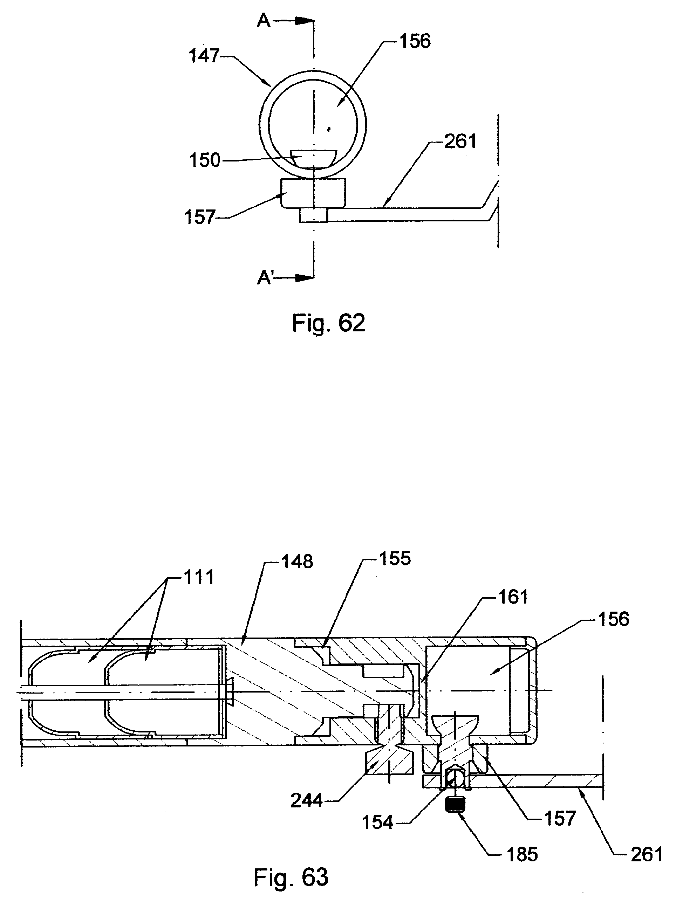

In another improvement of this invention as shown in Figures 61, 62 and 63, the tilting mounting (277) which is located as shown in Figure 1, held to the tab (261) on the plate (269), has configuration formed by the first cylindrical section (238) which extends to the toothed section (239), crossing both (238-239) longitudinally via the drilled hole (240). The cylindrical section (238) has two wings (201) crossed by the breaking screw (278) which crosses the tab (261) by the relevant hole (not shown in the Figures). The toothed section (239) may be jointed or a cable or chain formed by links (247), immobilised in the drilled hole (240), by beading (250), with such links being inside a cover (251).

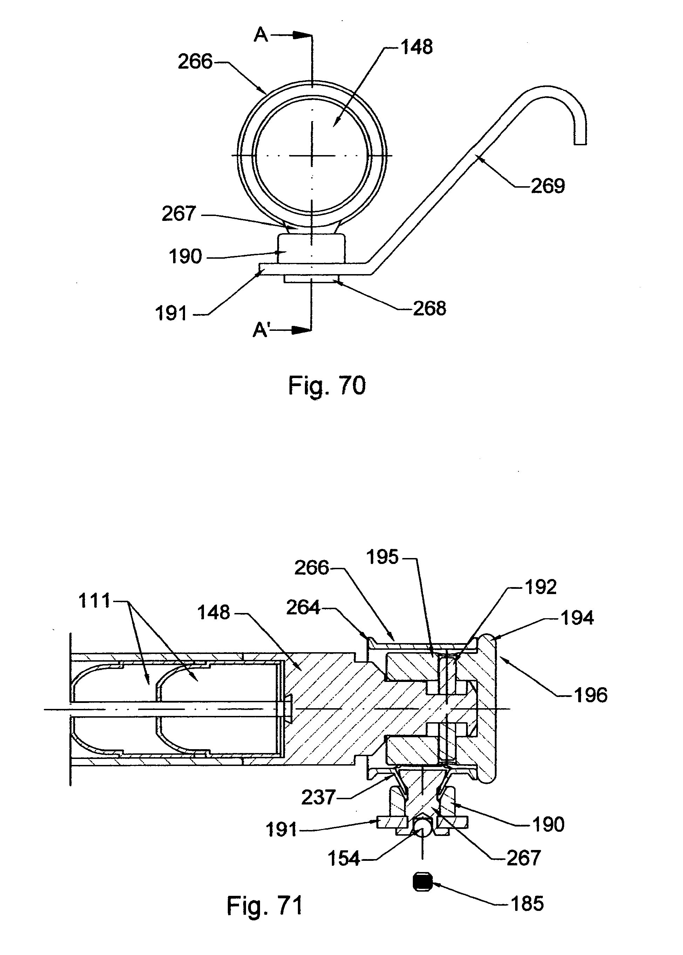

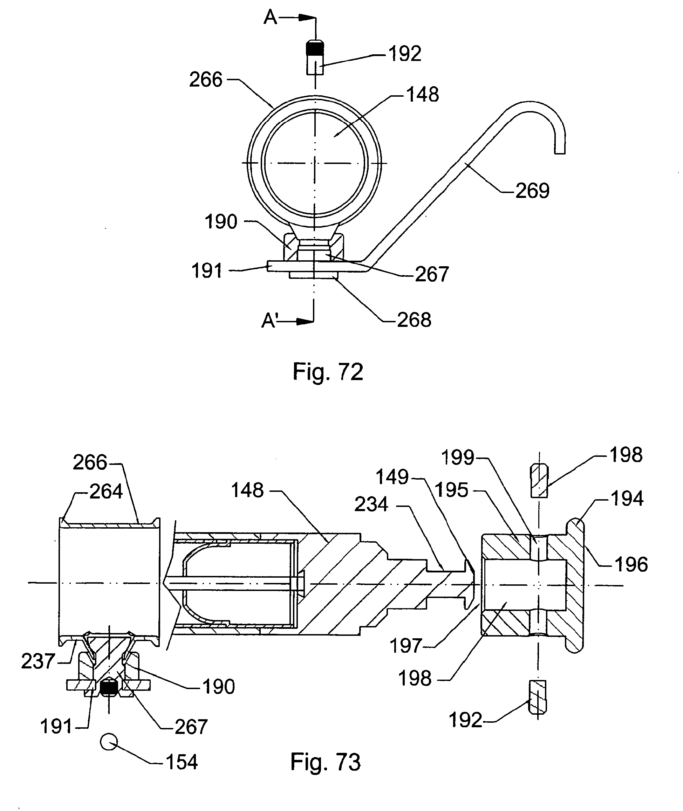

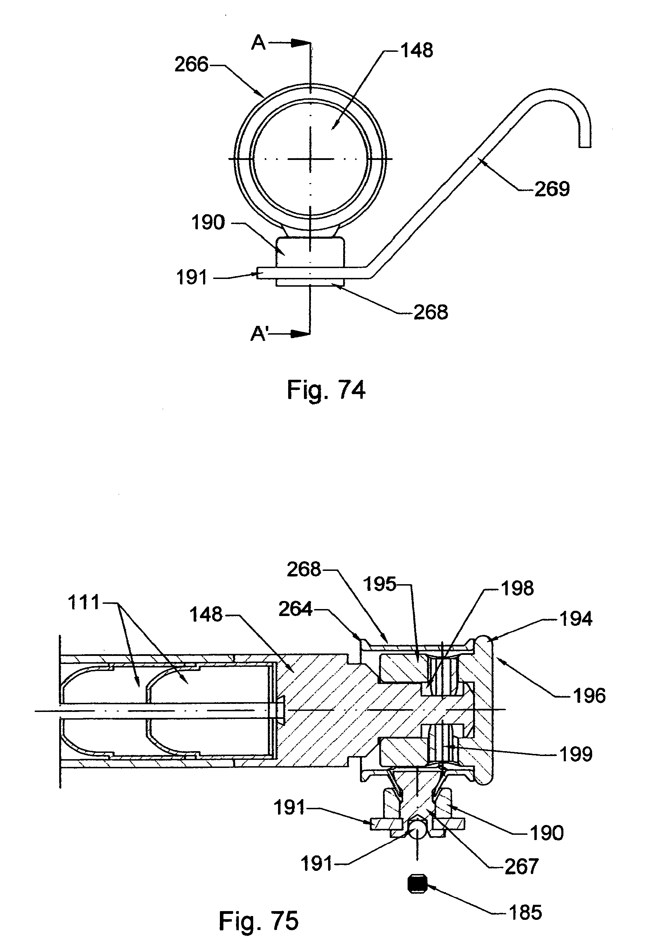

In another improvement of this invention as shown in Figures 70 to 74, the chain (259), according to Figure 1, it may be jointed with regard to the plate (303) using the mounting (215). To do this, a tilting terminal has been designed (210), which, as shown in Figure 74, has an external cylindrical configuration the side surface of which (222) emerges from this mounting (215) the stud of which (220) crosses the plate (261) and receives the ball (154) to prevent any form of tampering. The stud (220) has a plate (308), riveted (220) and placed inside the ball (154) or cap (265) to prevent any form of tampering.

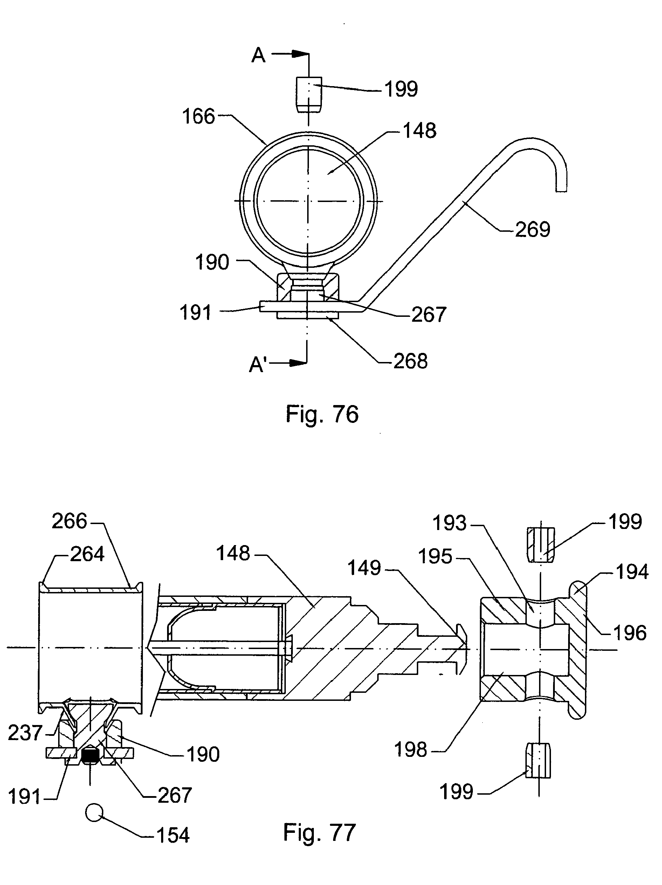

The tilting terminal (210) has two holes inside (211-212), in the hole (211) and the opening (224) holds the chain (258) or similar input, whereas the hole (212) in the opening (89) holds the aforementioned mounting (215) machined on the side surface with rebates (214) which hold the elastic pin (223), closing the hole (212) using the cap (217) which has a circular skirting (218) extending radially outwards (219). Figures 75 to 78 show this implementation before the elastic pin (223) enters the drilled hole (213), in the tilting terminal (210) and in the side surface (222).

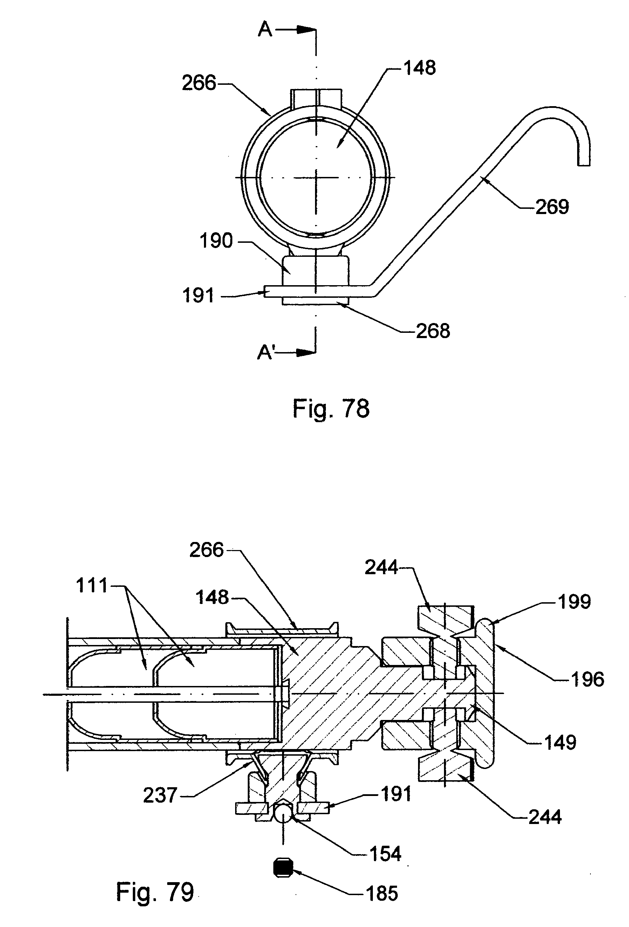

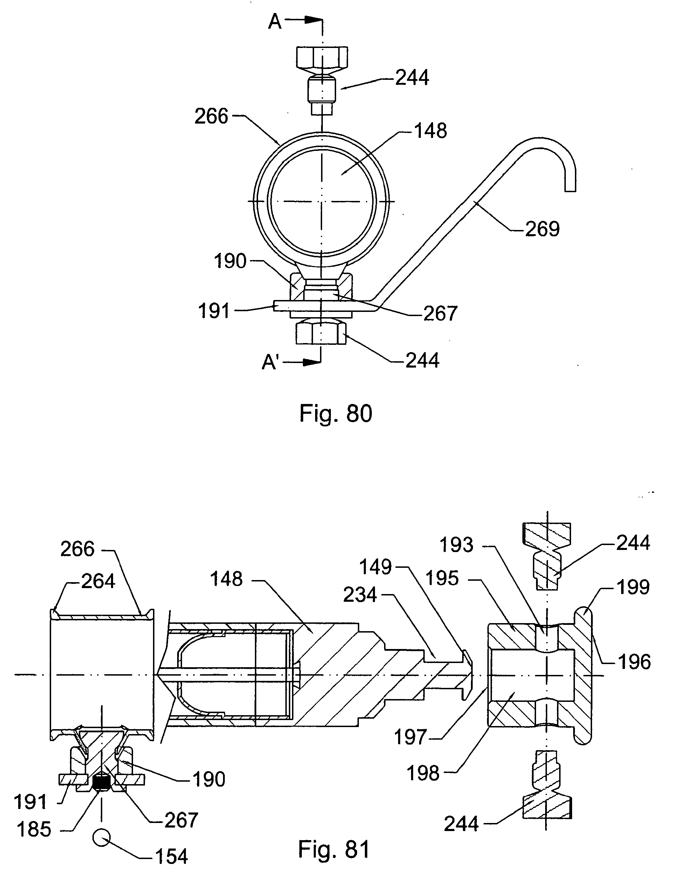

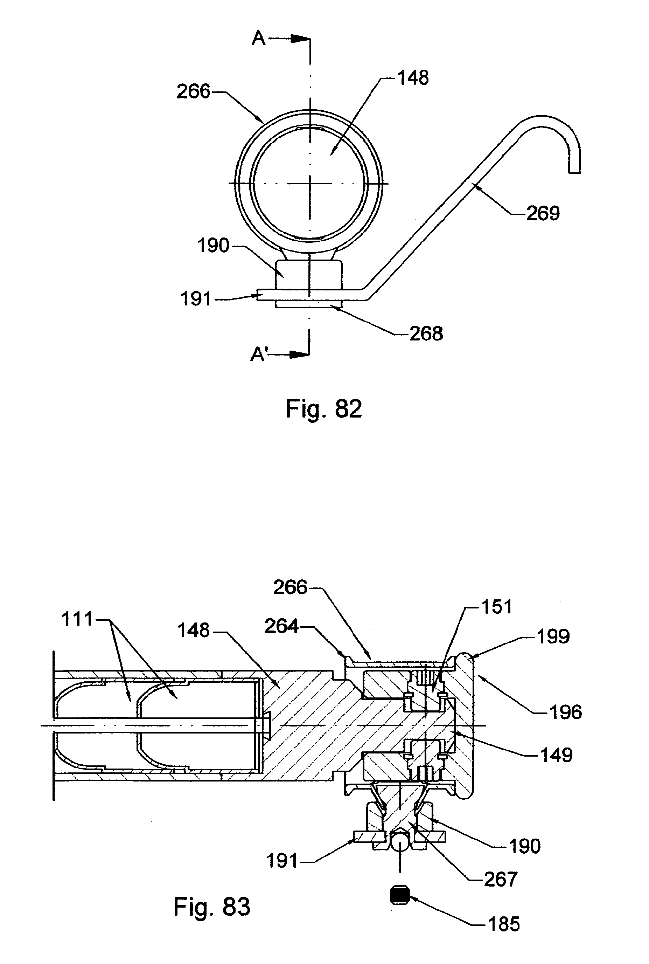

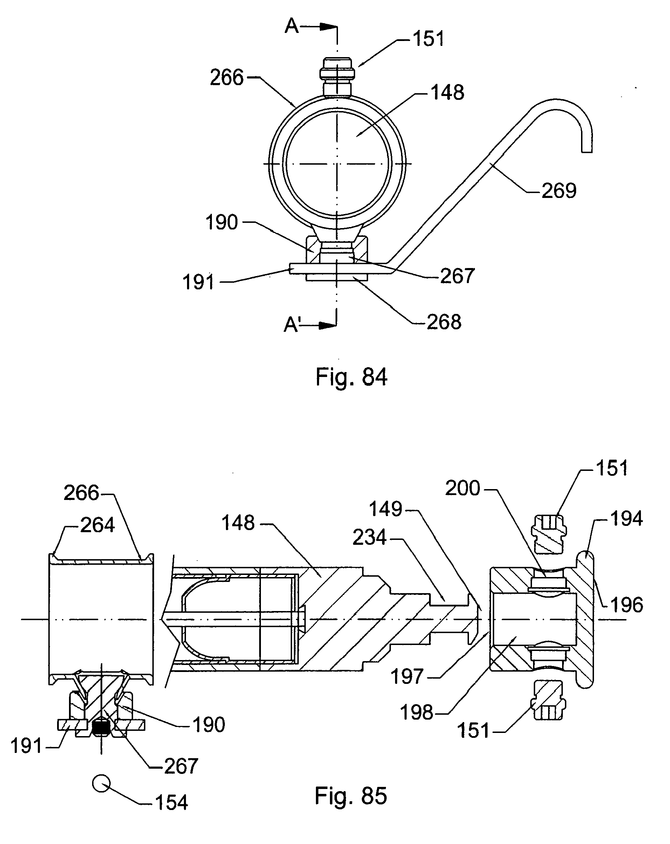

In another equivalent implementation shown in Figures 70 to 74, see Figures 79 to 82, the mounting (215) is equipped with two elastic pins (223), instead of one with two drilled holes (213) instead of one in the side surface (222). Figures 83 to 86 shows this implementation before the elastic pins (223) are placed inside through the drilled holes (213).

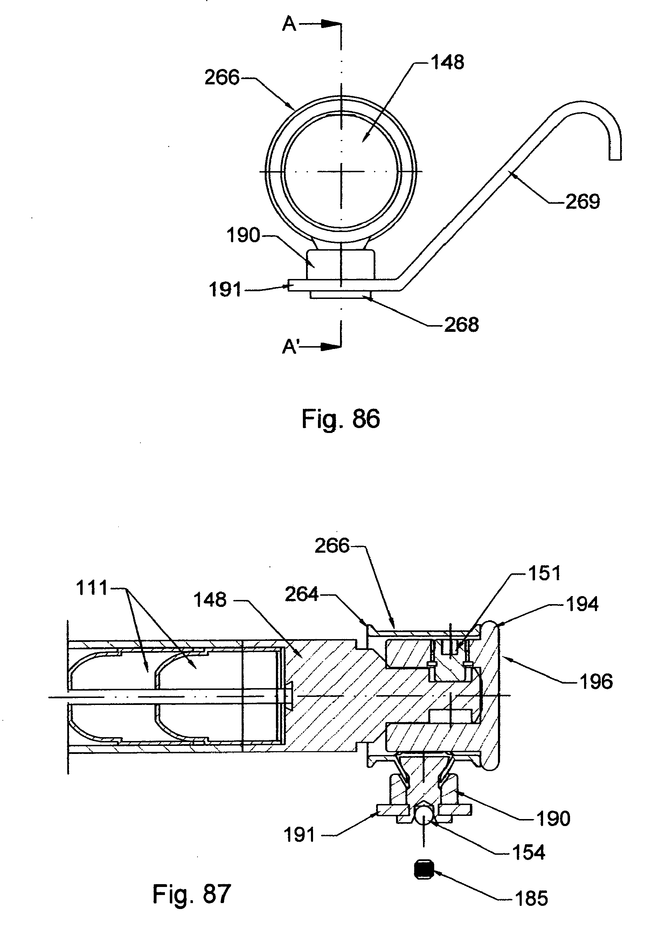

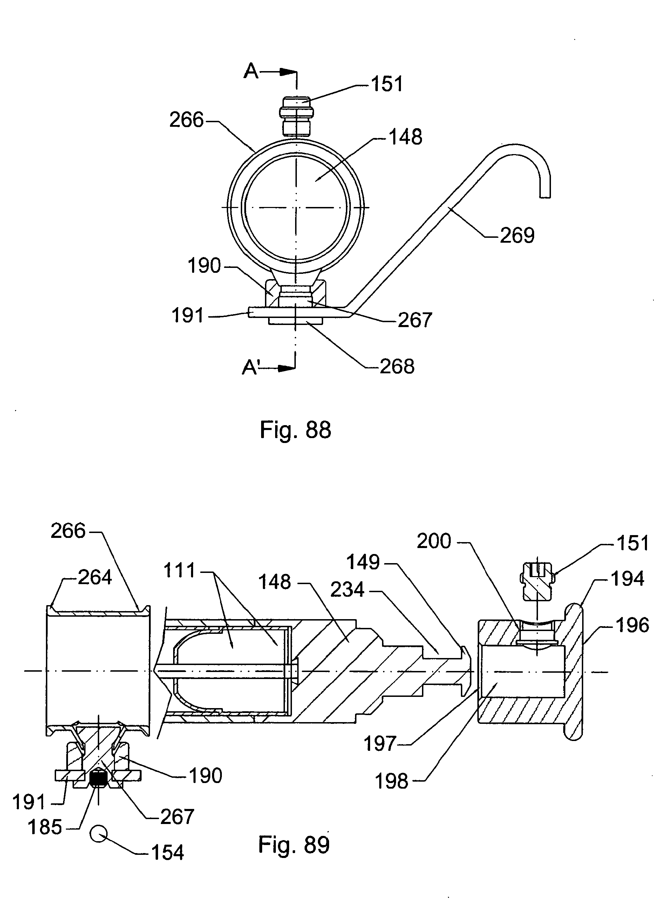

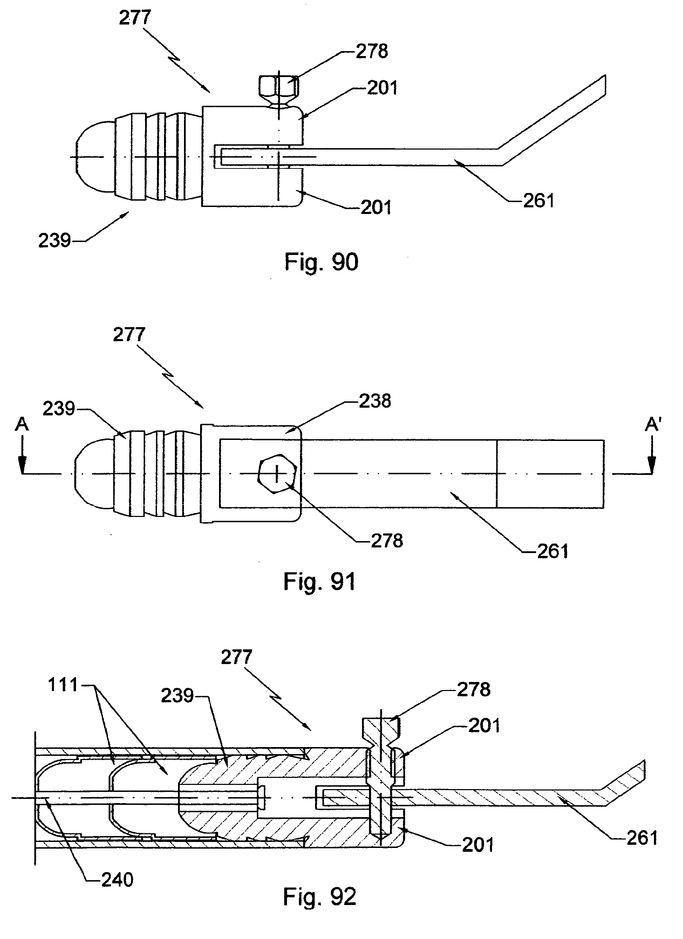

In another equivalent implementation shown in Figures 70 to 74, see Figures 87 to 90, a breaking screw (226) is used as a retaining part on the tilting mounting (215).

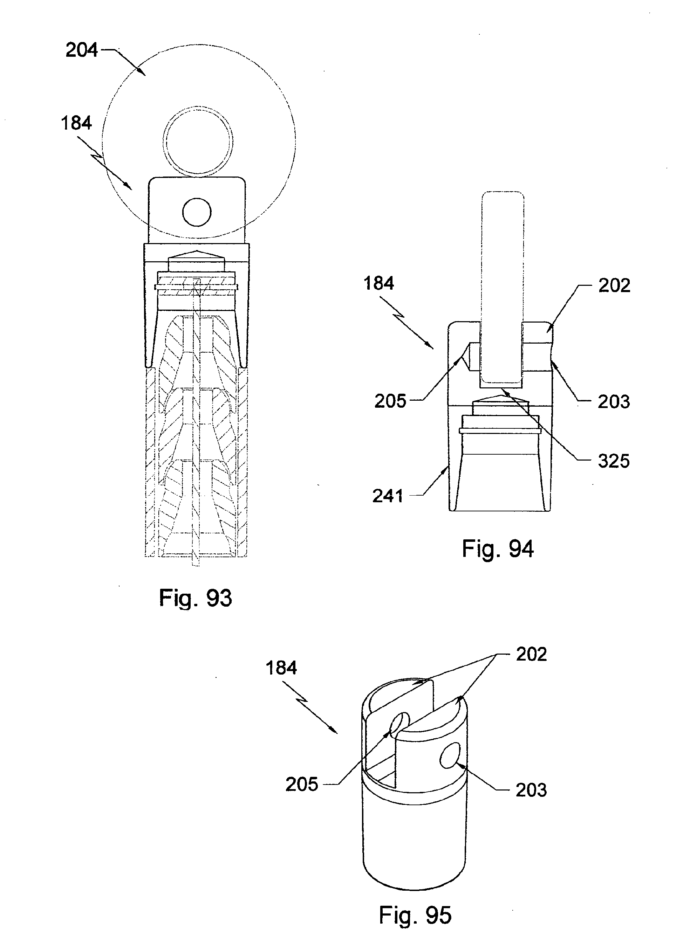

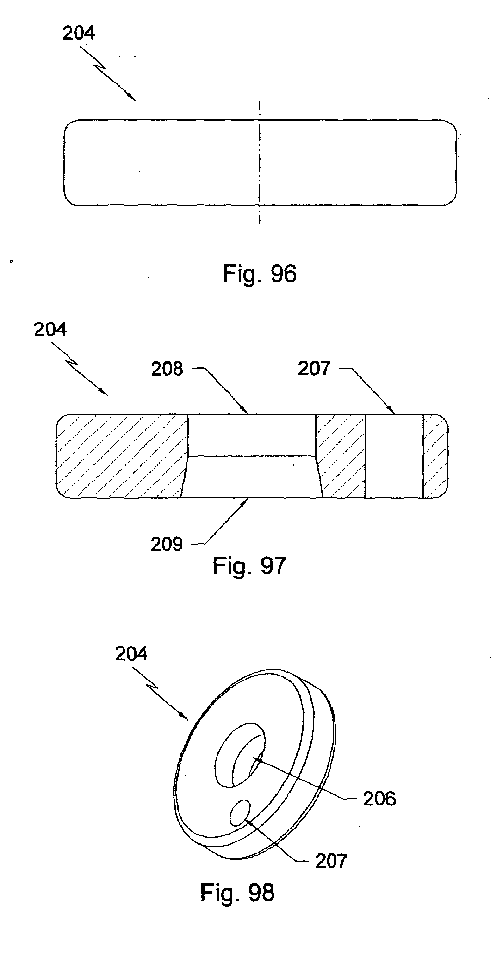

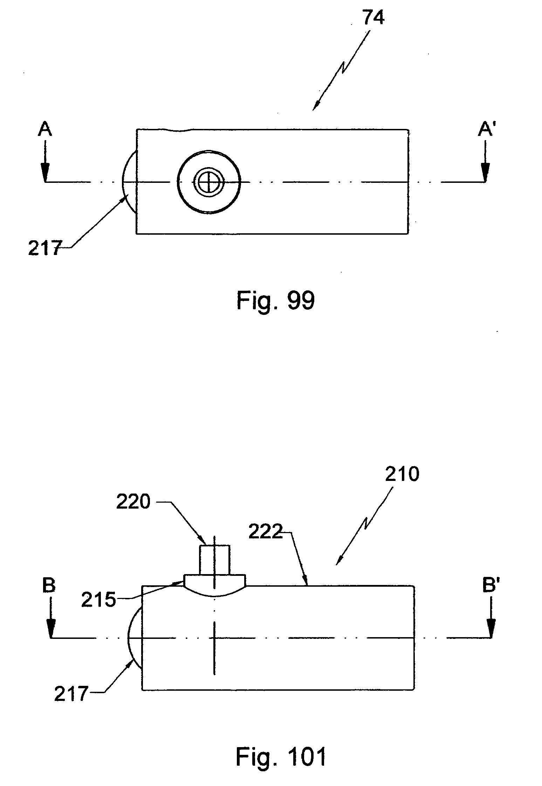

In another equivalent implementation shown in Figures 70 to 74, see Figures 95 to 98, the tilting terminal (215) is equipped with two breaking screws (226), instead of one with two drilled holes (213) instead of one in the side surface (222) of the tilting mounting (215). Figures 99 to 102 shows this implementation before the breaking screws (226) are placed inside through the drilled holes (213).

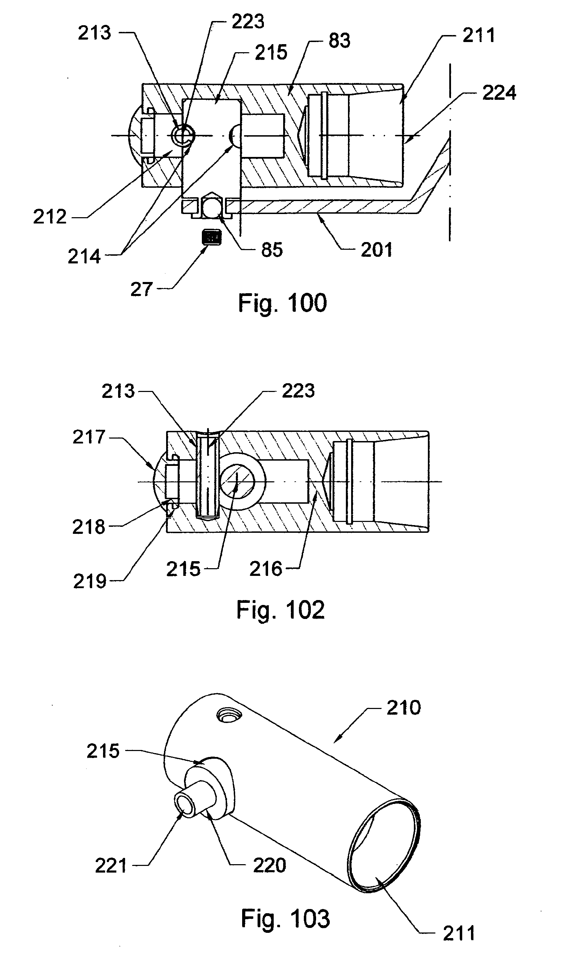

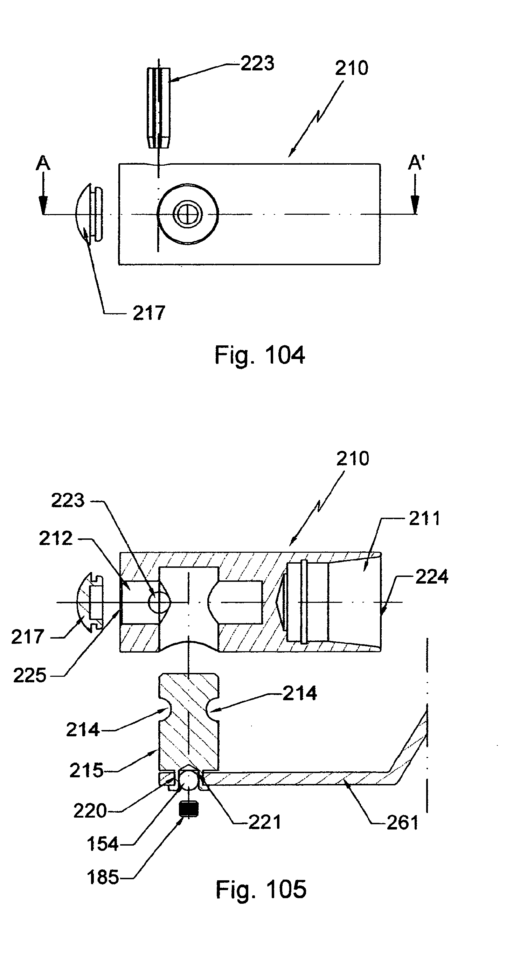

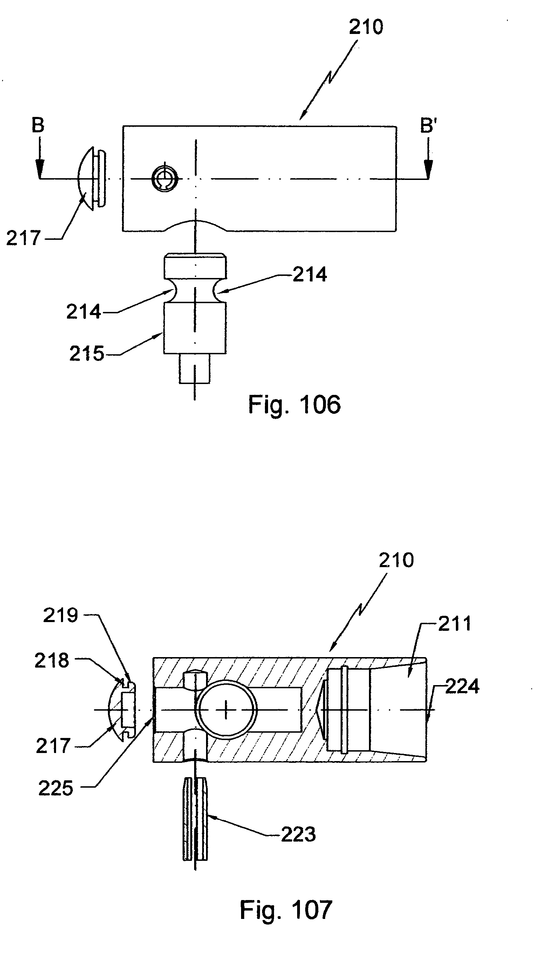

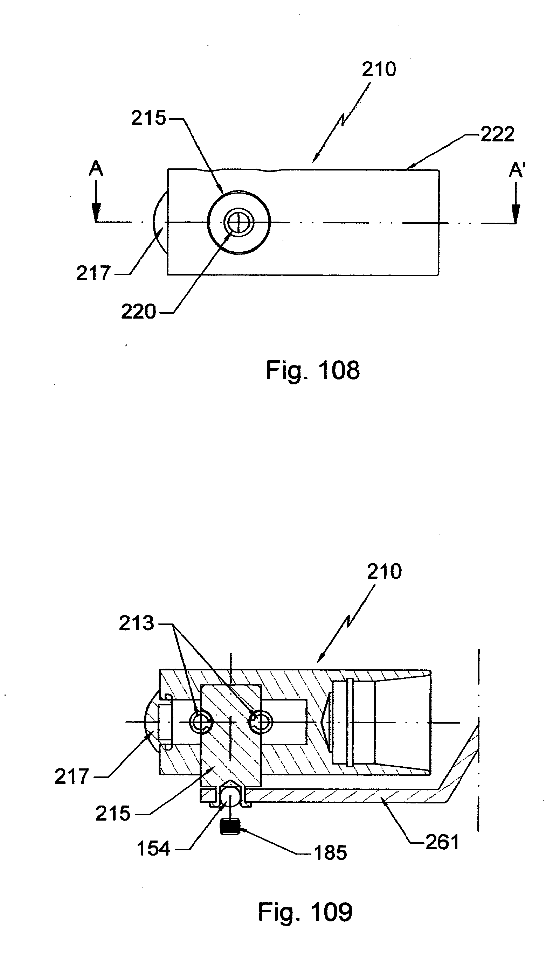

In another improvement of this invention as shown in Figures 103 to 106, a tilting terminal has been designed (227) which has a cylindrical section (228) extending to a toothed section (229), crossing both through a drilled holes (231), whereas the hole (212) has a tilting mounting (215) through the drilled hole (213) fixed longitudinally by the breaking screw (226) which passes through the rebate (78). The tilting terminal (256) may turn with regard to the plate (256) using its stud (220) which crosses (256), protecting this stud (220) against possible tampering using the ball (154) or cap (265). Figures 107 to 110 show this implementation before the breaking screw is placed' inside (226).

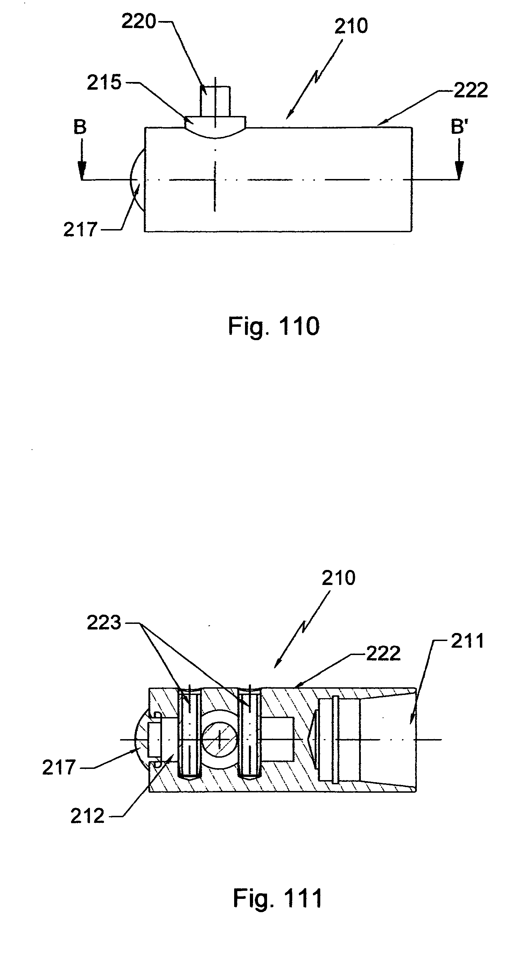

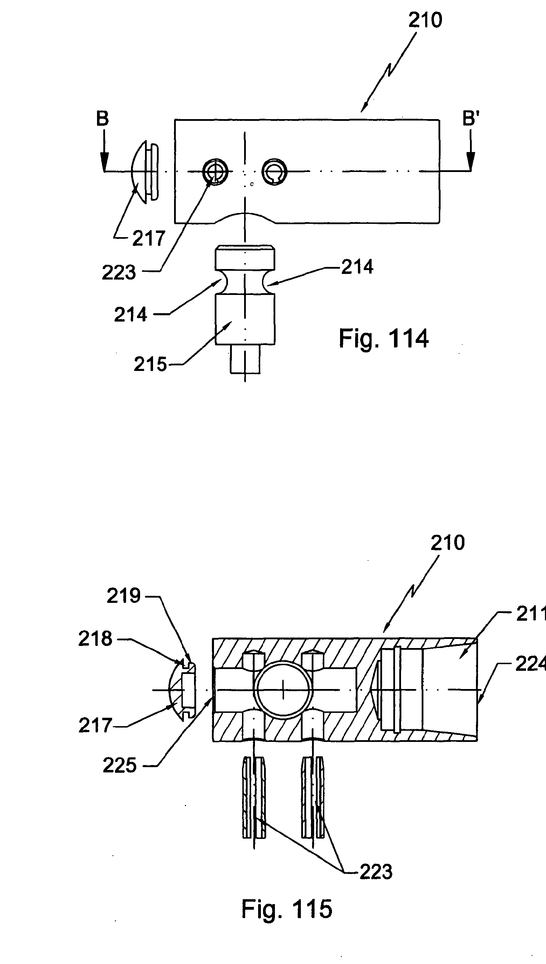

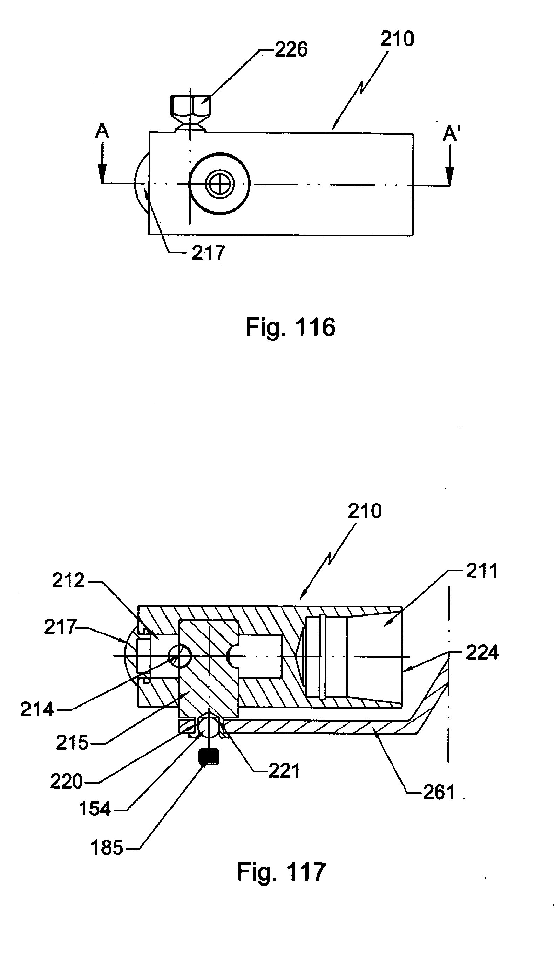

In another equivalent implementation shown inFigures 103 to 106, and as seen in Figures 111 to 1114, the tilting terminal (227) has, in its hole (212), two breaking screws (226) which immobilises the tilting mounting (215) by the slots (214). Figures 115 to 118 show this implementation before the breaking screws (226) are placed through the drilled holes (213) on the tilting terminal (227).

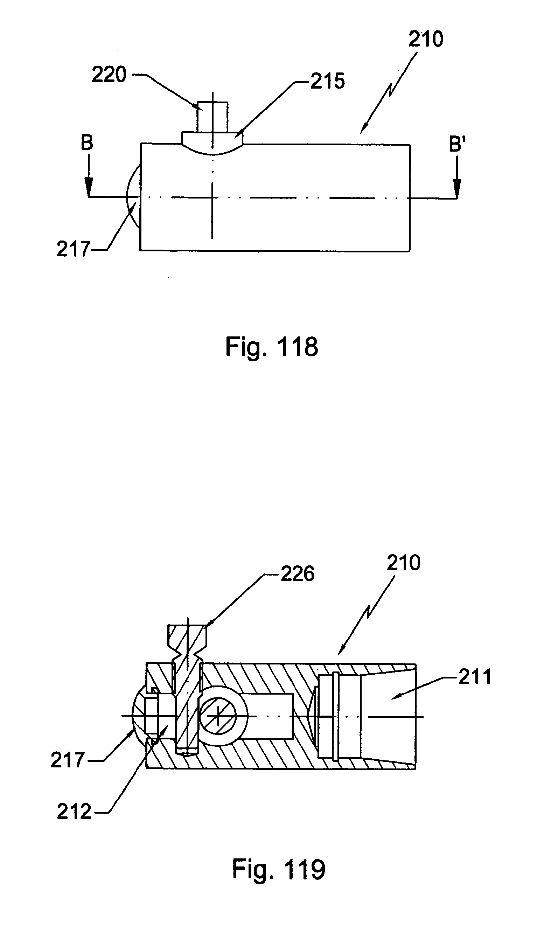

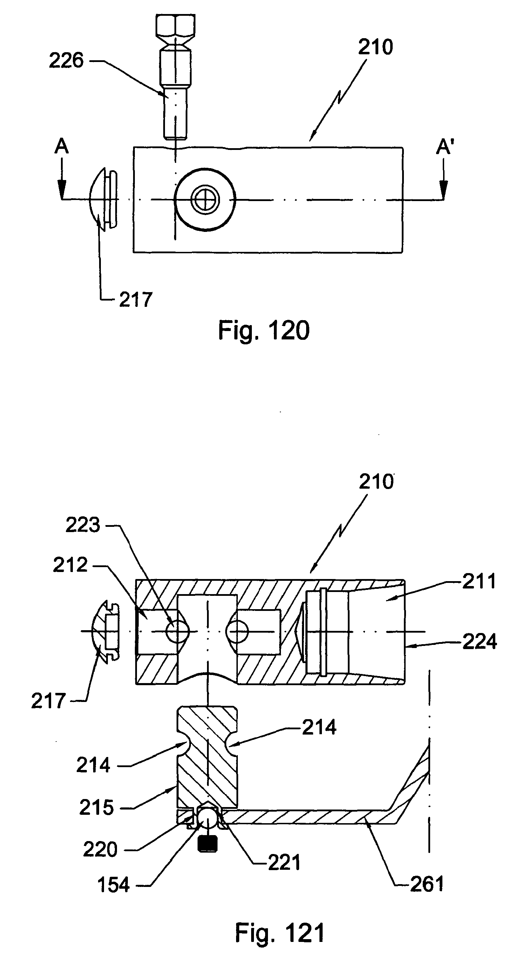

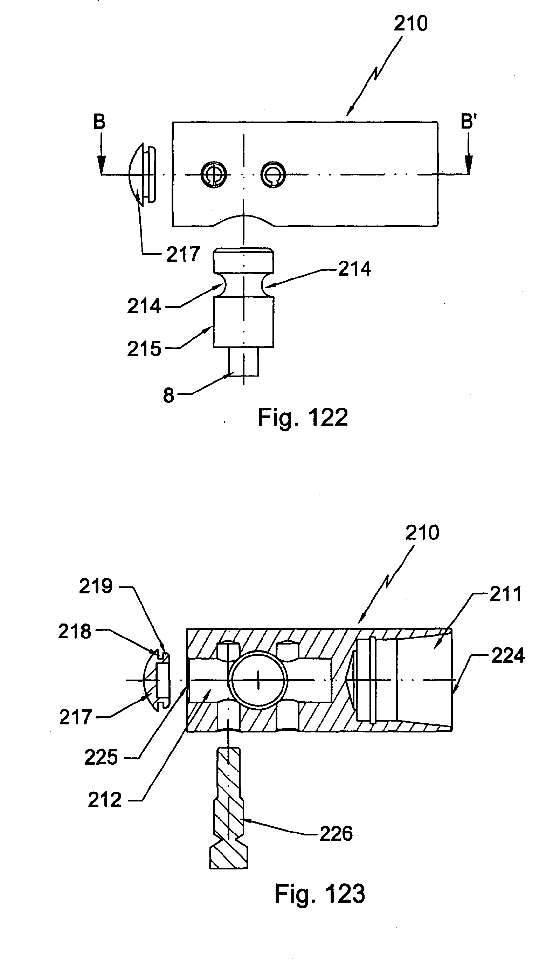

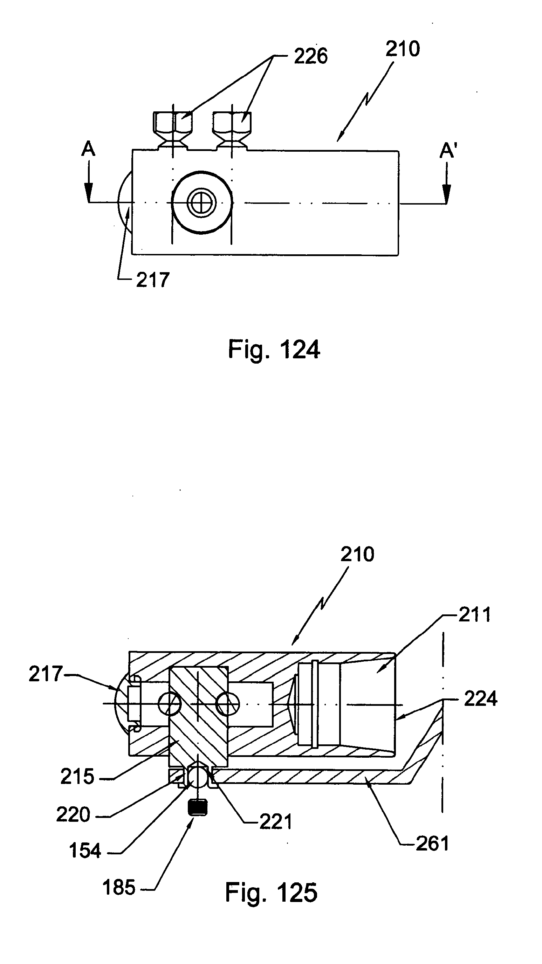

In another equivalent implementation shown in Figures 103 to 106, and as seen in Figures 119 to 122, the tilting terminal (91) has, in its hole (212), an elastic pin (233) through the drilled hole (232) which immobilises the tilting mounting (215) by the rebates (214). Figures 123 to 126 show this implementation before the elastic pin (233) is placed inside the drilled hole (232).

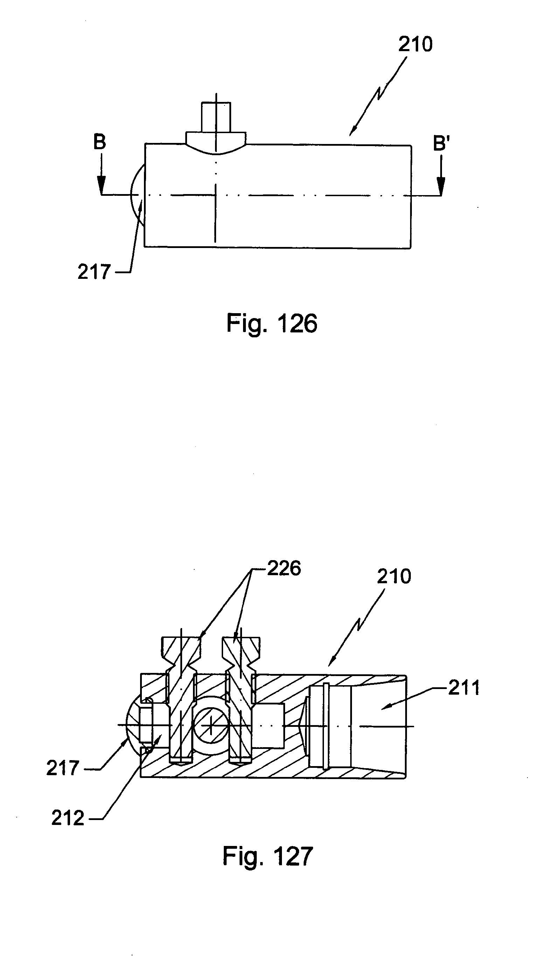

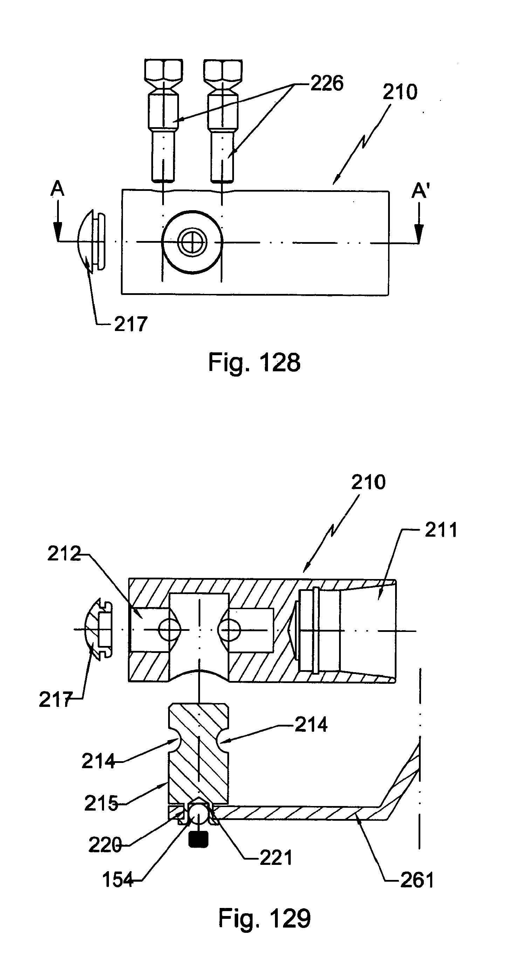

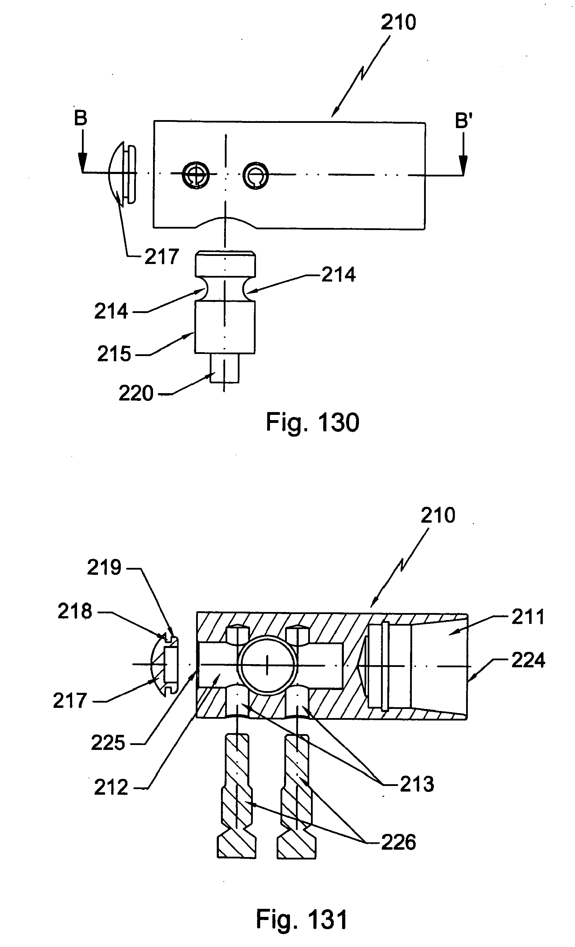

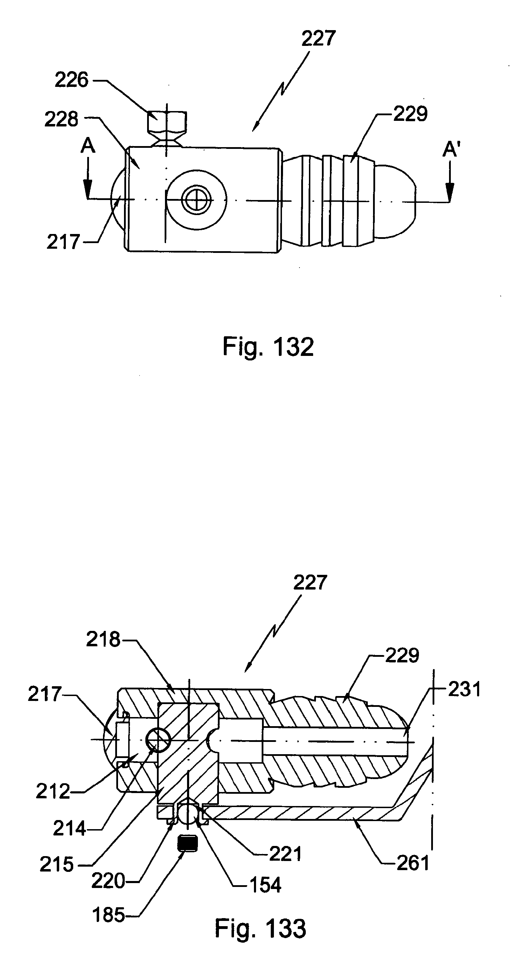

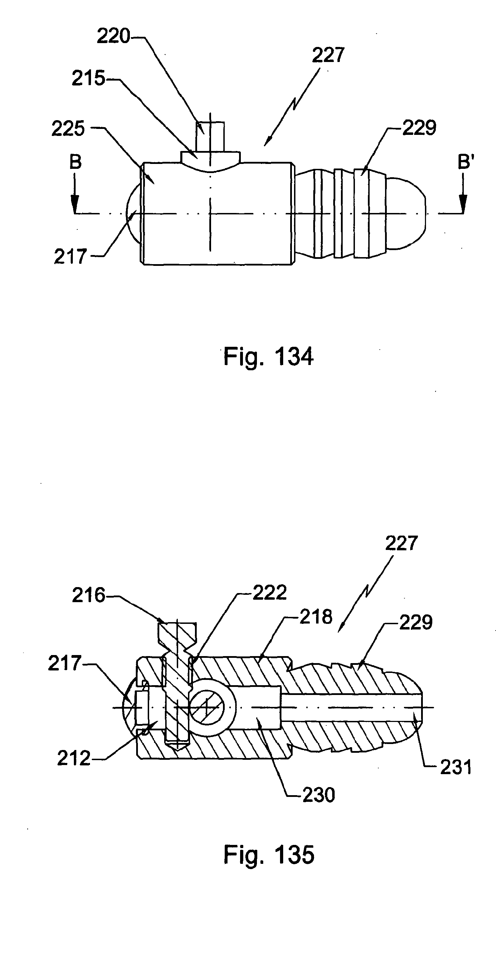

In another equivalent implementation shown in Figures 103 to 106, and as seen in Figures 127 to 130, the tilting terminal (227) has, in its hole (212), two elastic pins (233) through the drilled holes (232) which immobilises the tilting mounting (215) by the slots (214). Figures 131 to 134 show this implementation before the elastic pins (233) are placed through the drilled holes (232) on the tilting terminal (227).

In all implementations of the sleeve (227), the same main parts are used such as the tilting mounting (215), the cap (217), the ball (154) or the cap (265) with only the retaining parts varying such as the breaking screws (226) or an elastic pin (233), with the number of (226) or (233) varying which may be included in the tilting terminal (227).

Having sufficiently described this invention using the Figures attached, it is easy to understand that any changes judged to be suitable may be made, whenever these changes do not alter of the essence of the invention summarised in the following claims.

## Claims

1. - "DEVICE TO IMMOBILISE VEHICLES TO A MOVING POINT OR OTHER FIXED POINTS" which use linked chains equipped with terminals with their corresponding locks on one of their ends, to join a fixed part on the vehicle with a moving point on the same using the aforementioned chain and a mounting pivot on one of the moving parts on the vehicle to prevent the vehicle from being stolen **characterized by** the fact that the device (10) is equipped with two or more chains (11-31-131-134) the ends of which, the chain end (11), immobilizes a fixed point on the vehicle such as a handle bar (41-75), equipped with suitable counterweights (22-57), whereas the second chain (31) immobilizes the fixed part of the vehicle with a point outside the same such as a fixed post or similar (39).

2. - "DEVICE TO IMMOBILISE VEHICLES TO A MOVING POINT OR OTHER FIXED POINTS" according to the claim 1 **characterized by** the fact that alternatively the device (10) includes, in the mounting pivot.(23) the ring (25) including (10) a chain (131) with which the handle bar (41 - 75) is immobilised to a second fixed point (132) external to the scooter.

3. - "DEVICE TO IMMOBILISE VEHICLES TO A MOVING POINT OR OTHER FIXED POINTS" according to the claims 1 and 2 **characterized by** the fact that the support mounting (35) and in one of the device's variants (10) metal strip (135) is held (35) using the metal strip (136) which (136) penetrates one of the links (137) in the chain (135) and is attached to the same using the pin (138) and the cover (141).

4. - "DEVICE TO IMMOBILISE VEHICLES TO A MOVING POINT OR OTHER FIXED POINTS" according to the claim 1 in which the device (10) included a plate (17) supporting the chains (11-31), attaching the plate (17) to a point or fixed section of the vehicle using a sheet (21) and legs (18), the ends of which finish in tabs (19), with a drilled hole (20) to pass through the screws screwed into the vehicle's structure.

5. - "DEVICE TO IMMOBILISE VEHICLES TO A MOVING POINT OR OTHER FIXED POINTS" according to the claim 1 **characterized by** the fact that the plate (17) has terminals mounted on its ends (13-24), whereas the terminal (13) has a pivot mounting (15) using screws (16).

6. - "DEVICE TO IMMOBILISE VEHICLES TO A MOVING POINT OR OTHER FIXED POINTS" according to the claims 1 and 3 **characterized by** the fact that the support ends (17) are welded to the mounting support (35) and on this mounting support (35) there is the terminal (24) and the pivot mounting (30).

7. - "DEVICE TO IMMOBILISE VEHICLES TO A MOVING POINT OR OTHER FIXED POINTS" according to the claims 1 and 3 **characterized by** the fact that the pivot mounting (84) the terminal (24) is immobilised using the screw (28).

8. - "DEVICE TO IMMOBILISE VEHICLES TO A MOVING POINT OR OTHER FIXED POINTS" according to the claims 1 and 4 **characterized by** the fact that the pivot mounting (84) is formed by the head (26) and the stud (27).

9. - "DEVICE TO IMMOBILISE VEHICLES TO A MOVING POINT OR OTHER FIXED POINTS" according to the claim 1 **characterized by** the fact that the chain (31) is jointed and turns with regard to the support or plate (17), with (17) a "U" shaped extension (35) with arms of unequal length the shorter arm of which extends outwards according to the tab (85) which is equipped with a pivot mounting (30).

10. - "DEVICE TO IMMOBILISE VEHICLES TO A MOVING POINT OR OTHER FIXED POINTS" according to the claims 1 and 6 **characterized by** the fact that the pivot mounting (84) has a ring (25) in the form of a ring bolt with circular lips (37), immobilising inside this ring bolt (25) the cap (38), the lips of which (36) butt up against the lips (37) of the ring bolt (25), surrounding this cap (38) the chain (11), immobilising (38) inside (25) by the pressure of the head (26) on the stud (27).

11. - "DEVICE TO IMMOBILISE VEHICLES TO A MOVING POINT OR OTHER FIXED POINTS" according to the claims 1 and 8 in which alternatively the ring bolt (25) with the head (26) of the stud (27) both forming the mounting pivot (84) immobilised to an elbowed plate (83).

12. - "DEVICE TO IMMOBILISE VEHICLES TO A MOVING POINT OR OTHER FIXED POINTS" according to the claims 1 and 7 **characterized by** the fact that the chain (31) has, on one of its ends pressing against the sleeve (29) in which the shaft is immobilised (30), whereas on the other end a ring is immobilised (32) by the head (33) and the sliding point (34).

13. - "DEVICE TO IMMOBILISE VEHICLES TO A MOVING POINT OR OTHER FIXED POINTS" according to the claim 1 **characterized by** the fact that the head (12) with a lock (14) is immobilized or the mounting pivot (23) for the counterweight (22), or the mounting pivot (15) of the terminal (13).

14. - "DEVICE TO IMMOBILISE VEHICLES TO A MOVING POINT OR OTHER FIXED POINTS" according to the claim 1 **characterized by** the fact that the counterweight (22) include the bases (47-48), the base (47) is slightly cylindrical with the upper base of (47) having a rebate (49), and the base lower having a circular rebate (122), which is housed in the circular rebate (123), whereas the base (48) has, in its lower base, a cylindrical hole (124) and the upper base (44) a cylindrical hole, the bases (47-48) and the washers (40) have a central drilled hole (46) to allow the screws (43) to pass through.

15. - "DEVICE TO IMMOBILISE VEHICLES TO A MOVING POINT OR OTHER FIXED POINTS" according to the claims 1 and 12 **characterized by** the fact that the counterweight (22) is included in and immobilised by the end of the handle bar (41), which has a threaded drilled hole (45), into which a screw (43) of the stud (53) enters and is screwed in, the rod of which (54) crosses the pivot (42) and the drilled holes (46) in the washers (40), housing the skirting (74) of the hook pivot (42) and its hole (50) in the rebate (49) of the base (47).

16. - "DEVICE TO IMMOBILISE VEHICLES TO A MOVING POINT OR OTHER FIXED POINTS" according to the claim 1, 12 and 13 **characterized by** the fact that alternatively the counterweight (57) is included in and immobilised by the end of the handle bar (75), with cylindrical rubber pipes inside (61-63) to the right and left of a protrusion (78) and a pivot (65), the conical area of which (80) and conical end part (81) is housed inside the pipe (61) and is lodged inside the pivot's body (65) inside the counterweight (57), butting up against the protrusion (71).

17. - "DEVICE TO IMMOBILISE VEHICLES TO A MOVING POINT OR OTHER FIXED POINTS" according to the claim 1 **characterized by** the fact that the counterweight (57) is formed by washers (58) the central section of which has a central hole (82), on the end of the counterweight (57) are included in the bases (59-60) respectively, the configuration of these bases have washers (58), is the slightly cylindrical (59) with its upper base having a smaller cylindrical hole (72) extending to opposing base in another cylindrical hole with a smaller diameter (124), the opposing base has a ring rebate (125) which emerges in the cylindrical hole (126) a central hole (82), whereas the base (60) has, on its lower base, a cylindrical hole (127) which extends to the opposing base into another cylindrical hole (128) with a smaller diameter and this into another cylindrical hole (129).

18. - "DEVICE TO IMMOBILISE VEHICLES TO A MOVING POINT OR OTHER FIXED POINTS" according to the claim 1 **characterized by** the fact that when the device (10) is equipped with one single chain, moving point on the vehicle such as a handle bar (90) is immobilised to a fixed point on the said vehicle, using a coupling pipe (88), one of the ends of this is axially deformed inwards, immobilized on a mounting pivot (89) and this on one of the ends of the said handle bar (90), sealing the ends of (90) by a cap (96), the cylindrical section of which (102) fits inside the coupling pipe (88).

19. - "DEVICE TO IMMOBILISE VEHICLES TO A MOVING POINT OR OTHER FIXED POINTS" according to the claims 1 and 16 **characterized by** the fact that the coupling pipe (88) has a cylindrical shape with a ridge (98) on it with a cylindrical configuration with a ridge (98) in its middle section and inside it have a drilled hole, whereas its side surface has a drilled hole (100).

20. - "DEVICE TO IMMOBILISE VEHICLES TO A MOVING POINT OR OTHER FIXED POINTS" according to the claim 1 **characterized by** the fact that when the device (10) is equipped with a single chain, a moving point on the vehicle, such as a handle bar (93) is immobilised to a fixed point on the said vehicle using a sleeve (91) and a retaining washer (94-95), which is housed in the rebate (110) of the pivot mounting (92) and in the cylindrical area (106) of the said sleeve (91) sealing the ends of (93) with a cap (96), the cylindrical section of which (102) fits inside the sleeve (91).

21. - "DEVICE TO IMMOBILISE VEHICLES TO A MOVING POINT OR OTHER FIXED POINTS" according to the claims 1 and 18 **characterized by** the fact that the sleeve (91) has on its outside a slightly cylindrical shape, whereas in inside has been machined so that it has a first cylindrical area (103) which extending to a second conical area (104), which extending to a third cylindrical area (105), which in turn extends to a fourth smaller cylindrical area (106), which extends to a fifth conical area (107) and finally the latter area in a cylindrical area (108).

22. - "DEVICE TO IMMOBILISE VEHICLES TO A MOVING POINT OR OTHER FIXED POINTS" according to the claims 1 and 19 **characterized by** the fact that the sleeve (91) has a drilled hole (109) on its side which houses the tilting mounting (97) to which is immobilised the corresponding chain.

23. - "DEVICE TO IMMOBILISE VEHICLES TO A MOVING POINT OR OTHER FIXED POINTS" according to the claims 1 and 18 **characterized by** the fact that the retaining washer (94-95) are open pressure type washers the ends of which once located (94-95) in the rebate (110) of the pivot mounting (92) expand outwards.

24. - "DEVICE TO IMMOBILISE VEHICLES TO A MOVING POINT OR OTHER FIXED POINTS" using chain links fitted with terminals with their corresponding lock on one of its end to join a fixed point on the vehicle to a moving point on the same using the said chain and a mounting pivot on one of the vehicle's moving parts to prevent the vehicle from being stolen the device having two or more chains, the ends of one of the chains immobilizing a fixed point on the vehicle with a moving point, such as a handle bar, equipped with counterweights whereas the second chain immobilizes the fixed part of the vehicle with a fixed point outside the vehicle such as a post or similar **characterized by** the fact that the mounting (165) has a hole (168) inside a slightly prismatic body with an opening (188), another hole (172) with an opening (189), set at (168-172) 90°, the first hole (168) receives the mounting pivot (162) through the opening (188), and the second hole (172) receives through its opening (189) the end of a conventional chain.

25. - "DEVICE TO IMMOBILISE VEHICLES TO A MOVING POINT OR OTHER FIXED POINTS" according to the claim 1 **characterized by** the fact that the mounting pivot (162) has a slightly cylindrical body with a side surface which has been machined according to a first section, which is formed by the cylindrical header (169) which extending to a second also cylindrical section with a slot (173), which extending to a cylindrical protrusion (174), with this in a cylindrical part (175), which extends to a cylindrical area (176), which extends to a protruding cylindrical area (177), which extends to a cylindrical area (178) which extends to a conical area (179), which extends to a cylindrical area (180) and into a conical area (181) which ends at the base (163) of the pivot (162).

26. - "DEVICE TO IMMOBILISE VEHICLES TO A MOVING POINT OR OTHER FIXED POINTS" according to the claim 24 **characterized by** the fact that the pivot mounting (162) has a drilled hole (182), which allows it to be mounted on the handle bar (255), whereas the other end the header (169) of pivot (162) is housed in the hole (168) of the mounting (165).

27. - "DEVICE TO IMMOBILISE VEHICLES TO A MOVING POINT OR OTHER FIXED POINTS" according to the claim 24 **characterized by** the fact that the pivot mounting (162) and because of its special machining on section (175) receives the expansion spring (167), the body of which is an open washer passing through the spring (167) being closed when it passes through the conical section (251) and the cylindrical area in the drilled hole (183) of the plate (166).

28. - "DEVICE TO IMMOBILISE VEHICLES TO A MOVING POINT OR OTHER FIXED POINTS" according to the claim 24 **characterized by** the fact that the plate (166) is a slightly prismatic body with drilled holes (183) and (184) in its larger bases, (183) for the mounting pivot to pass through (162) and (184) to mount the chain (171).

29. - "DEVICE TO IMMOBILISE VEHICLES TO A MOVING POINT OR OTHER FIXED POINTS" according to the claims 24 and 28 **characterized by** the fact that the plate (166) is jointed on the mounting pivot (162) through the drilled hole (183).

30. - "DEVICE TO IMMOBILISE VEHICLES TO A MOVING POINT OR OTHER FIXED POINTS" according to the claim 24 **characterized by** the fact that alternatively the plate (166) may receive a terminal (186) through its hole (184), the said terminal (186) holding the end of the linked chain (246).

31. - "DEVICE TO IMMOBILISE VEHICLES TO A MOVING POINT OR OTHER FIXED POINTS" according to the claim 24 **characterized by** the fact that alternatively the terminal (186) the configuration of which has a first cylindrical area (241) extending to wings (201) with drilled holes (203) and a hole (205), into which a breaking screw may be screwed, immobilizing the terminal (186) to the plate (166) or (204).

32. - "DEVICE TO IMMOBILISE VEHICLES TO A MOVING POINT OR OTHER FIXED POINTS" **characterized by** the fact that the sleeve (147) includes a mounting (150) tilting on a hole (192), through the hole (156) protected by the anti-saw sleeve (157), and a mounting (148) via the opening (159), which is held in the hole (155) by an Allen stay bolt (151), crossing said stay bolt (151) the hole (160) the head of which is protected against misuse by a ball (154), the mounting stay bolt (151) immobilises the header (149) of (148) by being housed in the rebate (234) of (148).

33. - "DEVICE TO IMMOBILISE VEHICLES TO A MOVING POINT OR OTHER FIXED POINTS" according to the claim 8 **characterized by** the fact that in another equivalent implementation of the sleeve (147) two Allen studs are used (151) instead of one attached in an opposing vertical position by the holes (160), in the said sleeve (147).

34. - "DEVICE TO IMMOBILISE VEHICLES TO A MOVING POINT OR OTHER FIXED POINTS" according to the claim 32 **characterized by** the fact that in another equivalent implementation of the sleeve (147) uses a ribbed steel pin (242), attached in the hole (155) through the hole (235) to attach the mounting (148), in its rebate (234), inside the hole (155) in the sleeve (147).

35. - "DEVICE TO IMMOBILISE VEHICLES TO A MOVING POINT OR OTHER FIXED POINTS" according to the claim 32 **characterized by** the fact that in another equivalent implementation of the sleeve (147) uses tow ribbed steel pins (242), attached to the hole (155) through the holes (99), vertically and in opposing positions, to attach the mounting (148), in its rebate (234), inside the said hole (155) in the sleeve (147).

36. - "DEVICE TO IMMOBILISE VEHICLES TO A MOVING POINT OR OTHER FIXED POINTS" according to the claim 8 **characterized by** the fact that in another equivalent implementation of the sleeve (147) uses an elastic pin (243), attached in the hole (156) by the hole (100), in the sleeve's body (147) to mount the mounting (148), in its rebate (234).

37. - "DEVICE TO IMMOBILISE VEHICLES TO A MOVING POINT OR OTHER FIXED POINTS" according to the claim 32 **characterized by** the fact that in another equivalent implementation of the sleeve (147) uses two elastic pins (243), attached in the hole (155) by the holes (236), in the sleeve's body (147) to mount the mounting (148), in its rebate (234).

38. - "DEVICE TO IMMOBILISE VEHICLES TO A MOVING POINT OR OTHER FIXED POINTS" according to the claim 32 **characterized by** the fact that in another equivalent implementation of the sleeve (147) uses a breaking screw (244), attached in the hole (155) by the hole (236), in the sleeve's body (147) to mount the mounting (148), in its rebate (234).

39. - "DEVICE TO IMMOBILISE VEHICLES TO A MOVING POINT OR OTHER FIXED POINTS" according to the claim 32 **characterized by** the fact that in another equivalent implementation of the sleeve (147) uses two breaking screws (244), attached in the hole (155) by the holes (236), to mount the mounting (148), in its rebate (234), in an opposing vertical position.

40. - "DEVICE TO IMMOBILISE VEHICLES TO A MOVING POINT OR OTHER FIXED POINTS" according to the claim 24 **characterized by** the fact that the mounting (148) is immobilised to a mounting pivot (267), using a sleeve (194) the cylindrical section of which (195) has two holes (193) in which two studs are housed (192), in an opposing vertical position surrounding the sleeve (194) using the ring bolt (266) the ends of which have lips (264), the studs (192) immobilise the mounting (148) by penetrating the rebate (234), whereas the ring bolt (266) may turn with regard to the plate (269), because of the mounting (267) housed in the conical section (237), protected (267) against acts of vandalism by the anti-saw sleeve (190).

41. - "DEVICE TO IMMOBILISE VEHICLES TO A MOVING POINT OR OTHER FIXED POINTS" according to the claim 24 **characterized by** the fact that the mounting (148) is held to a mounting pivot (267), by the sleeve (194) the cylindrical section of which (195) has two holes (193) housing two breaking screws (244), in opposing positions and aligned vertically, surrounding the mounting (148) by a ring bolt (266) the ends of which have lips (264), the breaking screws (244) immobilise the mounting (148) by penetrating the rebate (234), in turn the ring bolt (266) may turn with regard to the plate (269), because of the mounting (267) housed in the conical section (237), protected (267) against acts of vandalism by the anti-saw sleeve (190).

42. - "DEVICE TO IMMOBILISE VEHICLES TO A MOVING POINT OR OTHER FIXED POINTS" according to the claim 24 **characterized by** the fact that the mounting (148) is held to a mounting pivot (267), by the sleeve (58) the cylindrical section of which (195) has two holes (193) housing two Allen studs (151), in opposing positions and aligned vertically, surrounding the sleeve (194) by a ring bolt (266) the ends of which have lips (264), the Allen studs (151) immobilise the mounting (148) by penetrating the rebate (234), in turn the ring bolt (266) may turn with regard to the plate (269), because of the mounting (267) housed in the conical section (237), protected (267) against acts of vandalism by the anti-saw sleeve (190).

43. - "DEVICE TO IMMOBILISE VEHICLES TO A MOVING POINT OR OTHER FIXED POINTS" according to the claim 24 **characterized by** the fact that the mounting (148) is held to a mounting pivot (267), by the sleeve (194) the cylindrical section of which (195) has two holes (193) in which one of them is housed, an Allen stud (151), surrounding the sleeve (194) using the ring (266) on the ends of which there are lips (264), the Allen studs (151) immobilise the mounting (148) by penetrating the rebate (234), in turn the ring bolt (266) may turn with regard to the plate (269), because of the mounting (267) housed in the conical section (237), protected (267) against acts of vandalism by the anti-saw sleeve (190).

44. - "DEVICE TO IMMOBILISE VEHICLES TO A MOVING POINT OR OTHER FIXED POINTS" **characterized by** the fact that the tilting mounting (277) which is located held to the tab (261), on the plate (269), has configuration formed by the first cylindrical section (238) which extends to the toothed section (239), crossing both longitudinally via the drilled hole (240), the cylindrical section (102) has two wings (65) crossed by the breaking screw (278) which crosses the tab (261) by the relevant hole, the toothed section (239) may be jointed or a cable or chain, being immobilised in the drilled hole (240).

45. - "DEVICE TO IMMOBILISE VEHICLES TO A MOVING POINT OR OTHER FIXED POINTS" **characterized by** the fact that the chain (259) may be jointed with regard to the plate (256) using the mounting (215), with a tilting terminal (210), which has an external cylindrical configuration the side surface of which (222) emerges from this mounting (215) the stud of which (220) crosses the plate (256) and receives the ball (154) to prevent any form of tampering. The tilting terminal (210) has two holes inside (211-212), in the hole (211) and the opening (224) holds the chain (259) or similar input, whereas the hole (212) in the opening (225) holds the aforementioned mounting (215) machined on the side surface with rebates (214) which hold the elastic pin (223), closing the hole (212) using the cap (217) which has a circular skirting (218) extending radially outwards (219).

46. - "DEVICE TO IMMOBILISE VEHICLES TO A MOVING POINT OR OTHER FIXED POINTS" according to the claim 44 **characterized by** the fact that the tilting mounting (215) is equipped with two elastic pins (223) with two drilled holes (213) instead of one in the side surface (222).
